# EUROPEAN PATENT SPECIFICATION

(11) **EP 4 502 794 B1**
(45) Date of publication and mention of the grant of the patent: **09.12.2026**
(21) Application number: 23864555.0
(22) Date of filing: 22.08.2023
(51) Int. Cl.: G06F 9/451, G06F 3/0481, G06F 3/0485, G06F 3/04817, G06F 3/0482, G06F 3/0488, G06F 3/04883, G06F 3/04886, G09G 5/14, G09G 5/377, G06F 3/04842

(54) **INFORMATION DISPLAY METHOD, ELECTRONIC DEVICE, AND STORAGE MEDIUM**
INFORMATIONSANZEIGEVERFAHREN, ELEKTRONISCHE VORRICHTUNG UND SPEICHERMEDIUM
PROCÉDÉ D'AFFICHAGE D'INFORMATIONS, DISPOSITIF ÉLECTRONIQUE ET SUPPORT DE STOCKAGE

(30) Priority: 13.09.2022 CN 202211112308
(43) Date of publication of application: 05.02.2025
(73) Proprietor: Honor Device Co., Ltd., Shenzhen, Guangdong 518040 (CN)
(72) Inventor: XU, Duo, Shenzhen, Guangdong 518040 (CN); HUANG, Liwei, Shenzhen, Guangdong 518040 (CN)
(74) Representative: Gill Jennings & Every LLP
(86) International application number: PCT/CN2023/114312
(87) International publication number: WO 2024/055822

(56) References cited:
- CN-A- 111 580 906
- CN-A- 113 722 027
- CN-A- 113 805 765
- CN-A- 113 824 842
- CN-A- 115 016 867
- US-A1- 2017 083 590

## Description

This application claims priority to Chinese Patent Application No. 202211112308.6, filed with the China National Intellectual Property Administration on September 13, 2022 and entitled "INFORMATION DISPLAY METHOD, ELECTRONIC DEVICE, AND STORAGE MEDIUM".

### TECHNICAL FIELD

This application relates to the field of electronic devices, and in particular, to an information display method, an electronic device, and a storage medium.

### BACKGROUND

Currently, with development of electronic technologies, an electronic device like a mobile phone may present notification information (or referred to as reminder information or push information) to a user in a form of a card on a display interface. The notification information may be notification information of an application to which the user gives a notification right by setting the electronic device, for example, an SMS message, travel information, ride code information, and the like. When a plurality of pieces of notification information need to be presented in the form of a card (or referred to as a widget, a widget, a component, an assembly, or the like), the electronic device displays different cards in different scenarios based on importance degrees (or priorities) of the notification information in the different scenarios. In a specific scenario, if the user further needs to view other required notification information, the user needs to find the required notification information through tedious operations. It can be learned that, the existing card display manner has low human-computer interaction efficiency, and use experience of the user is not good. CN 113 722 027 A discloses a method for displaying a notification message. CN 111 580 906 A discloses an interface display method. CN 113 805 765 A discloses a card display method.

### SUMMARY

Embodiments of this application provide an information display method, an electronic device, and a storage medium, to improve human-computer interaction efficiency of displaying notification information by an electronic device, and improve use experience of a user. The electronic device is a mobile phone.

To achieve the foregoing objectives, the following technical solutions are used in embodiments of this application.

According to a first aspect, this application provides an information display method, applied to an electronic device, and the method includes The electronic device displays a first desktop, where a first basic card is displayed in a first sub-area of a target area of the first desktop, a second basic card is displayed in a second sub-area of the target area, content of a system application is displayed in the first basic card, and content of a second system application is displayed in the second basic card; when the first basic card and the second basic card are displayed in the target area, the electronic device displays a first card in the target area if the electronic device newly generates the first card, where the first card is used to display first notification information; and when the first basic card and the second basic card are displayed in the target area, if the electronic device newly generates a third card and a fourth card, and the third card and the fourth card are in a parallel association or a subordinate association, the electronic device displays the third card and the fourth card in the target area, where the third card is used to display third notification information, the fourth card is used to display fourth notification information, the parallel association means that priorities are the same, and the subordinate association means that there is an association between the displayed notification information. At least one of the third card and the fourth card is an interactive card.

According to the technical solution provided in the foregoing embodiment, in addition to separately displaying a single card in the target area, the electronic device may simultaneously display two cards that are in a parallel association or a subordinate association in the target area when two cards are generated, so that a user can view more required notification information in time. This reduces user operations, enhances human-computer interaction efficiency, and improves use experience of the user.

In a possible design of the first aspect, after the electronic device displays the first card in the target area if the electronic device newly generates the first card, the method further includes: When the first card is displayed in the target area, if the electronic device newly generates a second card, and the second card and the first card are in a parallel association or a subordinate association, the electronic device displays the second card in the first sub-area of the target area, and displays the first card in the second sub-area of the target area, where the second card is used to display second notification information.

In this way, when newly generating a card associated with an existing card, the electronic device can display the newly generated card in time, so that the user can see new notification information complying with a scenario in time, and use experience of the user is improved.

In a possible design of the first aspect, that the electronic device displays a first card in the target area includes: The electronic device overlays the first card on the first basic card and the second basic card, to form a first card stack, where the first card stack includes two layers, a bottom layer of the first card stack includes the first basic card and the second basic card, and a top layer of the first card stack includes the first card.

In a possible design of the first aspect, in the first card stack, the first basic card is in an area that is of the bottom layer and that corresponds to the first sub-area of the target area, the second basic card is in an area that is of the bottom layer and that corresponds to the second sub-area of the target area, and the first card is in an area that is of the top layer and that corresponds to the target area.

In a possible design of the first aspect, that the electronic device displays the second card in the first sub-area of the target area, and displays the first card in the second sub-area of the target area includes: The electronic device scales down the first card to be the same as to the second basic card, and enables the first card to be displayed in the second sub-area of the target area; scales up, based on a preset step in a process of scaling down the first card, a part that is of the second card and that is displayed in the first sub-area of the target area; and when the first card is scaled down to be the same as the second basic card, and the first card is displayed in the second sub-area of the target area, fully displays the second card in the first sub-area of the target area.

In this way, when the electronic device has a small screen, the first card that previously occupies the target area alone can be displayed in a scaled-down size, and the second card can be displayed in a vacant part of the target area, so that the user can simultaneously see the two associated cards. Further, because the existing first card is scaled down and displayed in the second sub-area of the target area, the new second card is placed in the first sub-area. In this way, when seeing the two associated cards, the user may learn of which card is first generated and which card is later generated, so that the user can choose a more suitable card to view first as needed. Certainly, the second sub-area herein may be a part of area that is determined by statistics and in which the user looks at the electronic device with a highest frequency.

In a possible design of the first aspect, when there is a target card stack including at least two cards in the target area, and there are two cards in a parallel association at a top layer of the target card stack, the method further includes: The electronic device obtains a first deletion event for a first to-be-deleted card at the top layer of the target card stack, where the first to-be-deleted card is one of the two cards that are at the top layer of the target card stack and that are in the parallel association; and if the electronic device responds to the first deletion event, no longer displays the first to-be-deleted card in the target area, and scales up a first to-be-independent card that is at the top layer of the target card stack and that is in a parallel association with the first to-be-deleted card, to enable the first to-be-independent card to be fully overlaid the top layer of the target card stack.

In this way, when one of the two cards in the parallel association is deleted, the other card can be scaled up in time, so that the user can more intuitively view notification information displayed on the undeleted card. In addition, more content can be displayed through scaling up, so that the user more accurately learns of displayed content of the undeleted card.

In a possible design of the first aspect, when there is a target card stack including at least two cards in the target area, and there are two cards in a subordinate association at a top layer of the target card stack, the method further includes: The electronic device obtains a second deletion event for a second to-be-deleted card at the top layer of the target card stack, where the second to-be-deleted card is one of the two cards that are at the top layer of the target card stack and that are in the subordinate association; and if the second to-be-deleted card is a primary card in the two cards that are at the top layer of the target card stack and that are in the subordinate association, in response to the second deletion event, the electronic device displays, in the target area, a next layer of the top layer of the target card stack, and no longer displays the two cards that are at the top layer of the target card stack and that are in the subordinate association.

According to the technical solution, because notification information displayed by the two cards in the subordinate association is closely related, when the primary card is deleted, there is a large probability that a secondary card is no longer needed. In this case, both cards need to be deleted, to leave corresponding space for display of another card. In this way, the user can view other notification information required by the user in time.

In a possible design of the first aspect, in the first card stack, the first basic card is in an area that is of the bottom layer and that corresponds to the first sub-area of the target area, the second basic card is in an area that is of the bottom layer and that corresponds to the second sub-area of the target area, and the first card is in an area that is of the top layer and that corresponds to the second sub-area of the target area.

In this way, when the electronic device has a large screen (for example, an unfolded state of a foldable mobile phone), the first card independently occupying one layer of the card stack can be given more sufficient display space, so that the user can see richer content, and use experience of the user can be improved.

In a possible design of the first aspect, that the electronic device displays the second card in the first sub-area of the target area, and displays the first card in the second sub-area of the target area includes: The electronic device scales up, based on a preset step, a part that is of the second card and that is overlaid on the first basic card, until the second card is fully displayed in the first sub-area of the target area.

In a possible design of the first aspect, when there is a target card stack including at least two cards in the target area, and there are two cards in a parallel association at a top layer of the target card stack, the method further includes: The electronic device obtains a third deletion event for a third to-be-deleted card at the top layer of the target card stack, where the third to-be-deleted card is one of the two cards that are at the top layer of the target card stack and that are in the parallel association; and the electronic device no longer displays the third to-be-deleted card in the target area in response to the third deletion event.

In a possible design of the first aspect, if the third to-be-deleted card is displayed in the first sub-area of the target area, when the electronic device no longer displays the third to-be-deleted card in the target area in response to the third deletion event, the method further includes: The electronic device moves a second to-be-independent card that is at the top layer of the target card stack and that is in a parallel association with the third to-be-deleted card to the second sub-area of the target area for display.

According to the technical solution, because it is possible that a card associated with the second to-be-independent card appears later, it is convenient for the user to learn of a card generation sequence. In this application, an older card in the associated cards may be displayed in the second sub-area of the target area. Therefore, herein, the second to-be-independent card that is not originally in the second sub-area is moved to the second sub-area, so that the user subsequently can learn that the second to-be-independent card is previously generated, and a specific basis can be provided for the user to view the card sequence.

In a possible design of the first aspect, if a next layer of the top layer of the target card stack includes two cards that are in a parallel association or a subordinate association, after moving the second to-be-independent card that is at the top layer of the target card stack and that is in the parallel association with the third to-be-deleted card to the second sub-area of the target area for display, the electronic device displays the first basic card in the first sub-area of the target area.

Because for the electronic device having a large screen, when the top layer of the target card stack is a card that is individually displayed, the first sub-area of the target area is empty or transparent. In this case, a card of a next layer of the top layer is revealed and displayed. If the next layer of the top layer is one of the two associated cards, the user is caused to think that the independently displayed card at the top layer is associated with the revealed and displayed card at the next layer, resulting in a misunderstanding of the user. This can be resolved according to the foregoing solution.

In a possible design of the first aspect, when there is a target card stack including at least two cards in the target area, and there are two cards in a subordinate association at a top layer of the target card stack, the method further includes: The electronic device obtains a fourth deletion event for a fourth to-be-deleted card at the top layer of the target card stack, where the fourth to-be-deleted card is one of the two cards that are at the top layer of the target card stack and that are in the subordinate association; and if the fourth to-be-deleted card is a primary card in the two cards that are at the top layer of the target card stack and that are in the subordinate association, in response to the fourth deletion event, the electronic device displays, in the target area, a next layer of the top layer of the target card stack, and no longer displays the two cards that are at the top layer of the target card stack and that are in the subordinate association.

According to a second aspect, this application provides an electronic device. The electronic device includes a display, a memory, and one or more processors. The display, the memory, and the processor are coupled. The memory stores computer program code, the computer program code includes computer instructions, and when the computer instructions are executed by the processors, the electronic device is enabled to perform the information display method according to the first aspect.

According to a third aspect, this application provides a computer-readable storage medium. The computer-readable storage medium includes computer instructions, and when the computer instructions are run on an electronic device, the electronic device is enabled to perform the information display method according to the first aspect.

### BRIEF DESCRIPTION OF DRAWINGS

FIG. 1 is a schematic diagram of a scenario in which an electronic device displays notification information according to the conventional technology;
FIG. 2 is a schematic diagram of a structure of an electronic device according to an embodiment of this application;
FIG. 3 is a schematic diagram of a software architecture of an electronic device according to an embodiment of this application;
FIG. 4 is a schematic diagram of a desktop of an electronic device according to an embodiment of this application;
FIG. 5 is a schematic diagram of a desktop of another electronic device according to an embodiment of this application;
FIG. 6 is a schematic diagram of a desktop of still another electronic device according to an embodiment of this application;
FIG. 7 is a schematic diagram of desktop division of an electronic device according to an embodiment of this application;
FIG. 8 is a schematic diagram of a card stack according to an embodiment of this application;
FIG. 9 is a schematic flowchart of an information display method according to an embodiment of this application;
FIG. 10A to FIG. 10D are a schematic diagram of a scenario in which an electronic device adds a card stack according to an embodiment of this application;
FIG. 11A to FIG. 11D are a schematic diagram of a scenario of restoring content of a first basic card according to an embodiment of this application;
FIG. 12A to FIG. 12D are a schematic diagram of a scenario for restoring content of a second basic card according to an embodiment of this application;
FIG. 13 is a schematic diagram 1 of a scenario of an information display method according to an embodiment of this application;
FIG. 14 a schematic diagram of a card stacking manner according to an embodiment of this application;
FIG. 15 is a schematic diagram 2 of a scenario of an information display method according to an embodiment of this application;
FIG. 16 is a schematic diagram 3 of a scenario of an information display method according to an embodiment of this application;
FIG. 17 is a schematic diagram 4 of a scenario of an information display method according to an embodiment of this application;
FIG. 18 is a schematic diagram of another card stacking manner according to an embodiment of this application;
FIG. 19 is a schematic diagram 5 of a scenario of an information display method according to an embodiment of this application;
FIG. 20 is a schematic diagram 6 of a scenario of an information display method according to an embodiment of this application;
FIG. 21 is a schematic diagram 7 of a scenario of an information display method according to an embodiment of this application;
FIG. 22 is a schematic diagram 8 of a scenario of an information display method according to an embodiment of this application;
FIG. 23 is a schematic diagram 9 of a scenario of an information display method according to an embodiment of this application;
FIG. 24 is a schematic diagram 10 of a scenario of an information display method according to an embodiment of this application;
FIG. 25 is a schematic diagram 11 of a scenario of an information display method according to an embodiment of this application;
FIG. 26 is a schematic diagram 12 of a scenario of an information display method according to an embodiment of this application;
FIG. 27 is a schematic diagram 13 of a scenario of an information display method according to an embodiment of this application;
FIG. 28 is a schematic diagram 14 of a scenario of an information display method according to an embodiment of this application;
FIG. 29 is a schematic diagram 15 of a scenario of an information display method according to an embodiment of this application;
FIG. 30 is a schematic diagram 1 of a scenario for inserting a newly generated card into a card stack according to an embodiment of this application;
FIG. 31 is a schematic diagram 2 of a scenario for inserting a newly generated card into a card stack according to an embodiment of this application;
FIG. 32 is a schematic diagram 3 of a scenario for inserting a newly generated card into a card stack according to an embodiment of this application;
FIG. 33 is a schematic diagram 4 of a scenario for inserting a newly generated card into a card stack according to an embodiment of this application;
FIG. 34 is a schematic diagram 5 of a scenario for inserting a newly generated card into a card stack according to an embodiment of this application;
FIG. 35 is a schematic diagram 6 of a scenario for inserting a newly generated card into a card stack according to an embodiment of this application;
FIG. 36A to FIG. 36D are a schematic diagram 1 of a scenario for switching a top-layer card in a card stack according to an embodiment of this application;
FIG. 37A to FIG. 37C are a schematic diagram 2 of a scenario for switching a top-layer card in a card stack according to an embodiment of this application;
FIG. 38 is a schematic diagram 1 of a card failure scenario according to an embodiment of this application;
FIG. 39A to FIG. 39C are a schematic diagram 2 of a card failure scenario according to an embodiment of this application;
FIG. 40A to FIG. 40C are a schematic diagram 3 of a card failure scenario according to an embodiment of this application;
FIG. 41A and FIG. 41B are a schematic diagram 4 of a card failure scenario according to an embodiment of this application;
FIG. 42A to FIG. 42D are a schematic diagram 5 of a card failure scenario according to an embodiment of this application;
FIG. 43 is a schematic diagram 6 of a card failure scenario according to an embodiment of this application;
FIG. 44 is a schematic diagram 7 of a card failure scenario according to an embodiment of this application;
FIG. 45 is a schematic diagram 8 of a card failure scenario according to an embodiment of this application;
FIG. 46A to FIG. 46C are a schematic diagram 1 of a scenario in which a user deletes a top-layer card in a card stack according to an embodiment of this application;
FIG. 47 is a schematic diagram 2 of a scenario in which a user deletes a top-layer card in a card stack according to an embodiment of this application;
FIG. 48A to FIG. 48D are a schematic diagram 3 of a scenario in which a user deletes a top-layer card in a card stack according to an embodiment of this application;
FIG. 49 is a schematic diagram 4 of a scenario in which a user deletes a top-layer card in a card stack according to an embodiment of this application; and
FIG. 50 is a schematic diagram 5 of a scenario in which a user deletes a top-layer card in a card stack according to an embodiment of this application.

### DESCRIPTION OF EMBODIMENTS

Terms such as "first" and "second" in the following are merely used for descriptive purposes and should not be understood as indicating or implying relative importance or as implicitly specifying a quantity of indicated technical features. Therefore, a feature limited by "first" or "second" may explicitly or implicitly include one or more of features. In the descriptions of embodiments, unless otherwise specified, "a plurality of" means two or more.

The terminology used in the following embodiments of this application is for the purpose of describing a particular embodiment only and is not intended to be a limitation of this application. As used in the specification and the appended claims of this application, singular forms "a", "an", "the", "foregoing", and "this" are intended to include plural forms as well, unless the context clearly indicates a contrary. It should be further understood that "/" means "or". For example, A/B may indicate A or B. In the specification, "and/or" describes only an association relationship for describing associated persons and indicates that three relationships may exist. For example, A and/or B may indicate the following three cases: Only A exists, both A and B exist, and only B exists.

An "embodiment" mentioned in this application means that a particular feature, structure, or feature described with reference to the embodiment may be included in at least one embodiment of this application. The phrase shown in various positions in the specification may not necessarily refer to a same embodiment, and is not an independent or optional embodiment exclusive from another embodiment. It is explicitly and implicitly understood by a person skilled in the art that embodiments described in this application may be combined with another embodiment.

Orientation terms, such as "upper", "lower", "front", "rear", "inside", "outside", "left", "right", and the like, mentioned in embodiments of this application are only directions with reference to the drawings or for better and more clear description and understanding of this application, and do not indicate or imply that an indicated apparatus or element needs to have a particular orientation, be constructed and operated in a particular orientation, and therefore should not be understood as limitations on embodiments of this application.

In the descriptions of embodiments of this application, terms such as "include", "have" or any other variation thereof are intended to cover a non-exclusive inclusion, so that a process, method, object, or apparatus that includes a list of elements does not include only those elements but may further include other elements not expressly listed or inherent to such a process, method, object, or apparatus. An element limited by a phrase "includes a..." does not, without more limitations, preclude existence of an additional identical element in a process, method, object, or apparatus that includes the element.

In the era of information explosion, information changes faster, and users have a large quantity of information obtaining channels. It is an urgent need for the users to quickly obtain required useful information without being disturbed by irrelevant information. Meanwhile, how to provide useful information to the users to improve human-computer interaction efficiency of obtaining useful information by the users becomes an improvement direction of electronic devices.

In some embodiments, the useful information pushed by the electronic device to the user is also referred to as notification information or push information. To intuitively present the notification information to the user, the electronic device may present the notification information to the user by using a card (or referred to as a widget, a widget, a component, an assembly, or the like) on a display interface. Different cards may include notification information from different information sources.

For example, the information source may be a system notification service for publishing application (application, APP)-related information in the electronic device. The system notification service may receive notification information from another application in the electronic device and then display the notification information in a form of a card on the display interface of the electronic device. The application-related information may be information related to an application service. For example, information related to a car-hailing application may be car-hailing advice information, and information related to an express application may be pick-up code information.

For example, the information source may alternatively be an application that needs to publish notification information in the electronic device, for example, a weather application, a car-hailing application, an instant communication application, an online shopping application, a travel application, a calendar application, a sports and health application, a conference application, or the like. Notification information of the weather application may be time of a day and weather information, notification information of the car-hailing application may be car-hailing advice information, notification information of the instant communication application may be a friend message, notification information of the online shopping application may be coupon push information, notification information of the travel application may be flight information, notification information of the calendar application may be schedule information, notification information of the sports and health application may be exercise amount information, and notification information of the conference application may be conference reminder information of day. Certainly, notification information of each application herein is merely an example, and notification information of a specific application may have a plurality of manners in practice. This is not specifically limited in this application.

For example, the information source may alternatively be an operating system of the electronic device. Notification information of the operating system may be a system update prompt, application usage duration prompt information, or the like.

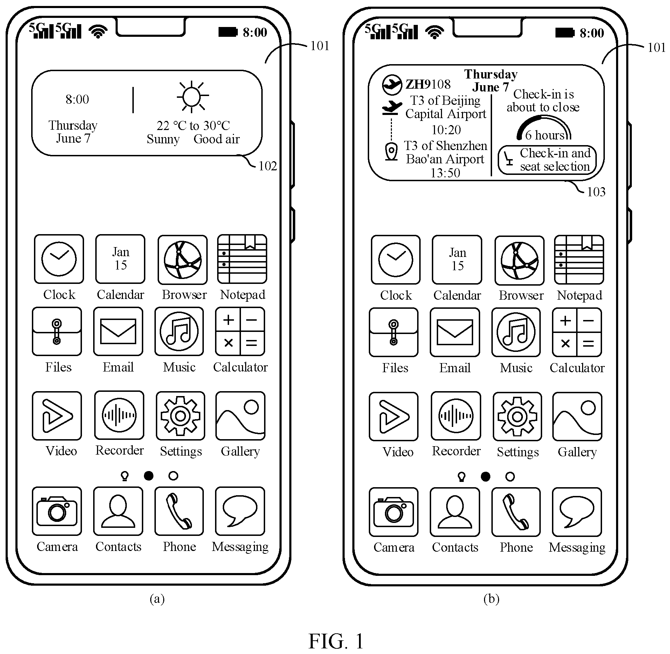

The electronic device is a mobile phone. The mobile phone may display an interface 101 as shown in (a) in FIG. 1. For example, the interface may be a desktop or a home screen of the mobile phone. As shown in FIG. 1, icons of applications installed in the mobile phone and a weather card 102 are displayed on the interface 101. Information such as a current area, a time of a day, a date of the day, and a weather of an area of the day may be displayed in the weather card 102.

If the user reserves a specific flight in the electronic device before a current moment, and duration between the current time and triggering time of the flight is less than or equal to preset duration (for example, 5h), the travel application in the electronic device may push flight information. For example, the flight information may include a flight number, boarding time, landing time, a check-in prompt, and the like.

Then, the electronic device forms a corresponding flight card based on the flight information, and as shown in (b) in FIG. 1, display a flight card 103 in a display area occupied by the weather card 102 on the interface 101, and hide the weather card 102 (that is, no longer display the weather card 102). The flight information received by the electronic device may be displayed in the flight card 103, so that the user can intuitively obtain specific content of the notification information of the travel application from the flight card in time.

Specifically, the electronic device overlays the flight card 103 on the weather card for the purpose of hiding the weather card 102. In practice, when the electronic device currently has two or more cards that need to be displayed, after determining priorities of all the cards (or notification information displayed in the cards), the electronic device may sort all the cards based on the priorities to determine which card is currently displayed. Subsequently, the priorities of all the cards may be updated periodically, and the currently displayed card may be changed based on updated priorities. For example, cards that the electronic device currently needs to display include the weather card and the flight card. Because a priority of the weather card is smaller than that of the flight card, the mobile phone displays the flight card 103 at the current moment as shown in (b) in FIG. 1. Specifically, a priority may be determined, in combination with the current time and position of the mobile phone, based on time and/or a position corresponding to notification information displayed in a card.

It can be learned that, in the conventional technology, when the electronic device has a plurality of pieces of notification information that need to be presented in the form of a card, the electronic device displays different cards in different scenarios based on importance degrees (or priorities) of the notification information in the different scenarios. The scenario is related to scenario information such as time and a position.

However, in some possible scenarios, there may be scenarios in which priorities of a plurality of pieces of notification information are the same. The possible scenarios are shown in Table 1.

**Table 1 Multi-card display**

| Specific scenarios | Positions | Cards that need to be displayed |
|---|---|---|
| Flight travel | Enter the airport fence | Conference reminder card and flight card |
| | Security checkpoint | Electronic boarding pass card and conference reminder card |
| | Gate | Electronic boarding pass card and conference reminder card |
| | Destination airport | Baggage reminder card and conference reminder card |
| Daily work | Enter the subway station fence | Subway code card and conference reminder card |
| | Subway exit | Conference reminder card and subway code card |
| | Company | Conference reminder card |
| Watch a movie | Within a shopping mall | Ticket taking reminder card and view reminder card |
| Take an express | At home | Express reminder card and conference reminder card |

It can be learned that, in many scenarios, the electronic device may need to display a plurality of cards. The electronic device is a mobile phone, and the user sets a conference for a specific time period (for example, 14:00 to 18:00) of a current day in a conference application or a schedule application of the mobile phone, and reserves a flight for the same time period in a travel application. The travel application in the mobile phone pushes flight information (corresponding a flight card) at 12:00. At the same time, the conference application pushes conference reminder information (corresponding a conference reminder card) of the current day. In this case, the mobile phone determines that priorities of the two pieces of notification information are the same based on scenario information such as the current time and position, and randomly displays a card A corresponding to either piece of notification information. Then, after the card A is displayed for specific duration, a card B corresponding to the other piece of notification information is displayed. In this case, if the user does not frequently view the mobile phone, only the card A or only the card B may be viewed. Consequently, the user fails to view required notification information in time, and the user may miss an important journey. This greatly reduces use experience of the user. Further, every time the user views the mobile phone, even if the user has a habit of performing a switching operation on the mobile phone, to switch a displayed card to view all cards, when there are many cards, the user may need to perform a plurality of switching operations to view all the cards. Such frequent operations may also reduce use experience of the user. In conclusion, the existing information display manner has low human-computer interaction efficiency, and user experience is not good.

For the foregoing problems, this application provides an information display method that can be applied to an electronic device having a display. In this method, a single card may be separately displayed, or two cards having a same priority or whose notification information has an association may be simultaneously displayed. In this way, the electronic device can display a card carrying notification information in a better manner, and efficiently display notification information that the user currently needs to view. This reduces user operations, enhances human-computer interaction efficiency, and improves use experience of the user.

In this application, the electronic device is a mobile phone, in other embodiments not part of the present invention, the device can be a device having a display, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, and a personal digital assistant (personal digital assistant, **PDA).**

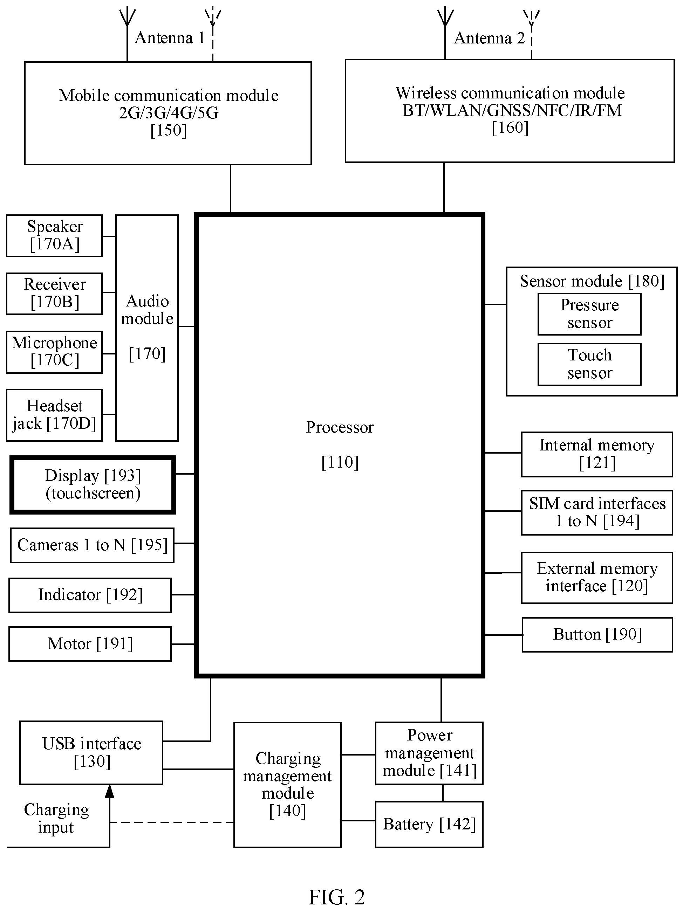

In the embodiment of the present invention the electronic device is a mobile phone. FIG. 2 is a diagram of a structure of the electronic device according to an embodiment of this application.

As shown in FIG. 2, the electronic device includes a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a display 193, a subscriber identification module (subscriber identification module, SIM) card interface 194, a camera 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a neural center and a command center of the electronic device. The controller may generate an operation control signal based on instruction operation code and a timing signal, and implement control on instruction fetching and instruction execution.

A memory may be further disposed in the processor 110, and is configured to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode or an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), or the like. In some embodiments, the electronic device may include one or N displays 194. N is a positive integer greater than 1.

The touch sensor is also referred to as a "touch device". The touch sensor may be disposed on the display 194. The touch sensor and the display 193 form a touchscreen, which is also referred to as a "touch screen". The touch sensor is configured to detect a touch operation performed on or near the touch sensor. The touch sensor may transfer a detected touch operation to the application processor to determine a type of a touch event. A visual output related to the touch operation may be provided through the display 193. In some other embodiments, the touch sensor may alternatively be disposed on a surface of the electronic device, and is located on a position different from that of the display 193.

In an embodiment of this application, the touch sensor may detect a first touch operation performed by the user on a stacked area of a plurality of cards, and transmit information about the first touch operation to the processor 110. The processor 110 analyzes a performed function corresponding to the first touch operation, for example, unfolding and switching a set-top display card, and the like.

The pressure sensor is configured to sense a pressure signal, and may convert the pressure signal into an electrical signal. In some embodiments, the pressure sensor may be disposed in the display 193. There are a plurality of types of pressure sensors, for example, a resistive pressure sensor, an inductive pressure sensor, and a capacitive pressure sensor. The capacitive pressure sensor may include at least two parallel plates made of conductive materials. When force is exerted on the pressure sensor, capacitance between electrodes changes. The electronic device 10 determines intensity of pressure based on a change of the capacitance. When a touch operation is performed on the display 193, the electronic device 10 detects strength of the touch operation by using the pressure sensor. The electronic device 10 may calculate a touch position based on a detected signal of the pressure sensor. In some embodiments, touch operations performed at a same touch position but having different touch operation strength may correspond to different operation instructions. For example, when a touch operation whose touch operation strength is less than a first pressure threshold is performed on a Messaging application icon, an instruction of checking an SMS message is executed. When a touch operation whose touch operation strength is greater than or equal to the first pressure threshold is performed on the Messaging application icon, an instruction of creating a new SMS message is executed.

The camera 193 is configured to capture a static image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include 1 or N cameras 193, where N is a positive integer greater than 1.

The electronic device may implement a photographing function by using the ISP, the camera 193, the video codec, the GPU, the display 194, the application processor, and the like. The ISP is configured to process data fed back by the camera 193. For example, during photographing, a shutter is pressed, and light is transmitted to the photosensitive element of the camera through a lens. An optical signal is converted into an electrical signal. The photosensitive element of the camera transfers the electrical signal to the ISP for processing, so that the ISP converts the electrical signal into an image visible to naked eyes. The ISP may further perform algorithm optimization on noise, brightness, and a skin tone of the image. The ISP may further optimize parameters such as exposure and a color temperature of a photographing scenario. In some embodiments, the ISP may be disposed on the camera 193.

The digital signal processor is configured to process a digital signal, and in addition to a digital image signal, may further process another digital signal. For example, when the electronic device selects a frequency, the digital signal processor is configured to perform Fourier transform on frequency energy.

The video codec is configured to compress or decompress a digital video. The electronic device can support one or more video codecs. In this way, the mobile phone may play or record videos in a plurality of encoding formats, for example, moving picture experts group (moving picture experts group, MPEG) 1, MPEG 2, MPEG 3, and MPEG 4.

The external memory interface 120 may be configured to connect to an external non-volatile memory, to expand a storage capability of the electronic device. The external storage card communicates with the processor 110 through the external memory interface 120, to implement a data storage function. For example, files such as a music or a video are stored in the external non-volatile memory.

The internal memory 121 may include one or more random access memories (random access memories, RAMs) and one or more non-volatile memories (non-volatile memories, NVMs). The random access memory may be directly read and written by the processor 110, may be configured to store an executable program (for example, machine instructions) of an operating system or another running program, or may be configured to store data of a user and an application. The non-volatile memory may also store the executable program, the data of the user and the application, and the like, and may be loaded into the random access memory in advance for the processor 110 to perform direct reading and writing. In this embodiment of this application, the internal memory 121 may store picture files captured by the electronic device or video files recorded by the electronic device in a single-lens image photographing or multilens image photographing mode, or the like.

Certainly, it may be understood that FIG. 2 is merely an example for description when a form of an electronic device is a mobile phone. If the electronic device is in another device form like a tablet computer, a handheld computer, a PC, a PDA, or a wearable device (for example, a smart watch or a smart bracelet), the structure of the electronic device may include fewer structures than those shown in FIG. 2 or may include more structures than those shown in FIG. 2. This is not limited herein.

It may be understood that a function of the electronic device needs to be implemented based on cooperation of software in addition to support of the hardware. A software system of the electronic device may use a layered architecture, an eventdriven architecture, a microkernel architecture, a micro service architecture, or a cloud architecture. In this embodiment of this application, an Android^{®} Android system with a layered architecture is used as an example to describe a software architecture of the electronic device.

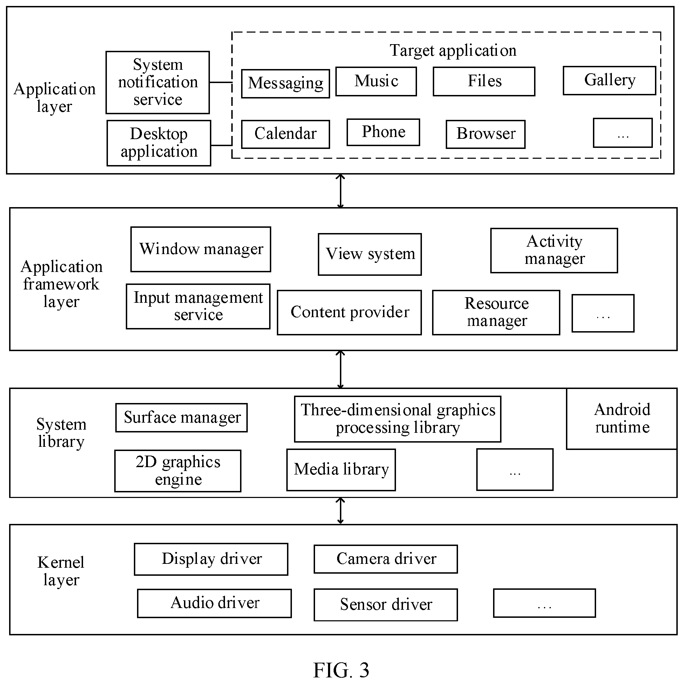

In a layered architecture, software is divided into several layers, and each layer has a clear role and task. The layers communicate with each other through a software interface. In some examples, as shown in FIG. 3, the software architecture of the electronic device provided in this application may include an application layer, an application framework layer, an Android runtime (Android runtime) and system library, and a kernel layer from top to bottom.

### 1. Application Layer

The application layer may include a series of target applications installed in the electronic device.

As shown in FIG. 3, the target applications may include Phone, Messaging, Music, Files, Gallery, Browser, Notepad, Calendar, Email, and the like. The target application may be a system application of the electronic device or a third-party application. This is not specifically limited in this application.

As shown in FIG. 3, the application layer includes a desktop application (Launcher). In general, after the Android system is started, the desktop application may run as a core application resident in the Android system. As a launcher of the Android system, the Launcher may perform basic management on installed applications, such as deleting or displaying the applications.

For ease of management, the desktop application may pre-divide a display interface (for example, a desktop) of the electronic device into a plurality of grid cells of a uniform size, and these grid cells are aligned to form the complete display interface. The desktop application may be arranged and displayed on the display interface with a minimum unit of one grid cell.

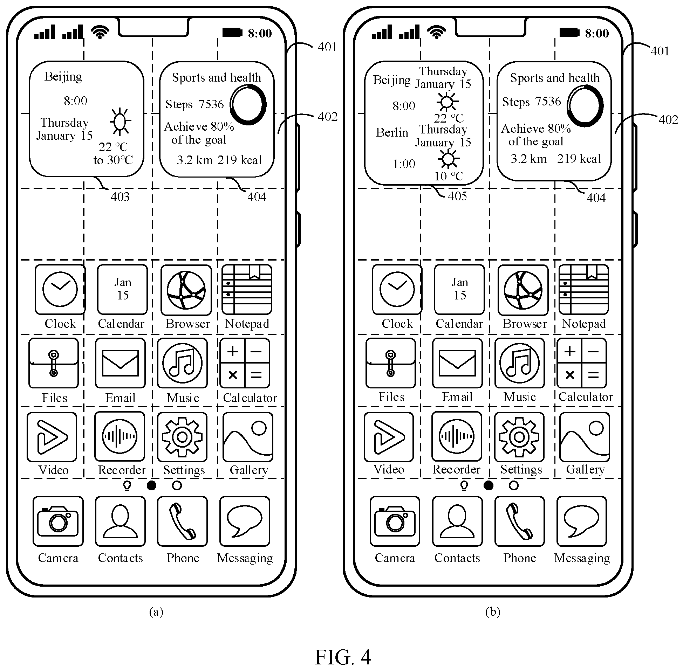

The electronic device is a mobile phone, and the display interface is a desktop. As shown in (a) in FIG. 4, the desktop application may divide a desktop 401 into 4*6 grid cells 402. In an initial state (for example, when the desktop application does not receive notification information for any application in the electronic device), the desktop application displays cards corresponding to two system applications on the desktop 401. For example, as shown in (a) in FIG. 4, the desktop application may display a weather card 403 corresponding to a weather application and a sports card 404 corresponding to a sports and health application. The weather card 403 and the sports cards 404 may have a size of 2*2 on the desktop 401. In other words, the weather card 403 and the sports card 404 each occupy a size of 4 grid cells 402 displayed on the desktop 401. A time and weather of a day of a position of the mobile phone may be displayed in the weather card 402, and a sports situation of the user holding the mobile phone may be displayed in the sports card 403.

In practice, certainly, in the initial state, the desktop application may alternatively display a card corresponding to any other available system application, and this rule applies to subsequent embodiments. This is not specifically limited in this application.

In some other embodiments, the user may set a resident area (for example, Beijing) in the weather application. Then, if the user carries the mobile phone to another area (for example, Berlin), times and weather of the resident area and the area in which the mobile phone is currently located are displayed in the weather card. For example, as shown in (b) in FIG. 4, current times and weather of Beijing (namely, the resident area) and Berlin (namely, the area in which the mobile phone is currently located) may be displayed in a weather card 407. In some examples, the weather card 407 shown in (b) in FIG. 4 may be referred to as a double-clock weather card.

Compared with the weather card 102 shown in (a) in FIG. 1, the weather card 403 shown in (a) in FIG. 4 that is displayed by the electronic device in this embodiment of this application is no longer transparent. To display richer content with less space, information that needs to be displayed is also abbreviated correspondingly. For example, Thursday shown in the weather card 102 changes to Thu shown in the weather card 403. In addition, due to a limitation of display space, in this embodiment of this application, the weather card no longer displays information that the user may not care much about. For example, air quality (for example, amount of air) in the weather card 102 may no longer be displayed in the weather card 403. This rule applies to a weather card 405 shown in (b) in FIG. 4. In addition, this rule applies to all cards in this embodiment of this application that are displayed after being scaled down compared with cards displayed in original specifications in the conventional technology.

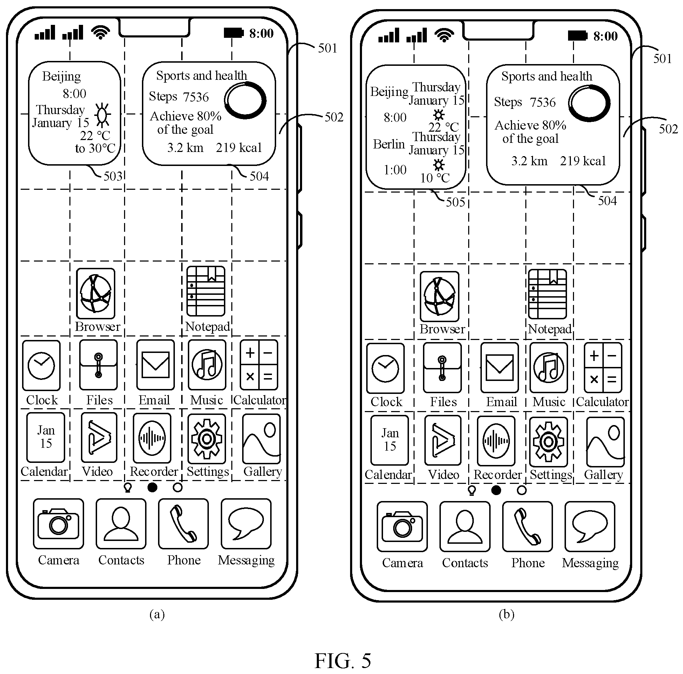

In another example, the electronic device is a foldable mobile phone, the foldable mobile phone is in a folded state, and an outer screen is used as a display for display. As shown in (a) in FIG. 5, the desktop application may divide a desktop 501 into 5*6 grid cells 502. In this case, with reference to the example shown in (a) in FIG. 4, as shown in (a) in FIG. 5, in the initial state, the desktop application may display a weather card 503 and a sports card 504 corresponding to the sports health application on the desktop 501. The weather card 503 may have a size of 2*2 on the desktop 501. In other words, the weather card 503 occupies a size of 4 grid cells 502 displayed on the desktop 501. The sports card 504 may have a size of 3*2 on the desktop 501. In other words, the sports card 504 occupies a size of 6 grid cells 502 displayed on the desktop 501. In some other embodiments, as shown in (b) in FIG. 5, the desktop application may display a double-clock weather card 505 on the desktop 501. For generation of the double-clock weather card 505, refer to the related descriptions in the foregoing embodiments. Details are not described herein again.

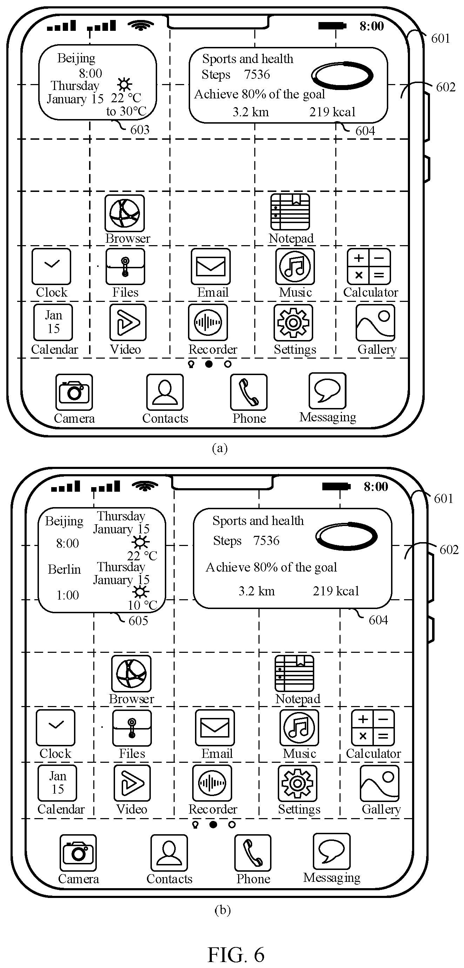

In another example, the electronic device is a foldable mobile phone, the foldable mobile phone is in an unfolded state, and an inner screen is used as a display for display. As shown in FIG. 6, the desktop application may divide a desktop 601 into 5*6 grid cells 602. In this case, with reference to the example shown in (a) in FIG. 4, as shown in FIG. 6, in the initial state, the desktop application may display a weather card 603 and a sports card 604 corresponding to the sports health application on the desktop 601. The weather card 603 may have a size of 2*2 on the desktop 601. In other words, the weather card 603 occupies a size of 4 grid cells 602 displayed on the desktop 601. The sports card 604 may have a size of 3*2 on the desktop 601. In other words, the sports card 604 occupies a size of 6 grid cells 602 displayed on the desktop 601. In some other embodiments, as shown in (b) in FIG. 6, the desktop application may display a double-clock weather card 605 on the desktop 601. For generation of the double-clock weather card 605, refer to the related descriptions in the foregoing embodiments. Details are not described herein again.

Certainly, how many grid cells the desktop application divides the desktop into may be set by the user in practice, and styles of divided grid cells of desktops of a conventional non-foldable mobile phone and the foldable mobile phone may be the same. This is not specifically limited in this application. In addition, with reference to the examples in FIG. 4 to FIG. 6, in this application, an area on the desktop of the electronic device in which the weather card and the sports card are displayed may be referred to as a target area, an area in the target area in which the weather card is displayed is referred to as a first sub-area, and an area in which the sports card is displayed is referred to as a second sub-area.

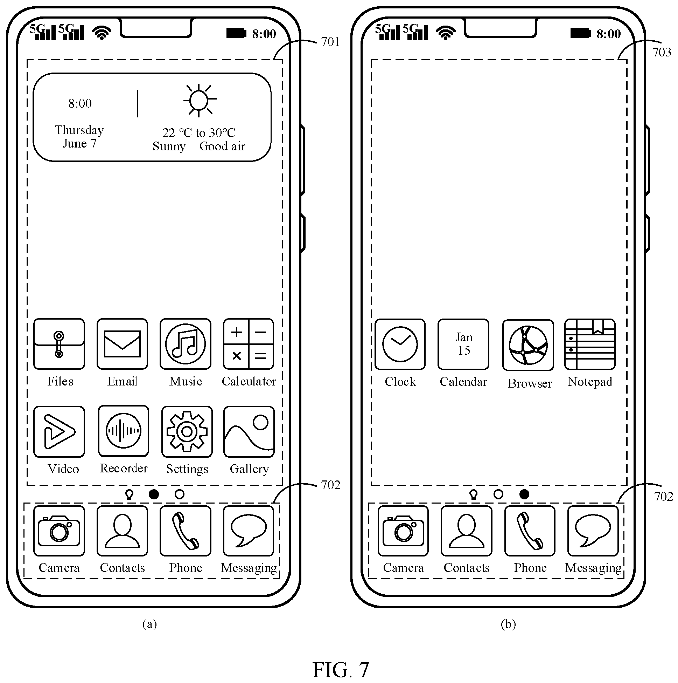

In some examples, there may be a plurality of switching areas and one resident area on the desktop of the electronic device based on a setting of the user or a default setting of the mobile phone. Different content may be displayed in each switching area, for example, icons of different applications. The user may perform a swipe operation in a switching area when the user needs to view content in another switching area. The mobile phone may switch the currently displayed switching area to another switching area in response to the swipe operation. Icons of fixed applications are displayed in the resident area, and the user cannot perform switching on the resident area, but can change icons of applications displayed in the resident area. The desktop divided with grid cells in this embodiment of this application may specifically refer to a switching area on the desktop. For example, the electronic device is a mobile phone. As shown in (a) in FIG. 7, a first switching area 701 and a resident area 702 is displayed on the desktop of the mobile phone. The mobile phone may receive a swipe-left operation performed by the user on the first switching area 701. In response to the swipe-left operation, as shown in (b) in FIG. 7, the mobile phone may switch the first switching area 701 to the second switching area 703. Content displayed in the second switching area 703 is different from that in the first switching area 701.

In this embodiment of this application, after the initial state, the desktop application receives notification information from the target application and display a target card corresponding to the notification information on the display interface based on the notification information. For example, after receiving the flight information sent by the travel application, the desktop application may form a corresponding flight card based on the flight information and display the flight card in a display area occupied by the weather card and the sports card, and hides the weather card and the sports card. In this embodiment of this application, the desktop application may specifically overlay the flight card on the weather card and/or the sports card, that is, display the flight card in a first area and/or a second area for the purpose of hiding the weather card and the sports card.

The flight information may be sent by a server to which the travel application belongs to the electronic device when it is detected that duration between a boarding time in a flight order corresponding to the electronic device and a current moment is less than or equal to preset duration. Certainly, in practice, the flight order service of the travel application may be based on another server, for example, a server to which the 12306 application of China Railway belongs. In this case, the flight information may be obtained by the travel application after the travel application obtains the flight order of the electronic device from the server to which the 12306 application belongs. Then, the travel application may send the flight information to the electronic device based on the flight order under a specific situation (for example, the boarding time is less than or equal to the preset duration from the current moment).

A card displayed by the desktop application on the display interface is an interactive card. When the card displays notification information of an application 1, the suggestion card may provide a start interface for starting the application 1. In this way, when the electronic device receives a trigger operation performed by the user on the card, the electronic device may display an application interface in the application 1. In addition, when the electronic device evaluates that the content displayed in the card no longer needs to be viewed by the user, the electronic device may further delete the card, or hide display of the card. For example, when an operation performed by the user on the card is received or when a real-time scenario no longer matches the push information of the card, the card may be deleted or display of the card may be hidden.

In addition, in practice, it is possible that a plurality of applications in the electronic device may regularly push notification information to the desktop application. If all information is displayed in cards, the electronic device may display much information that is not currently needed by the user. Based on this, in this application, after receiving a plurality of pieces of notification information, the desktop application may generate and display a card for notification information (which may be determined by an artificial intelligence program of the electronic device) that meets a preset condition. The preset condition may be determined based on a scenario in which the electronic device is currently located. For example, when determining that the current moment is 11:00, and that in the received notification information, a boarding time (for example, 13:00) corresponding to a specific piece of flight information is less than the preset duration (for example, 3 hours) from the current moment, the electronic device determines that the notification information needs to be generated into a card and displayed. Certainly, there may alternatively be any other feasible determining manner in practice. This is not specifically limited in this application.

In this embodiment of this application, the desktop application may include a management module and a display module. The management module is configured to manage all notification information from the target application, for example, determining a priority of the notification information, or determining a size and a position of a card corresponding to the notification information. The management module may send notification information that needs to be displayed to the display module for display.

For example, the management module may determine a priority of a corresponding card based on content of the notification information that needs to be displayed on the display interface and a preset priority determining rule (for example, when a moment corresponding to the notification information is closer to the current moment, a priority is higher), and create a priority list. In an implementation, the notification information may include time information and/or geographical position information. The time information may be a specific moment (for example, 8:00 am) or a specific time period (for example, 8:00 am to 10:00 am). The geographical position information may be a specific position or a specific area. The preset priority determining rule may be as follows: When time information in notification information in a suggestion card is closer to the current moment, a priority of the suggestion card is higher. When the time information corresponding to the notification information in the suggestion card is closer to the current position of the mobile phone, a priority of the suggestion card is higher. Certainly, this is merely an example. In practice, the preset priority determining rule may include another determining condition. For example, a higher priority of an application to which the notification time in the suggestion card belongs indicates a higher priority of the suggestion card. In another example, an earlier establishing time of the suggestion card indicates a lower priority. This is not specifically limited in this application.

For example, the notification information that currently needs to be displayed by the electronic device is time weather information of the weather application, sports information of the sports and health application, and flight information of the travel application. The electronic device may determine that the weather card and the sports card are established earliest and that priorities of the weather application and the sports and health application are lower than that of the travel application. Therefore, it may be determined that a priority of the flight card is higher than priorities of the weather card and the sports card. The priorities of the weather card and the sports card may be equal. Finally, the priority list shown in Table 2 may be obtained.

**Table 2 Priority list**

| Card name | Priority |
|---|---|
| Flight card | 2 |
| Weather card | 1 |
| Sports card | 1 |

As shown in Table 2, a higher priority of a card indicates a larger priority value corresponding to the card. In addition, when the desktop application needs to display more cards on the display interface, if the priority of the flight card still needs to be the largest, a value of the priority of the flight card in Table 2 is adjusted, to enable the priority of the flight card to be the largest.

After determining priorities of all cards that currently need to be displayed, the management module may generate and display a card stack based on the priorities of all the cards. A card with a higher priority is at a higher layer in the card stack. To be specific, a card with a highest priority is at the top of the card stack for display on the display interface, and the remaining cards are sequentially stacked below the card. Certainly, the desktop application may alternatively set respective retention duration for each card, that is, how long each card may be present in the card stack. After a card reaches retention duration, the corresponding card is automatically deleted. The retention duration may be determined by the desktop application based on the notification information corresponding to the card, or may be information directly carried in the notification information. This is not specifically limited in this application.

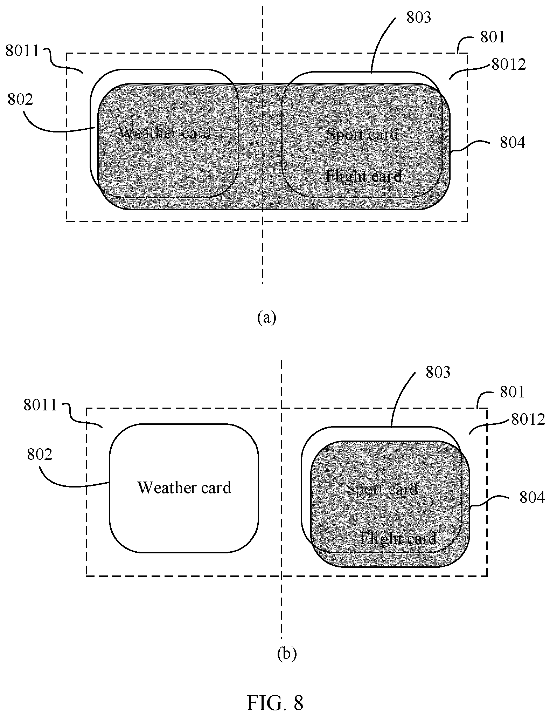

In an implementation, the examples shown in Table 2 are used. As shown in (a) in FIG. 8, the management module may control the display module to generate a card stack in a target area 801 on the desktop. An area that is at a bottommost layer of the card stack and that corresponds to a first sub-area 8011 of the target area has a weather card 802. An area that is at the bottommost layer of the card stack 802 and that corresponds to a second sub-area 8012 of the target area has a sports card 803. A topmost layer of the card stack 802 displays a flight card 804. Certainly, the card stack shown in (a) in FIG. 8 is merely for descriptions of a card stack result. In practice, in this scenario, only the flight card can be fully viewed by the user on the desktop of the electronic device.

In another implementation, the examples shown in Table 2 are used. As shown in (b) in FIG. 8, the management module may control the display module to generate a card stack in a target area 801 on the desktop. An area that is at a bottommost layer of the card stack and that corresponds to a first sub-area 8011 of the target area has a weather card 802. An area that is at the bottommost layer of the card stack and that corresponds to a second sub-area 8012 of the target area has a sports card 803. An area that is at a topmost layer of the card stack and that corresponds to the second sub-area 8012 of the target area is a flight card 807, and an area that is at the topmost layer 806 of the card stack 802 and that corresponds to the first sub-area 8011 of the target area is empty or transparent. Certainly, the card stack shown in (b) in FIG. 8 is merely for descriptions of a card stack result. In practice, in this scenario, the weather card and the flight card can be viewed by the user on the desktop of the electronic device, and the sports card cannot be viewed because the sports cards is fully overlaid by the flight card.

Then, because a degree of need of the user for a same suggestion card changes over time, the priority of each suggestion card in the card stack may change over time. Therefore, to enable the sorting of the cards in the card stack to represent the degree of need of the user and be convenient for the user to view, the management module may re-prioritize all of the suggestion cards once every fixed period of time (for example, 10 minutes) and update layers of all of the cards in the card stack based on the priorities of all of the suggestion cards. The fixed duration may be a default value or may be customized. For example, a card A currently has a highest priority in the card stack and is displayed at the topmost layer of the card stack. After 10 min, the priority of the card A changes to a second high priority in the card stack, and a card B changes to a card with the highest priority. In this case, the management module displays the card B at the topmost layer of the card stack and the card A at the next layer of the card B.

In some other embodiments, for the cards being displayed by the desktop application, in addition to periodically updating the priorities of the cards to adjust the layers of the cards in the card stack, the priorities of all the existing cards may not be actively updated when there is no need to add a new card. Instead, different retention duration and display duration are set for different cards based on notification information corresponding to the cards, and current layers of all the cards are updated based on the retention duration and the display duration. If a new card needs to be added, the process may be repeated after a priority of the new card is determined.

The display duration refers to duration that the card is displayed on the desktop, namely, duration that the card is at the topmost layer of the card stack. The retention duration refers to duration of the card in the card stack or duration that the card is retained on the desktop. When the card is retained on the desktop, the card may be or may not be displayed. To be specific, the desktop application may place the card at the topmost layer of the card stack for display, or the card is placed at a layer other than the topmost layer of the card stack and is not displayed. This specifically depends on the priorities and display duration of all the cards. Generally, the display duration is less than or equal to the retention duration.

For example, if display duration of the card A is 3 minutes (min) and retention duration is 10 min, after the desktop application displays the card A at the topmost layer of the card stack for duration of 3 min, the card at a next layer of the card A may be displayed at the topmost layer of the card stack, and the card A is further hidden. In this case, the card Ais still retained in the card stack, and the user may display the card A at the topmost of the card stack again by switching a card at the topmost layer of the card stack. Then, if the card A is retained in the card stack for 10 min, the desktop application may delete the card A. Then, the user cannot obtain the card A from the card stack through switching. This rule applies to other cards in the card stack.

For example, with reference to the examples shown in Table 2, the management module on the desktop application may ultimately obtain a card display table as shown in Table 3.

**Table 3 Display situation**

| Card name | Priority | Display duration | Retention duration |
|---|---|---|---|
| Flight card | 2 | 3 min | 10 min |
| Weather card | 1 | 1 min | - |
| Sports card | 1 | 1 min | - |

As shown in Table 3, because the weather card and the sports card are cards of two system applications displayed in the initial state of the desktop, the information displayed by the two cards may be updated in real time by the system applications. Therefore, the desktop application may always keep the two cards in the card stack. In other words, retention duration of the cards does not exist or is infinite.

The desktop application may further receive update information from the target card of the target application, and update content displayed by the target card displayed on the desktop based on the update information. The desktop application may further receive deletion information for deleting the target card from the target application, and delete the target card of the electronic device on the desktop based on the deletion information.

It should be noted that the priority list shown in Table 2 and/or the display situation table shown in Table 3 may not exist in practice, provided that the management module can determine the data in both tables and control the display module to perform related display based on the data. Certainly, in practice, the data in the priority list shown in Table 2 and/or the display list shown in Table 3 may alternatively be generated by any other possible module in the electronic device and sent to the management module for use. This is not specifically limited in this application.

As shown in FIG. 3, the application layer may further include a system notification service. The system notification service may receive related information for the target card from the target application, and send the related information to the desktop application, so that the desktop application performs related operations based on the related information. For example, the related information may be the notification information of the target application in the foregoing embodiments. In this case, the related operation may be displaying the target card corresponding to the notification information. The related information may be the update information of the target card in the foregoing embodiments. In this case, the related operation may be updating the display content of the target card. The related information may be the deletion information of the target card in the foregoing embodiments. In this case, the related operation may be deleting the target card.

### 2. Application framework layer

The application framework layer provides an application programming interface (Application Programming Interface, API) and a programming framework for the application at the application layer. The application framework layer includes some predefined functions.

For example, the application framework layer may include an activity manager, a window manager, a content provider, a view system, a resource manager, an input method manager, and the like.

The activity manager may be configured to manage a lifecycle of each application. The application usually runs in an operating system in a form of an activity. The activity manager may schedule an activity process of the application to manage the lifecycle of each application. The window manager is configured to manage a window application. The window manager may obtain a size of a display screen, determine whether a status bar exists, lock a screen, take a screenshot, and the like. The content provider is configured to store and obtain data and enable the data to be accessible to an application. The data may include videos, images, audios, calls made and received, browsing histories and bookmarks, phone books, and the like. The view system includes visual controls such as a control for displaying a text and a control for displaying an image. The view system may be configured to construct an application. A display interface may include one or more views. For example, a display interface including a messaging notification icon may include a view for displaying a text and a view for displaying an image. The resource manager provides various resources such as a localized character string, an icon, an image, a layout file, and a video file for an application.

As shown in FIG. 3, the application framework layer may further include an input manager service (input manager service). The input manager service is configured to: manage an operation (for example, a swipe operation, a delete operation, a tap operation, or any other feasible operation) performed by the user on the electronic device, and feed back the operation performed by the user on the mobile phone to the desktop application through a window manager service (window manager service, WMS), so that the desktop application performs a corresponding operation based on the operation performed by the user on the mobile phone. For example, the input manager service may receive a deletion operation performed by the user on the target card displayed on the desktop, and feed back the deletion operation for the target card to the management module on the desktop application through the window manager service, so that the management module controls the display module on the desktop application to delete the target card, that is, no longer display and retain the target card on the desktop.

### 3, Android runtime and system library

The Android runtime includes a kernel library and a virtual machine. The Android runtime is responsible for scheduling and management of an Android system.

The kernel library includes two parts: One part is a functional function that needs to be invoked by a Java language, and the other part is a kernel library of Android.

The application layer and the application framework layer are run in the virtual machine. The virtual machine executes Java files at the application layer and the application framework layer as binary files. The virtual machine is configured to perform functions such as object life cycle management, stack management, thread management, security and exception management, and garbage collection.

The system library may include a plurality of function modules, for example, a surface manager (surface manager), a media library (Media Libraries), a three-dimensional graphics processing library (for example, an OpenGL ES), and a 2D graphics engine (for example, an SGL).

The surface manager is configured to manage a display subsystem, and provide fusion of 2D and 3D layers to a plurality of applications. The media library supports playback and recording in a plurality of common audio and video formats, and also support static image files, and the like. The media library may support a plurality of audio and video encoding formats, such as MPEG 4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

### 4. Kernel layer

The kernel layer is a layer between hardware and software. The kernel layer includes at least a display driver, a camera driver, an audio driver, a sensor driver, and the like. This is not limited in this embodiment of this application.

Based on the hardware architecture and the software architecture, the following describes the information display method provided in embodiments of this application by using an example in which an electronic device is a mobile phone.

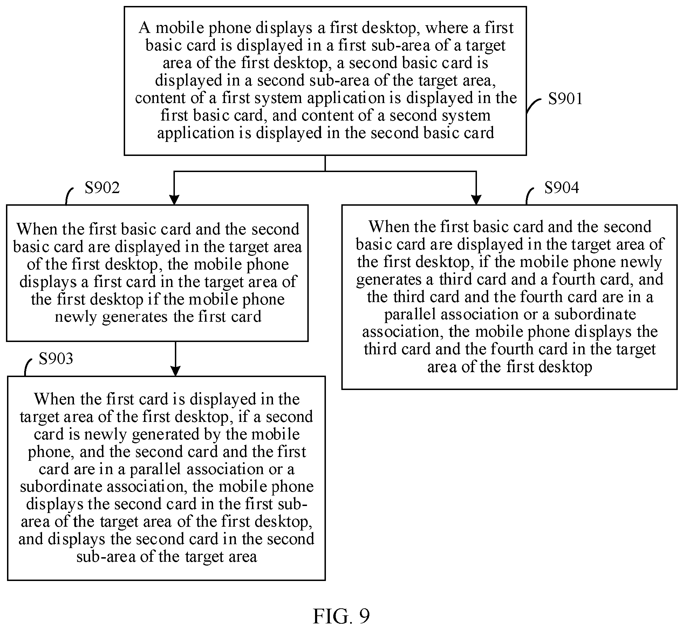

FIG. 9 is a schematic flowchart of an information display method according to an embodiment of this application. As shown in FIG. 9, the method may include S901 to S904.

S901: A mobile phone displays a first desktop, where a first basic card is displayed in a first sub-area of a target area of the first desktop, a second basic card is displayed in a second sub-area of the target area, content of a first system application is displayed in the first basic card, and content of a second system application is displayed in the second basic card.

Herein, the first desktop may be a leftmost home screen of the mobile phone, or may be any switching area on a desktop of the mobile phone, for example, a switching area on a home screen displayed after the mobile phone is powered on. The first basic card may alternatively be displayed in the second sub-area of the target area, and the second basic card may alternatively be displayed in the first sub-area of the target area. This is not specifically limited in this application.

The first system application may be any system application that can display content in a form of a card, for example, a weather application. In this case, the first basic cards may be referred to as a weather card. A time of a day and weather information for an area in which the mobile phone is currently located may be displayed in the weather card. The second system application may be any system application, other than the first system application on the mobile phone, that can display content in the form of a card, for example, a sports and health application. In this case, the second basic card may be a sports card. A sports situation of the user holding the mobile phone in a current day may be displayed in the sports card.

For specific display scenarios of the first desktop, refer to the examples shown in FIG. 4 to FIG. 6 in the foregoing embodiments. Details are not described herein again.

In an implementation, the first basic card and the second basic card displayed in the target area of the first desktop may be created and displayed by default after the mobile phone is powered on. For example, the leftmost home screen of the first desktop may be displayed with the first basic card in the first sub-area of the target area and the second basic card in the second sub-area of the target area by default.

In another implementation, the first basic card and the second basic card displayed in the target area of the first desktop may alternatively be displayed in response to an operation of the user for creating a card stack.

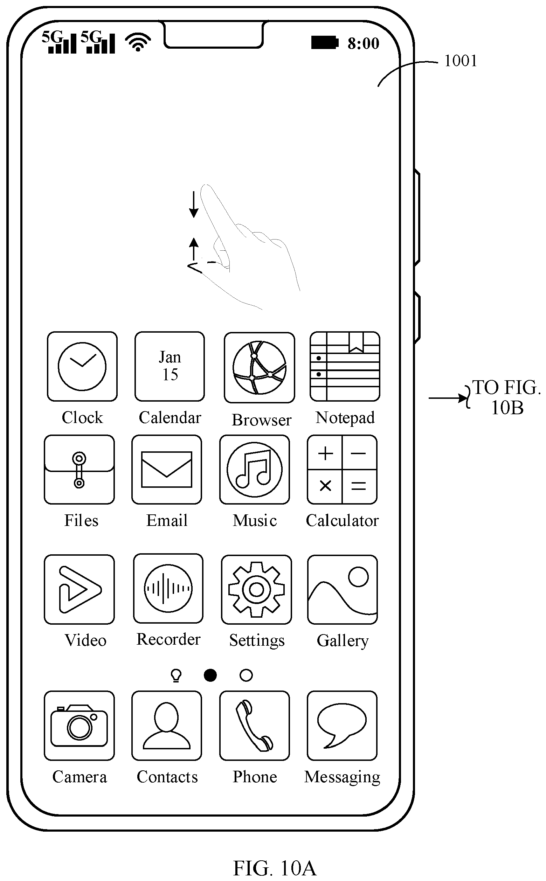

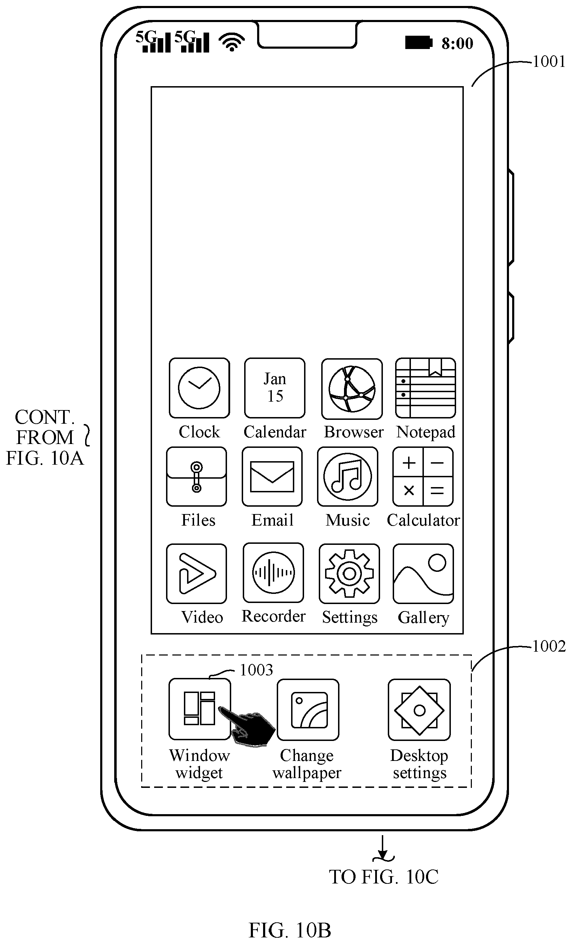

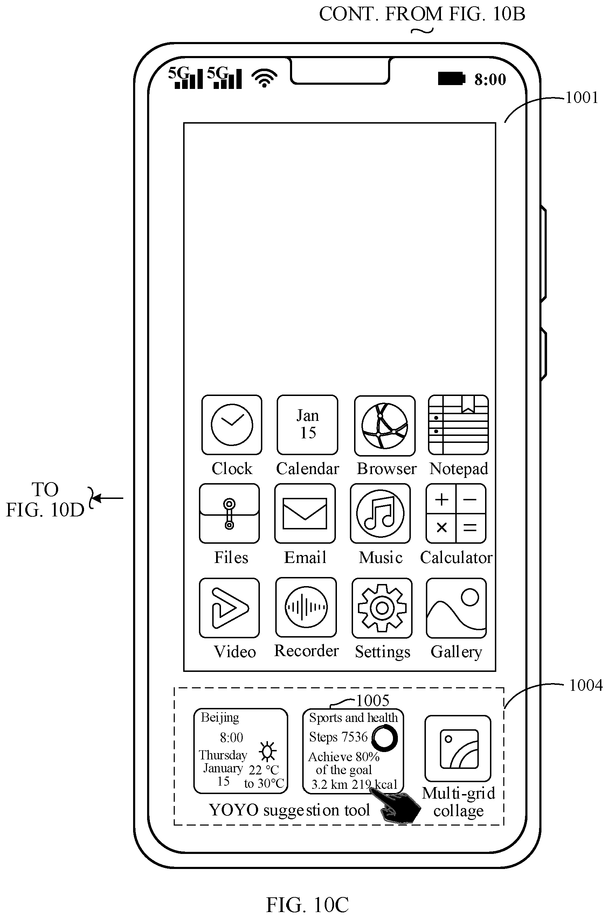

For example, the electronic device is a mobile phone, the first desktop is a home screen of the mobile phone, the first basic card is a weather card, and the second basic card is a sports card. As shown in FIG. 10A, the mobile phone may receive a preset operation of adding a window tool performed by the user on a home screen 1001 when displaying the home screen 1001. For example, the preset operation may be a two-finger kneading operation. In response to the preset operation, the desktop application of the mobile phone may display a tool menu 1002 shown in FIG. 10B on the home screen 1001. The tool menu 1002 includes a tool option 1003 for adding a window tool (or referred to as a component). Then, the mobile phone may receive a trigger operation (for example, a tap operation) for the tool option 1003. In response to the trigger operation, the desktop application of the mobile phone may display a preview window 1004 shown in FIG. 10C on the home screen 1001. In the preview window 1004, the user can view, by swiping left or right, all window tools that currently can be added to the home screen 1001 of the mobile phone. The preview window 1004 includes a YOYO suggestion tool 1005 for intelligently displaying notification information in a card manner. Herein, YOYO is a specified name of a smart assistant of the mobile phone, and may also be referred to as a suggestion tool in practice. It may be understood that a name of the YOYO suggestion tool 1005 is not specifically limited in embodiments of this application. In the preview window 1004, a specific style of the YOYO suggestion tool 1005 may include the weather card and the sports card, to prompt the user that the weather card and the sports card are displayed by default when the YOYO suggestion tool 1005 is initially set on the home screen 1001 or there is no other notification information.

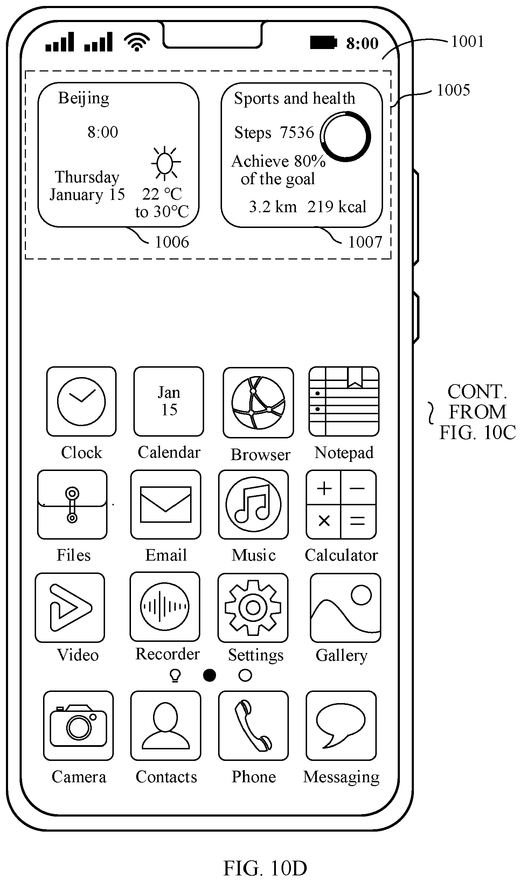

Then, the mobile phone may receive a trigger operation (for example, a tap operation) for the YOYO suggestion tool 1005. In response to the trigger operation, as shown in FIG. 10D the desktop application of the mobile phone may display the YOYO suggestion tool 1005 in the target area on the home screen 1001. In this case, because the desktop application does not receive notification information pushed by another application, the YOYO suggestion tool 1005 is tiled with a weather card 1006 and a sports card 1007. In other words, the weather card 1006 is displayed in the first sub-area of the target area, and the sports card 1007 is displayed in the second sub-area of the target area. The target area may be an area having 4*2 cells at the topmost on the home screen 1001, the first sub-area may be a left area having 2*2 cells in the target area, and the second sub-area may be a right area having 2*2 cells in the target area. The left and right mentioned herein are referred to as opposite directions, a direction corresponding to the left may be specifically a direction from a right side edge of the desktop towards a left side edge of the desktop, and the direction is perpendicular to the left side edge and the right side edge of the desktop. This rule applies to subsequent similar scenarios. Details are not described below again.

In addition, to indicate a function of the YOYO suggestion tool 1005 to the user, the desktop application of the mobile phone may display a guide pop-up window when the desktop application first displays the YOYO suggestion tool that is added by using a user operation on the first desktop. Information for prompting the user for the function of the YOYO suggestion tool and an operation method of card switching and card deletion may be displayed in the guide pop-up window. Certainly, the guide pop-up window may alternatively be displayed at any other feasible occasion.

In some other embodiments, if the first desktop is a home screen on an outer screen of a foldable mobile phone in a folded state, for a specific example of displaying the first basic card and the second basic card in the target area of the first desktop, refer to (a) in FIG. 5. The target area is an area having 5*2 cells at the topmost on the home screen, the first sub-area may be a left area having 2*2 cells in the target area, and the second sub-area may be an area having 3 *2 cells in the target area.

In some other embodiments, if the first desktop is a home screen on an inner screen of a foldable mobile phone in an unfolded state, for a specific example of displaying the first basic card and the second basic card in the target area of the first desktop, refer to (a) in FIG. 5. The target area is an area having 5*2 cells at the uppermost on the home screen, the first sub-area may be a left area having 2*2 cells in the target area, and the second sub-area may be an area having 3*2 cells in the target area.

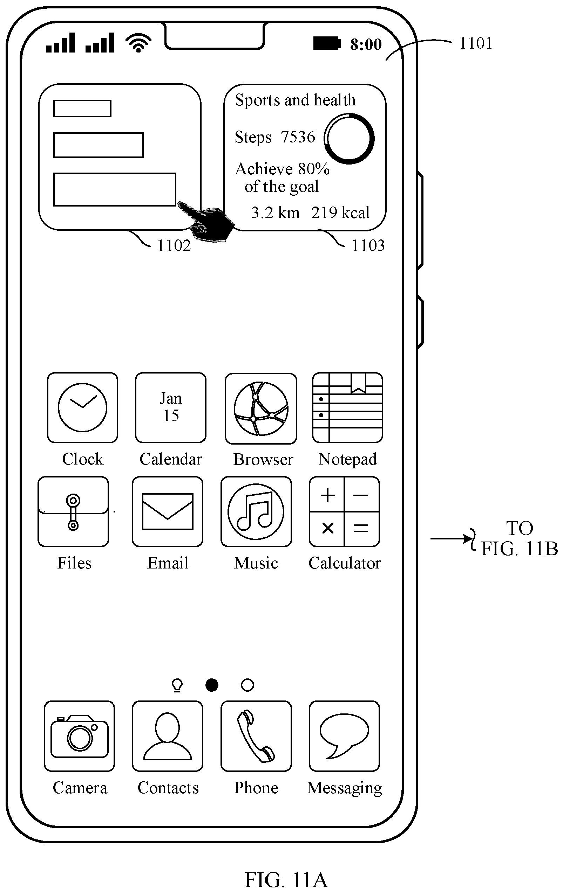

In some embodiments, for example, the first basic card is a weather card, and the second basic card is a sports card. If the user unloads the weather application on the mobile phone through an unloading operation, when the desktop application of the mobile phone does not receive notification information of another application, or when the desktop application displays the first basic card and the second basic card in the target area of the first desktop in response to a switch operation performed by the user, the first basic card is changed from the weather card to a placeholder card. For example, in this case, as shown in FIG. 11A, the mobile phone may display a placeholder card 1102 in the first sub-area in the target area of the first desktop 1101 and a sports card 1103 in the second sub-area in the target area. A plurality of placeholders are displayed in the placeholder card. For example, a placeholder may be a rectangular block of any size.

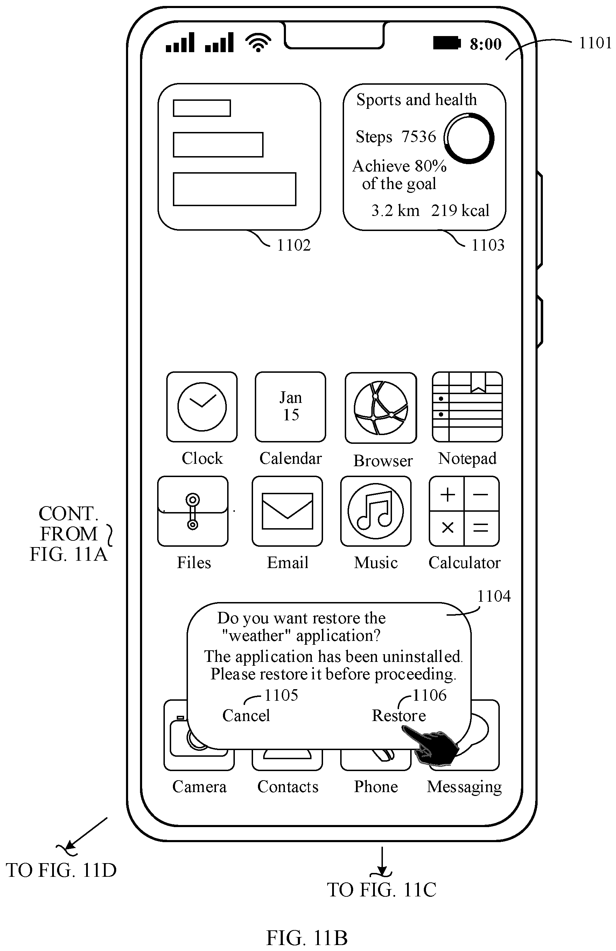

Then, if the user wants to re-view the weather information displayed by the weather card, the placeholder card 1102 may be tapped. Specifically, the mobile phone may receive a trigger operation (for example, a tap operation) performed by the user on the placeholder card 1102, and display a restoration pop-up window 1104 shown in FIG. 11B. The restoration pop-up window 1104 may display prompt information prompting the user to reinstall the weather application, for example: Do you want to restore the "weather" application? The application has been uninstalled. Please restore it before proceeding. The restoration pop-up window 1104 further includes a cancel option 1105 and a restore option 1106. The restore option 1106 is used to trigger the mobile phone to reinstall the weather application, and restore the placeholder card to the weather card. The cancel option 1105 is used to trigger the mobile phone to cancel display of the restoration pop-up window 1104.

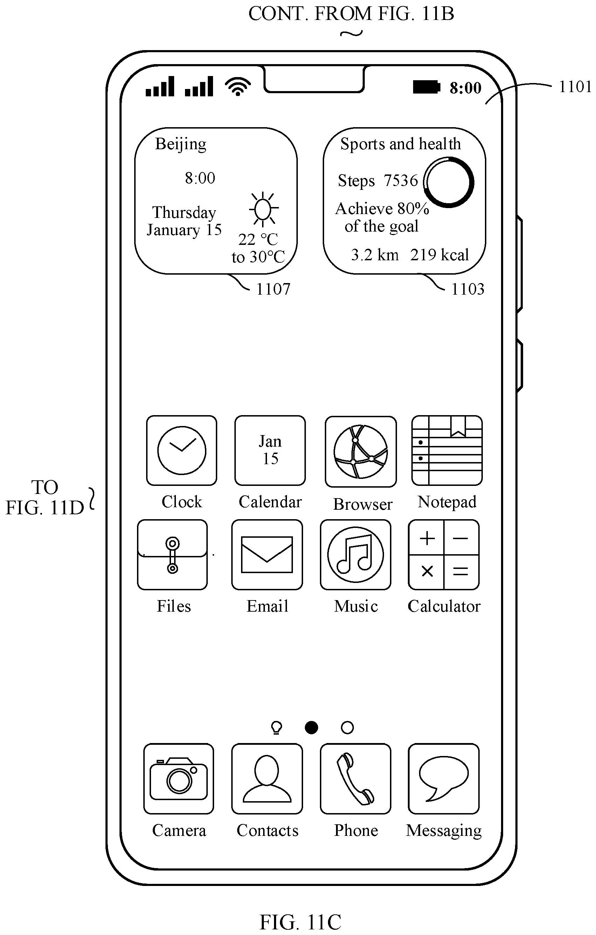

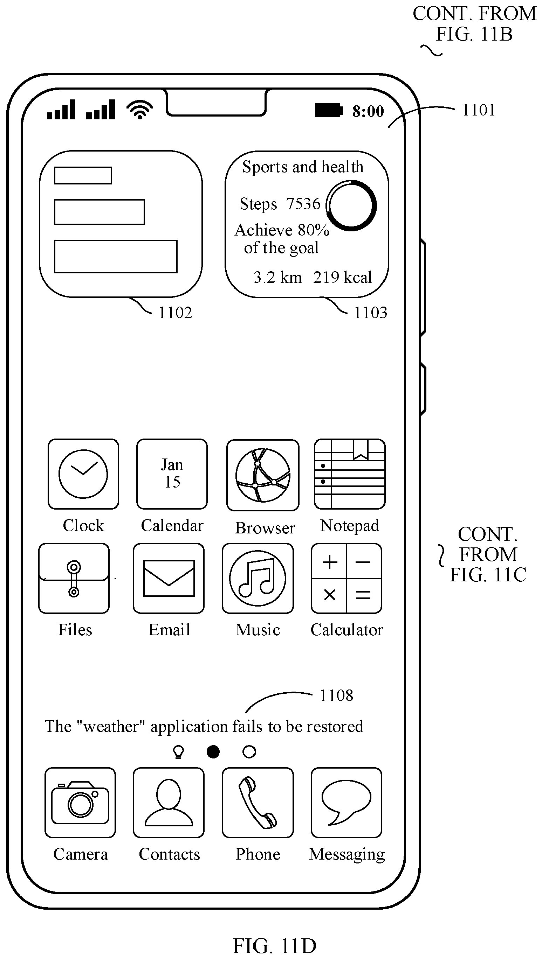

The mobile phone may receive a trigger operation (for example, a tap operation) performed by the user on the restore option 1106. In response to the trigger operation, the mobile phone may automatically reinstall the weather application, restore the placeholder card to the weather card, and display a first desktop 1101 shown in FIG. 11C. Compared with that on the first desktop shown in FIG. 11A, on the first desktop 1101 shown in FIG. 11C, a weather card 1107 is displayed in the first sub-area of the target area. In some possible cases, the mobile phone may not be able to install the weather application due to a poor network or the like. In this case, in response to the trigger operation performed by the user on the restore option 1106, the mobile phone displays restore failure reminder information 1108 shown in FIG. 11D, for example: The "Weather" application fails to be restored.

The mobile phone may further receive a trigger operation (for example, a tap operation) performed by the user on the cancel option 1105. In response to the trigger operation, the mobile phone cancels displaying of the restoration pop-up window 1104, that is, displays the first desktop 1101 shown in FIG. 11A.

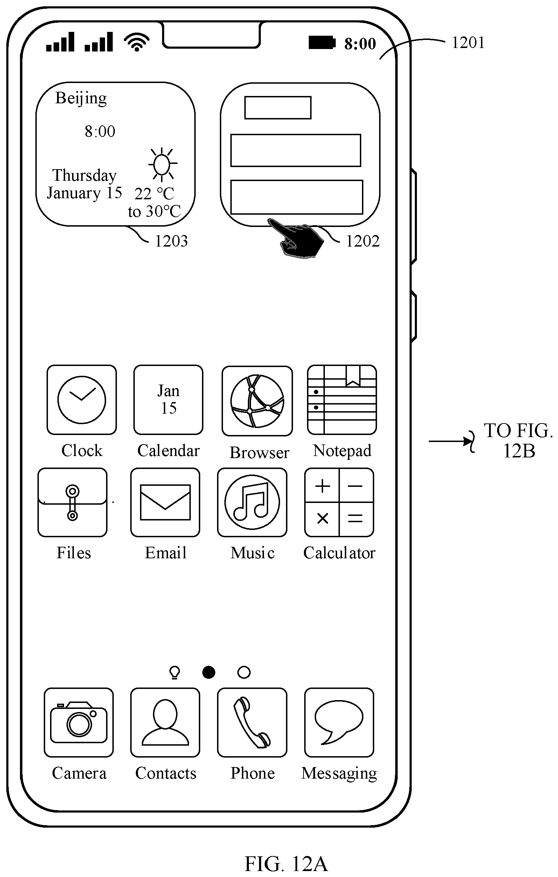

In some embodiments, for example, the first basic card is a weather card, and the second basic card is a sports card. If the user unloads the sports and health application on the mobile phone through an unloading operation, when the desktop application of the mobile phone does not receive notification information of another application, or when the desktop application displays the first basic card and the second basic card in the target area of the first desktop in response to a switch operation performed by the user, the first basic card is changed from the weather card to a placeholder card. For example, in this case, as shown in FIG. 12A, the mobile phone may display a placeholder card 1202 in the second sub-area in the target area of the first desktop 1201 and a weather card 1203 in the first sub-area in the target area. A plurality of placeholders are displayed in the placeholder card. For example, a placeholder may be a rectangular block of any size.

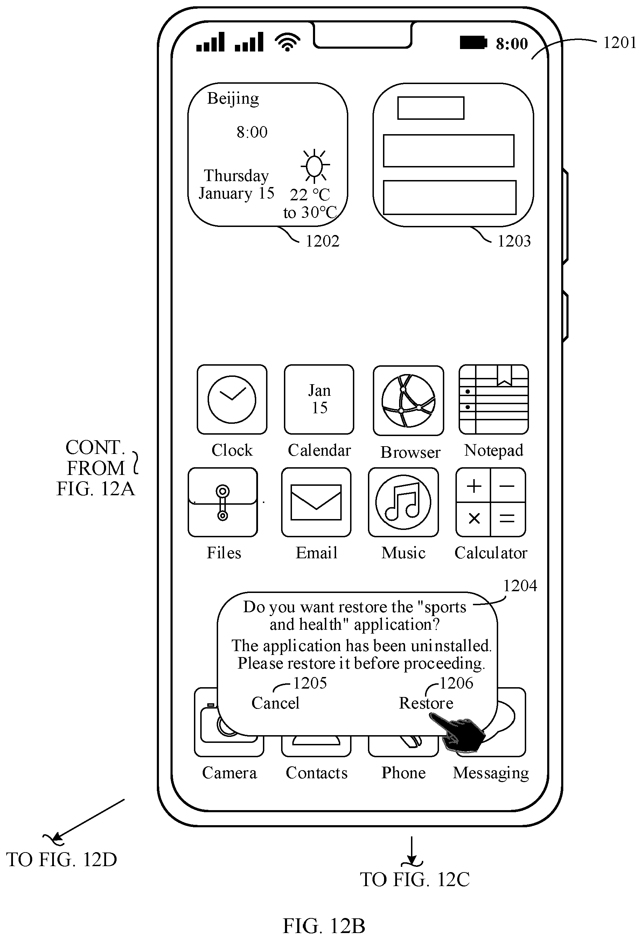

Then, if the user wants to re-view the sports information displayed by the sports card, the placeholder card 1202 may be tapped. Specifically, the mobile phone may receive a trigger operation (for example, a tap operation) performed by the user on the placeholder card 1202, and display a restoration pop-up window 1204 shown in FIG. 12B. The restoration pop-up window 1204 may display prompt information prompting the user to reinstall the weather application, for example: Do you want to restore the "sports and health" application? The application has been uninstalled. Please restore it before proceeding. The restoration pop-up window 1204 further includes a cancel option 1205 and a restore option 1206. The restore option 1206 is used to trigger the mobile phone to reinstall the sports and health application, and restore the placeholder card to the sports card. The cancel option 1205 is used to trigger the mobile phone to cancel display of the restoration pop-up window 1204.

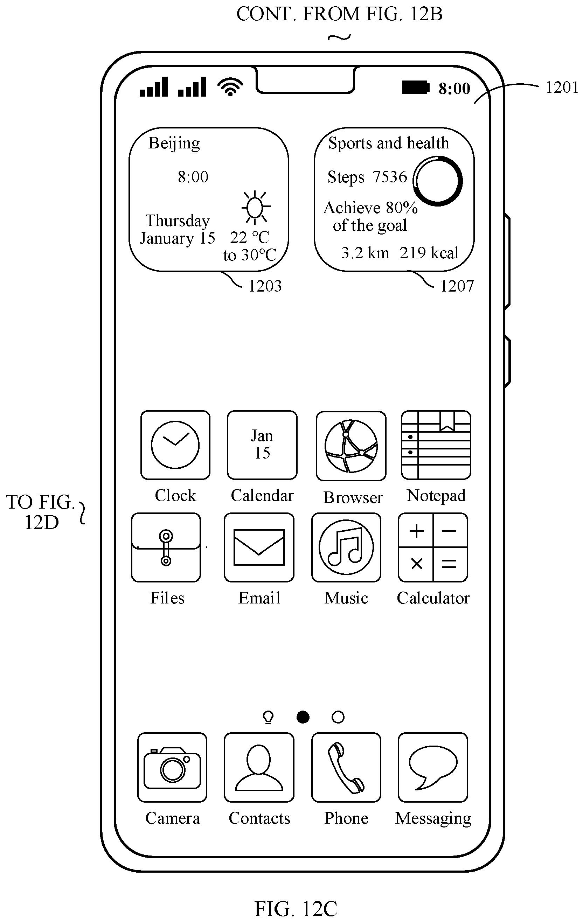

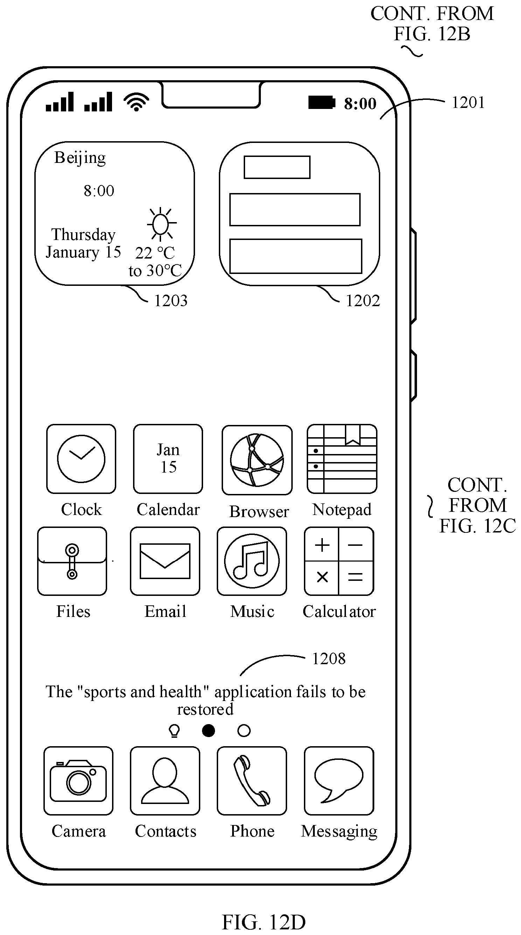

The mobile phone may receive a trigger operation (for example, a tap operation) performed by the user on the restore option 1206. In response to the trigger operation, the mobile phone may automatically reinstall the sports and health application, restore the placeholder card to the sports card, and display a first desktop 1201 shown in FIG. 12C. Compared with that on the first desktop shown in FIG. 12A, on the first desktop 1201 shown in FIG. 12C, a sports card 1207 is displayed in the second sub-area of the target area. In some possible cases, the mobile phone may not be able to install the sports and health application due to a poor network or the like. In this case, in response to the trigger operation performed by the user on the restore option 1206, the mobile phone displays restore failure reminder information 1208 shown in FIG. 12D, for example: The "sports and health" application fails to be restored.

The mobile phone may further receive a trigger operation (for example, a tap operation) performed by the user on the cancel option 1205. In response to the trigger operation, the mobile phone cancels displaying of the restoration pop-up window 1204, that is, displays the first desktop 1201 shown in FIG. 12A.

In this way, the user can trigger, in a convenient manner, the mobile phone to reinstall the uninstalled first system application and/or second system application when the first system application and/or the second system application are/is uninstalled, so that the mobile phone can normally display the corresponding basic card on the first desktop, thereby improving the use experience of the user.

In this embodiment of this application, to conveniently display notification information that meets a preset condition in all notification information to the user, after the user operates the mobile phone to set the YOYO suggestion tool on the first desktop, that is, after the mobile phone displays the first basic card in the first sub-area in the target area of the first desktop and the second basic card in the second sub-area in the target area, the desktop application of the mobile phone may receive notification information pushed by another application, and display notification information that meets the preset condition in the target area on the first desktop in the manner of a card. In other words, after S901, the information display method provided in embodiments of this application further includes the following S902 to S904.

The notification information that meets the preset condition may be obtained through determining by an artificial intelligence program (which may be referred to as an intelligent assistant) carried by the mobile phone. For example, the preset condition may be notification information corresponding to a current usage scenario of the mobile phone in all current notification information. The current usage scenario herein may be determined based on information such as a time and a position. For example, if the time is 10:00 am on a working weekday and the position is a specific office building, the usage scenario may be a work scenario. In this case, notification information that meets the current usage scenario of the mobile phone may be notification information of a work-related APP (for example, conference schedule information pushed by the calendar application). In another example, if the time is 5 pm and the position is an express pick-up point, the usage scenario may be an express pick-up scenario. In this case, notification information corresponding to the current usage scenario of the mobile phone may be pick-up notification information (for example, a pick-up code) for a specific shopping APP. In another example, if the time is 11:00 am, the position is a housing estate, the user books a 15:00 flight in the current day in advance in the travel application, and the user books a conference from 14:00 to 17:00 in the current day in advance in the calendar application or the conference application, notification information that meets the current usage scenario may include flight information pushed by the travel application and conference reminder information pushed by the calendar application (or the conference application).

In addition, in this embodiment of this application, after step S901 is performed, it may be considered that a card stack is in the target area. In this case, the card stack has only one layer, and this layer includes the first basic card and the second basic card. The first basic card may be considered to be in an area that corresponds to the first sub-area of the target area and that is at the layer to which the first basic card belongs (namely, the highest layer), and the second basic card may be considered to be in an area that corresponds to the first sub-area of the target area and that is at the layer to which the second basic card belongs (namely, the highest layer).

S902: When the first basic card and the second basic card are displayed in the target area of the first desktop, the mobile phone displays a first card in the target area of the first desktop if the mobile phone newly generates the first card.

The first card may be generated after the desktop application of the mobile phone receives notification information (namely, the first notification information in this application) that is pushed by another application on the mobile phone and that meets the current usage scenario of the mobile phone.

In this application, the first basic card and the second basic card are two cards displayed in an initial state when the user operates the mobile phone to establish the YOYO suggestion tool, and content displayed in the two cards may be considered as not being content that the user needs to view in the current scenario. Based on this, in this embodiment of this application, the desktop application of the mobile phone may determine that the first basic card and the second basic card are cards having the lowest priority in all the cards that need to be displayed, and this rule applies to subsequent embodiments. Therefore, when a target card is newly generated by the desktop application of the mobile phone, a priority of the card is definitely greater than those of the first basic card and the second basic card. In other words, the target card can be overlaid on the first basic card and/or the second basic card for a purpose of displaying the target card in the target area. Certainly, to enable the user to see the latest notification information or the latest generated target card in time, the desktop application of the mobile phone also needs to display the target card in the target area for the user to view.

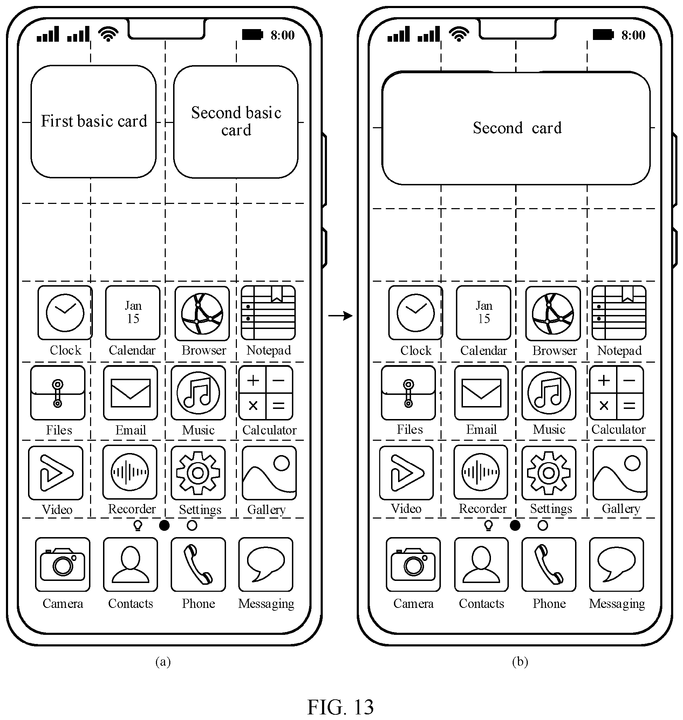

In a first implementation, if the mobile phone is a non-foldable mobile phone, as shown in (a) in FIG. 13, in the initial state (that is, the user triggers the mobile phone to set the YOYO suggestion tool on the first desktop), the first basic card is displayed in the first sub-area of the target area on the first desktop of the mobile phone, and the second basic card is displayed in the second sub-area of the target area. For example, the desktop application divides the first desktop into 4*6 grid cells, the target area occupies 4*2 cells, and the first basic card and the second basic card are 2*2 in size. After the desktop application of the mobile phone newly generates the first card, as shown in (b) in FIG. 13, the desktop application of the mobile phone may fully overlay the first card on the first basic card and the second basic card for the purpose of displaying the first card in the target area. The size of the first card is 4*2. In this case, there is a card stack (namely, the first card stack) formed by stacking the first basic card, the second basic card, and the first card in the target area. The card stack includes two layers, a bottom layer includes the first basic card and the second basic card, and a topmost layer includes the first card. The first basic card is in an area that is of the bottom layer and that corresponds to the first sub-area of the target area, the second basic card is in an area that is of the bottom layer and that corresponds to the second sub-area of the target area, and the first card is in an area that is of the top layer and that corresponds to the target area.

In this embodiment of this application, in the non-foldable mobile phone, there are at least three manners in which a plurality of cards in the target area of the first desktop are stacked to form a card stack: a first stacking manner, a second stacking manner, and a third stacking manner. Specific descriptions are as follows:

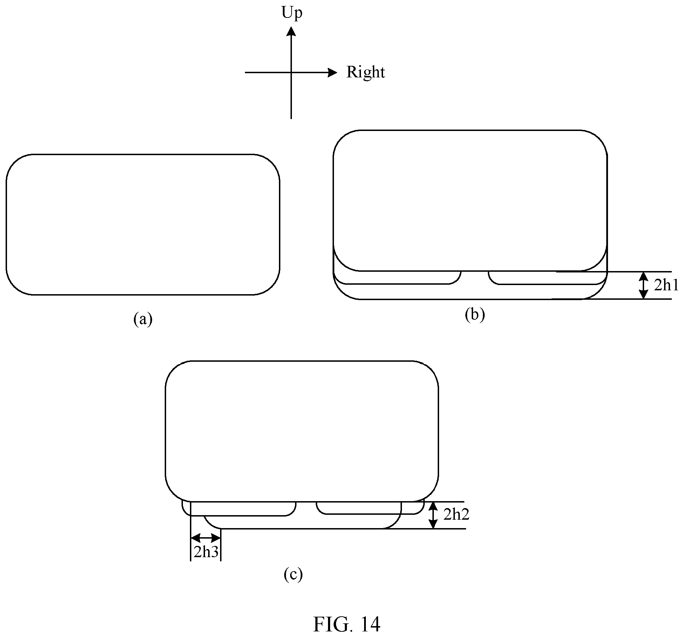

First stacking manner: As shown in (a) in FIG. 14, a stacking manner of the plurality of cards may be that cards at each layer except the bottom layer are fully overlaid on cards at a next layer. It should be noted that if there are two cards at a layer, there may be a gap between the two cards for convenience of the user to confirm that there are two cards. If there is only one card at a next layer, full overlaying herein may mean that the two cards plus the gap between the two cards are fully overlaid on the card at the next layer. Certainly, in practice, to improve impression of the user, if two cards are at the topmost layer of the card stack and one card is at the second layer, a part that is of the card at the second layer and that is exposed from the two cards may be hidden, or all cards except the card at the topmost layer of the card stack are hidden.

Second stacking manner: As shown in (b) in FIG. 14, the second stacking manner of the plurality of cards may be based on the first stacking manner, where except the cards at the topmost layer of the card stack, cards at each layer are translated downward by a first preset distance h1 as a whole with respect to cards at an upper layer thereof.

Third stacking manner: As shown in (c) in FIG. 14, the second stacking manner of the plurality of cards may be based on the first stacking manner, where except the cards at the topmost layer of the card stack, each card is scaled down based on a preset ratio with respect to a card at an upper layer thereof, translated downward by a second preset distance h2, and translated rightward by a third preset distance h3. Specifically, as shown in (c) in FIG. 14, a shape of the card stack formed in the third stacking manner may be center-axis symmetric.

In this embodiment of this application, the first stacking manner is used as a stacking manner of the cards in the card stack.

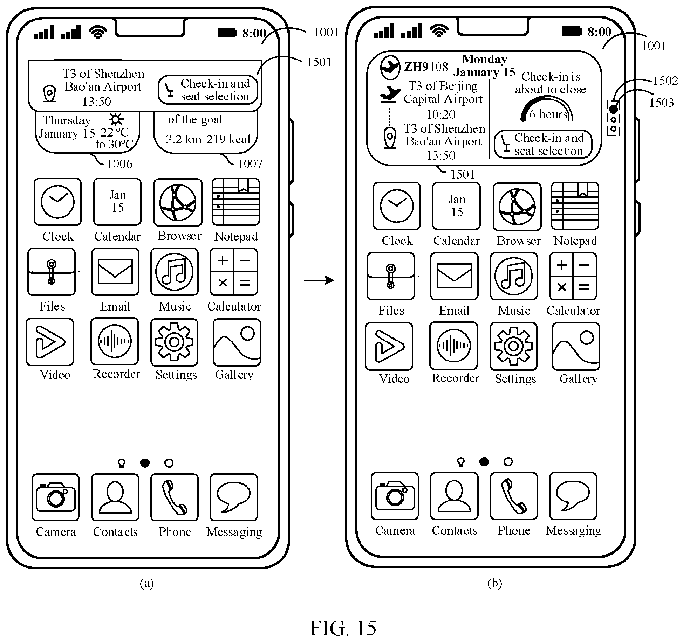

In this embodiment of this application, in a first implementation, the first card is overlaid on the first basic card and the second basic card, so that a display manner in the target area is gradually overlaying downward from the top of the target area. For example, the first basic card is a weather card, the second basic card is a sports card, and the first card is a flight card. With reference to the example shown in FIG. 10D, in a process in which the flight card is gradually overlaid on the weather card and the sports card from top to bottom, as shown in (a) in FIG. 15, the desktop application of the mobile phone may display a bottom-up part of the flight card 1501 and a bottom-up part of the weather card 1006 and the sports card 1007 in the target area of the first desktop. An up-down part of the weather card 1006 and the sports card 1007 is hidden, and the down-up part of the flight card 1501 is displayed in the target area. The down and up mentioned herein are referred to as opposite directions, a direction corresponding to the up may be specifically a direction from a lower side edge of the first desktop towards an upper side edge of the first desktop, and the direction is perpendicular to the lower side edge of the first desktop. This rule applies to subsequent similar scenarios. Details are not described below again.

In addition, to bring the user a sense that the weather card and the sports card are disappearing, as shown in (a) in FIG. 15, in a process in which the weather card 1006 and the sports card 1007 are overlaid by the flight card 1501, the desktop application of the mobile phone may control the weather card 1006 and the sports card 1007 to be gradually scaled down in a specific ratio. In addition, during scaling down, the desktop application of the mobile phone may also control the weather card 1006 and the sports card 1007 to gradually increase transparency of the weather card and the sports card.

Then, when the flight card 1501 is fully overlaid on the weather card 1006 and the sports card 1007, as shown in (b) in FIG. 15, the flight card 1501 is displayed in the target area on the first desktop of the mobile phone, and the weather card 1006 and the sports card 1007 are no longer displayed.

In some embodiments, as shown in (b) in FIG. 15, the desktop application of the mobile phone may also display a navigation bar 1502 around the card stack in the target area. There may be a plurality of navigation points 1503 in the navigation bar 1502. A quantity of navigation points 1503 may be the same as a quantity of layers in the card stack, each navigation point corresponding to one layer in the card stack, and a navigation point corresponding to a currently displayed layer of the card stack may be highlighted. In this way, the navigation bar 1502 may prompt the user how many layers the current card stack has, to indicate the user which layer is displayed in the current card stack.

For example, the navigation bar 1502 may be dynamically displayed or hidden around the card stack. For example, the desktop application may briefly flash (for example, display for 1s) the navigation bar 1502 when a new card is generated and added to the card stack. In another example, the desktop application may briefly flash the navigation bar 1502 when the quantity of cards in the card stack changes. In another example, the desktop application may briefly flash the navigation bar 1502 when the user switches from another display interface to the first desktop. In another example, the desktop application may briefly flash the navigation bar 1502 when switching the card displayed at the topmost layer of the card stack in response to a switch operation performed by the user. This is not specifically limited in embodiments of this application. The rule applies to subsequent embodiments.

Certainly, in practice, for the non-foldable mobile phone, an implementation process or an overlaying effect of overlaying the first card on the first basic card and the second basic card may alternatively be any other feasible manner. This is not specifically limited in this application.

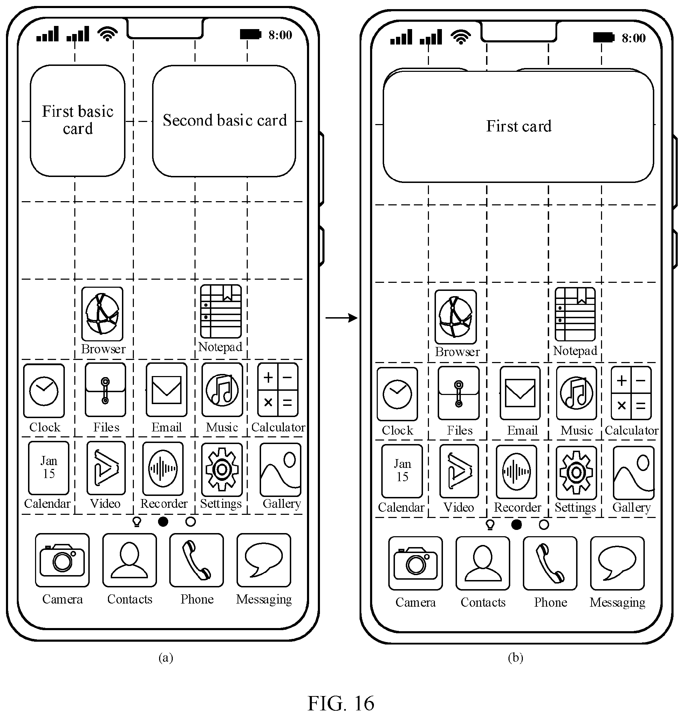

In a second implementation, if the mobile phone is a foldable mobile phone, and the first desktop is displayed by using an outer screen in a folded state, a specific implementation of displaying, by the desktop application of the mobile phone, the first basic card and the second basic card in the target area of the first desktop and the first card in the target area is similar to the implementation of the non-foldable mobile phone. With reference to the example shown in FIG. 13, a difference is that if the outer screen of the foldable mobile phone is divided into 5*6 cells by the desktop application, as shown in (a) in FIG. 16, the size of the first basic card may be 2*2, that is, the size of the first sub-area in which the first basic card is located is 2*2 cells; the size of the second basic card may be 3*2, that is, the size of the first sub-area in which the first basic card is located is 3*2 cells; and the target area may be 5*2 cells. After the desktop application of the mobile phone newly generates the first card, as shown in (b) in FIG. 16, the desktop application of the mobile phone may overlay the first card on the first basic card and the second basic card for the purpose of displaying the first card in the target area. The size of the first card is 5*2. In this case, the card stack that is formed by stacking the first basic card, the second basic card, and the first card and that is in the target area is the same as the card stack generated in the first implementation corresponding to FIG. 13.

In this embodiment of this application, when the foldable mobile phone is in the folded state, a manner in which a plurality of cards are stacked in the target area of the first desktop displayed on the outer screen to form a card stack is the same as that of the foldable mobile phone. Details are not described herein again. A possible difference between the two may be that the quantities of cells occupied by the target area in which the card stack is located are different. For example, the target area in the non-foldable mobile phone occupies 4*2 cells, and the target area on an outer screen of the foldable mobile phone in a folded state occupies 5*2 cells. Certainly, in practice, the user may change the division of the cells on the outer screen of the foldable mobile phone in the folded state to 4*6. In this case, the card stack displayed in the target area of the first desktop on the outer screen of the foldable mobile phone in the folded state has a stacking manner as the card stack displayed in the target area of the first desktop of the non-foldable mobile phone.

In this embodiment of this application, in a second implementation, the first card is overlaid on the first basic card and the second basic card, so that a display manner in the target area is gradually overlaying downward from the top of the target area. For a specific implementation thereof, refer to the related descriptions in FIG. 15 in the foregoing embodiments. Details are not described herein again. A difference between the two implementations lies that quantities of cells occupied by the target area may be different.

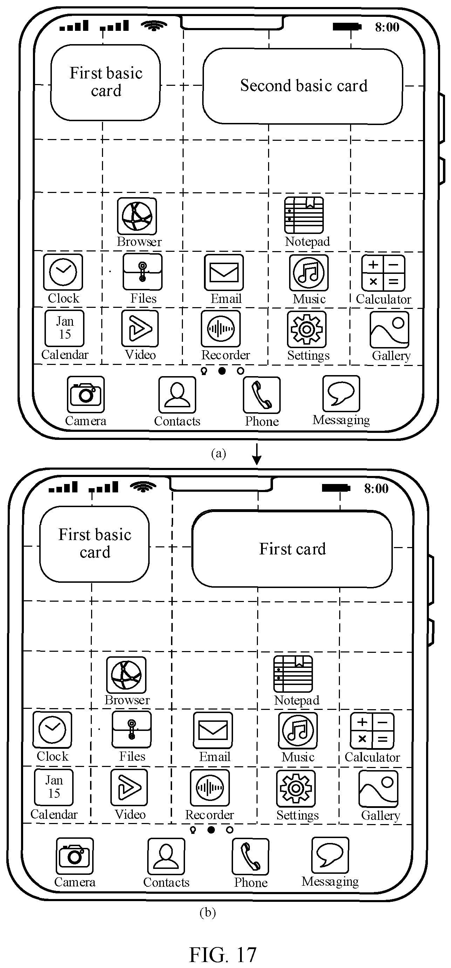

In a third implementation, if the mobile phone is a foldable mobile phone, and the first desktop is displayed by using an inner screen in an unfolded state, as shown in (a) in FIG. 17, in the initial state (that is, the user triggers the mobile phone to set the YOYO suggestion tool on the first desktop), the first basic card is displayed in the first sub-area of the target area on the first desktop of the mobile phone, and the second basic card is displayed in the second sub-area of the target area. For example, the desktop application divides the first desktop into 5*6 grid cells, the target area occupies 5*2 cells, a size of the first basic card is 2*2, and a size of the second basic card is 3*2. After the desktop application of the mobile phone newly generates the first card, because the inner screen of the foldable mobile phone in the unfolded state is much larger than the display of the non-foldable mobile phone and the outer screen of the foldable mobile phone, in this case, if the first card is directly overlaid on the first basic card and the second basic card, a length of the first card is pulled too long, and an impression of the user is bad. Based on this, as shown in (b) in FIG. 17, the desktop application of the mobile phone may overlay the first card on the second basic card for the purpose of displaying the first card in the target area (which may be specifically the second sub-area of the target area). The size of the first card is 3*2. Certainly, the first card may alternatively be overlaid on the first basic card in practice. This is not specifically limited in this application.

In this case, there is a card stack (namely, the first card stack) formed by stacking the first basic card, the second basic card, and the first card in the target area. The card stack includes two layers. The bottom layer includes the first basic card and the second basic card, the first basic card is in an area that is of the bottom layer and that corresponds to the first sub-area of the target area. The second basic card is in an area that is of the bottom layer and that corresponds to the second sub-area of the target area. The topmost layer includes the first card occupying an area corresponding to the second sub-area of the topmost layer.

In this embodiment of this application, in the unfolded state of the foldable mobile phone, there are at least three manners in which a plurality of cards in the target area of the first desktop on the inner screen are stacked to form a card stack: a first stacking manner, a second stacking manner, and a third stacking manner. Specific descriptions are as follows:

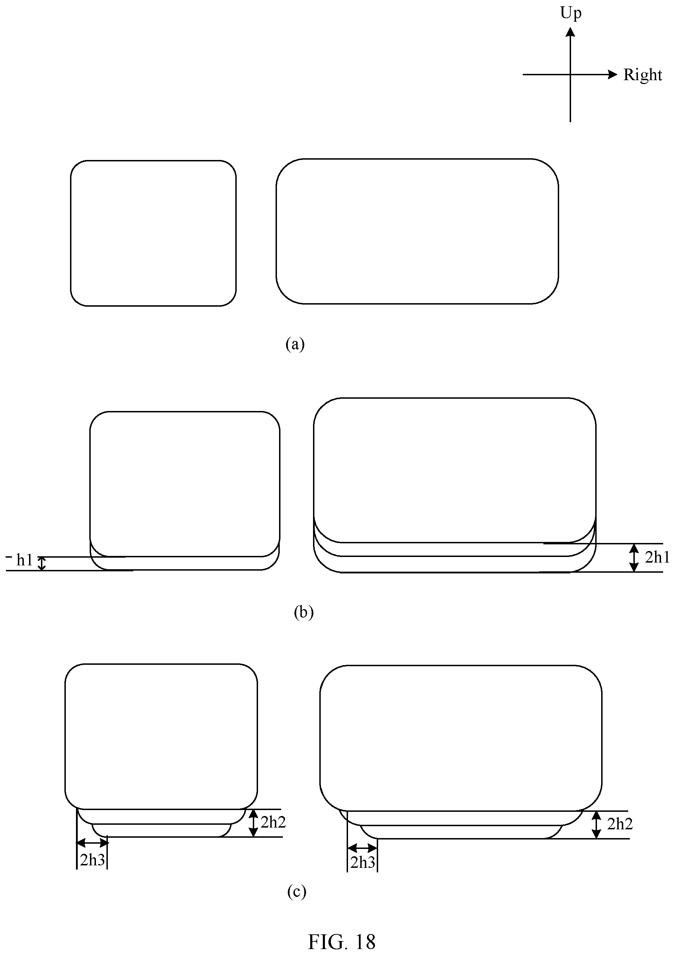

First stacking manner: As shown in (a) in FIG. 18, a stacking manner of the plurality of cards may be:

If there are two cards at a layer except for the bottom layer in the card stack, the layer is fully overlaid on a next layer.

In the card stack, in addition to the bottom layer, if there is a single card at a layer, the card is in an area that is of the layer and that corresponds to the second sub-area (or the first sub-area) of the target area, the single card may be overlaid on a part that is of a next layer and that corresponds to the second sub-area (or the first sub-area) of the target area, and an area that is of the next layer of the layer and that corresponds to the first sub-area (or the second sub-area) of the target area is not overlaid. In other words, if the layer is the topmost layer, an area that is of a next layer and that corresponds to the first sub-area of the target area is displayed. Certainly, in this case, if there is no card in the area that is of the next layer of the layer and that corresponds to the first sub-area of the target area, an area that is of a next layer of the next layer and that corresponds to the first sub-area of the target area is displayed. Subsequent similar cases are deduced by analogy.

Second stacking manner: As shown in (b) in FIG. 18, the second stacking manner of the plurality of cards may be based on the first stacking manner, where except the cards at the topmost layer of the card stack, cards at each layer are translated downward by a first preset distance h1 as a whole with respect to cards at an upper layer thereof.

Third stacking manner: As shown in (c) in FIG. 18, the second stacking manner of the plurality of cards may be based on the first stacking manner, where except the cards at the topmost layer of the card stack, each card is scaled down based on a preset ratio with respect to a card at an upper layer thereof, translated downward by a second preset distance h2, and translated rightward by a third preset distance h3. Specifically, as shown in (c) in FIG. 14, a shape of the card stack formed in the third stacking manner may be center-axis symmetric.

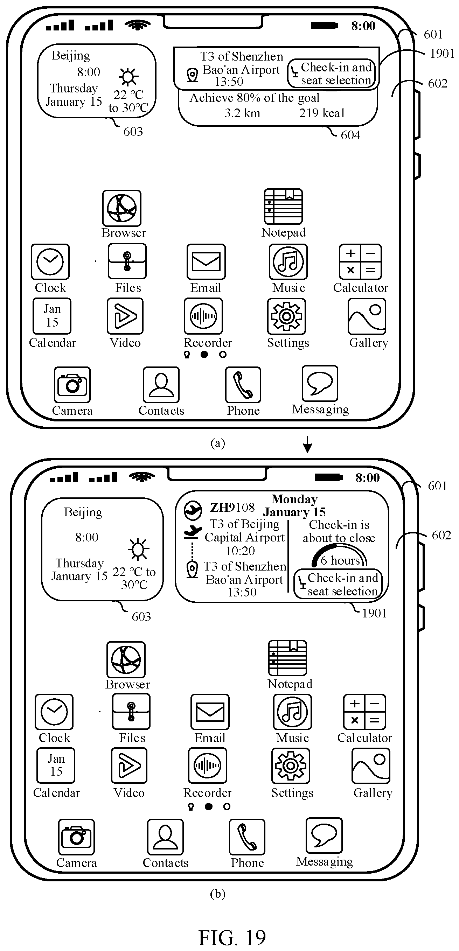

In this embodiment of this application, in a third implementation, the first card is overlaid on the second basic card, so that a display manner in the target area is gradually overlaying downward from the top of the second sub-area of the target area. For example, the first basic card is a weather card, the second basic card is a sports card, and the first card is a flight card. With reference to the example shown in (a) in FIG. 6, in a process in which the flight card is gradually overlaid on the weather card and the sports card from top to bottom, as shown in (a) in FIG. 19, the desktop application of the mobile phone may display the weather card 603 in the first sub-area of the target area on the first desktop. A bottom-up part of the flight card 1901 and a bottom-up part of the sports card 604 may be displayed in the second sub-area of the target area. The weather card 603 is fully displayed, a top-down part of the sports card 604 is hidden, and the bottom-up part of the flight card is displayed in the second sub-area of the target area.

In addition, to bring the user a sense that the sports card 604 is disappearing, as shown in (a) in FIG. 19, in a process in which the sports card 604 is overlaid by the flight card 1901, the desktop application of the mobile phone may control the sports card 604 to be gradually scaled down in a specific ratio. In addition, during scaling down, the desktop application of the mobile phone may also control the sports card 604 to gradually increase transparency of the sports card.

Then, when the flight card 1901 is fully overlaid on the sports card 604, as shown in (b) in FIG. 19, the weather card 603 is displayed in the first sub-area of the target area on the first desktop of the mobile phone, the flight card 1901 is displayed in the second sub-area of the target area, and the sports card 604 is no longer displayed.

Certainly, in practice, for the unfolded state of the foldable mobile phone, an implementation process or an overlaying effect of overlaying the first card on the second basic card may alternatively be any other feasible manner. This is not specifically limited in this application.

In this embodiment of this application, when the desktop application generates two cards having a same priority and having a higher priority than the cards already in the card stack in the target area, if the desktop application randomly decides to display one of the cards first, that is, to place one of the cards at the top layer of the card stack in the target area, the user may miss schedule information corresponding to the other card. This reduces use experience of the user. In addition, in some scenarios, a newly generated card with a lower priority of the mobile phone needs to be placed at a layer other than the top layer of the card stack based on the priority, or a newly generated card with a higher priority needs to be placed at the top layer of the card stack based on the priority, but notification information displayed by the card may be related to the notification information currently displayed by the card (for example, the first card) at the top layer of the card stack. For example, if the desktop application of the mobile phone currently displays the flight card in the target area and currently newly generates a health code card with a lower priority, the smart assistant of the mobile phone may determine that the user necessarily needs to use the health code card when entering the airport. Therefore, the desktop application is informed that the flight card and the health code card are associated. In this case, for the purpose of improving user experience, the desktop application also needs to display the card at the topmost layer, that is, display the card in the target area. Based on this, S903 is performed after S902.

S903: When the first card is displayed in the target area of the first desktop, if a second card is newly generated by the mobile phone, and the second card and the first card are in a parallel association or a subordinate association, the mobile phone displays the second card in the first sub-area of the target area of the first desktop, and displays the second card in the second sub-area of the target area.

The second card is generated when the mobile phone receives new notification information (namely, second notification information in this application), and the second card is used to display the new notification information. The parallel association means that priorities are the same, and the subordinate association means that notification messages displayed by the two cards are associated.

In a first implementation, if the mobile phone is a non-foldable mobile phone, the process of displaying the second card in the target area of the first desktop by the desktop application of the mobile phone in S903 may be that the first card is gradually scaled down to a same size as the second basic card and displayed in the second sub-area of the target area. At the same time, the second card is gradually displayed in the first sub-area of the target area (that is, a part that is of the second card and that is displayed in the first area of the target area is scaled up by a preset step). When the mobile phone scales down the first card to be the same as the second basic card and displays the first card in the second sub-area of the target area (that is, at a layer at which the card is located and corresponding to the second sub-area of the target area), the second card is fully displayed in the first sub-area of the target area.

In this embodiment of this application, if the priority of the card newly generated by the desktop application of the mobile phone is in a parallel association or a subordinate association with that of the existing card, to facilitate the user determining a generation sequence, whenever this case occurs, an existing card may be placed in an area that is of a layer of the card stack in which the card is located and that corresponds to the second sub-area of the target area, and the newly generated card may be placed in an area that is of a layer of the card stack in which the card is located and that corresponds to the first sub-area of the target area. The sub-area of the target area corresponding to the area in which the existing card is located and the sub-area of the target area corresponding to the area in which the newly generated card is located can be interchanged. The rule applies to subsequent embodiments. Certainly, in this application, the second sub-area may be a part of area that is determined by statistics in advance and in which the user looks at the electronic device with a highest frequency.

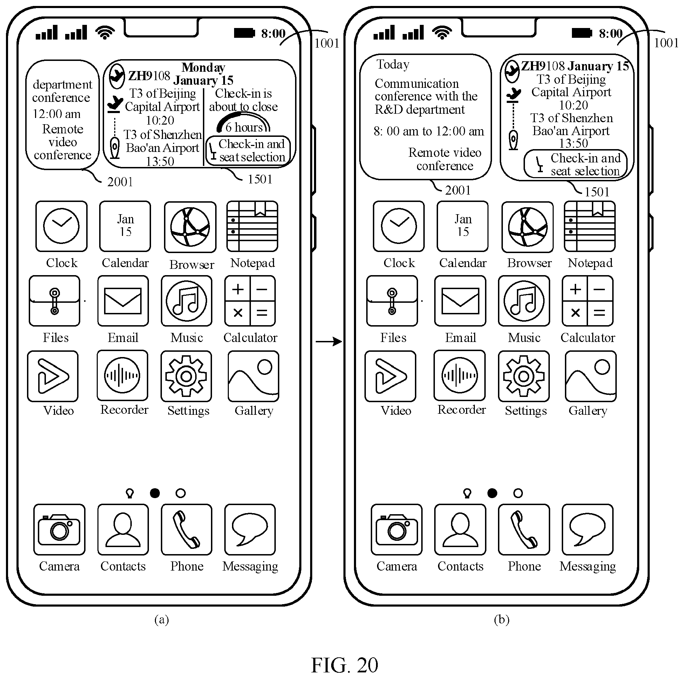

For example, the first card is the flight card, and the second card is a conference reminder card in a parallel association with the flight card. With reference to the example shown in (b) in FIG. 15, in a process in which the mobile phone gradually displays the second card in the target area of the first desktop, as shown in (a) in FIG. 20, the desktop application of the mobile phone may display, in the target area of the first desktop, a flight card 1501 that is partially scaled down to the right (if the first card is finally scaled down and displayed in the first sub-area, scaling down to the left is used herein) and a right-left part of the conference reminder card 2001. Because an area in which flight information can be displayed in the scaled-down flight card 1501 is reduced, a style and content of the flight information displayed in the scaled-down flight card 1501 has a specific change. Based on this, as shown in (a) in FIG. 20, as the flight card 1501 is gradually scaled down to the right, the flight information displayed by the flight card 1501 is gradually changed from content and a style before scaling down to content and a style after scaling down The left and right mentioned herein are referred to as opposite directions, a direction corresponding to the left may be specifically a direction from a right side edge of the first desktop towards a left side edge of the first desktop, and the direction is perpendicular to the left side edge and the right side edge of the first desktop. This rule applies to subsequent similar scenarios. Details are not described below again.

Then, when the flight card 1501 is scaled down to the right and the conference reminder card 2001 is displayed, as shown in (b) in FIG. 20, the conference reminder card 2001 is displayed in the first sub-area of the target area on the first desktop of the mobile phone, and the flight card 1501 is displayed in the second sub-area of the target area.

In this embodiment of this application, if the card newly generated by the desktop application of the mobile phone is in a subordinate association with the existing cards (for example, the second card and the first card), the existing cards may be determined as primary cards, and the newly generated card may be determined as a secondary card. To facilitate the user determining a primary-secondary relationship, whenever this case occurs, the primary card may be placed in an area that is of a layer of the card stack in which the card is located and that corresponds to the second sub-area of the target area, and the secondary card may be placed in an area that is of a layer of the card stack in which the card is located and that corresponds to the first sub-area of the target area. The sub-area of the target area corresponding to the area in which the primary card is located and the sub-area of the target area corresponding to the area in which the secondary card is located can be interchanged. The rule applies to subsequent embodiments.

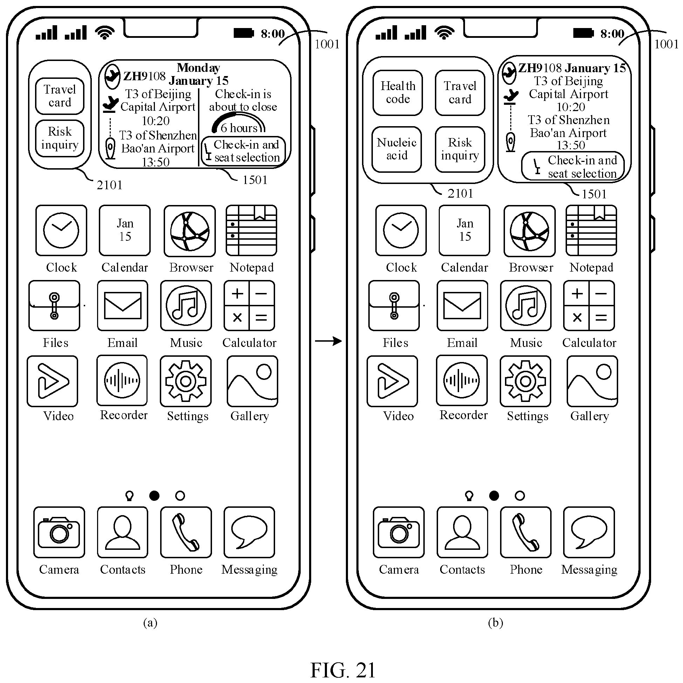

Based on this, if the second card is a card that is in a subordinate association with the first card, a display implementation of the second card in the target area is similar to the implementation shown in FIG. 20. For example, the first card is the flight card, and the second card is the health code card whose display content is associated with the display content of the flight card. With reference to the example shown in (b) in FIG. 15, in a process in which the mobile phone gradually displays the second card in the target area of the first desktop, the first desktop may be as shown in (a) in FIG. 21, and the first desktop on which the second card is finally displayed may be as shown in (b) in FIG. 21. A difference between FIG. 21 and FIG. 20 is that the second card in FIG. 21 is a health code card 2101, and the second card in FIG. 20 is a conference reminder card 2001.

Certainly, in practice, for a non-foldable mobile phone, an implementation process or animation of gradually scaling down the first card and gradually displaying the second card in the target area may alternatively be any other feasible manner. This is not specifically limited in this application.

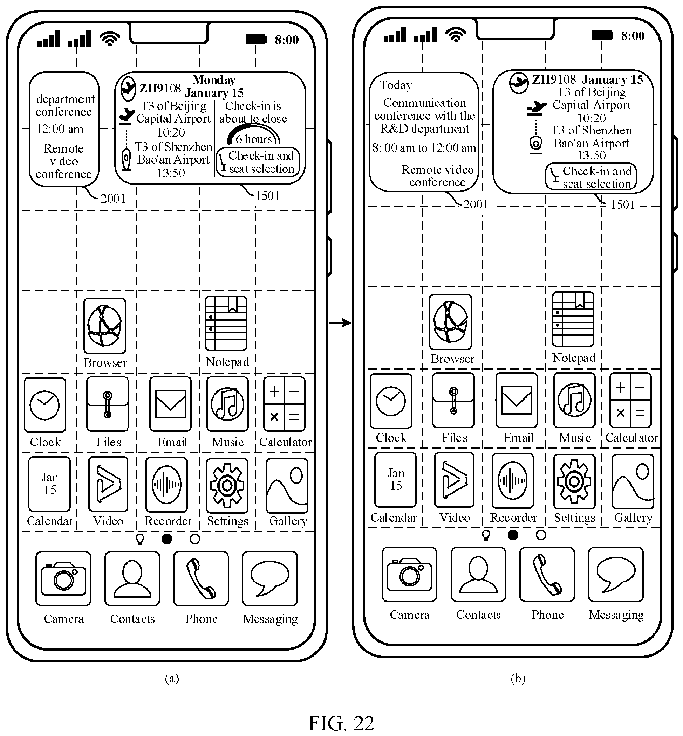

In a second implementation, if the mobile phone is a foldable mobile phone, and the first desktop is displayed by using an outer screen in a folded state, an implementation process in which the desktop application of the mobile phone changes from displaying the first card to displaying the first card and the second card in the target area of the first desktop is similar to that of the non-foldable mobile phone. With reference to the example shown in FIG. 20, a difference is that if the outer screen of the foldable mobile phone is divided into 5*6 cells by the desktop application, as shown in (a) in FIG. 22, the target area occupied in the process in which the flight card 1501 (namely, the first card) is gradually scaled down and the conference reminder card 2001 is gradually displayed is 5*2 cells. After the second card is displayed, as shown in (b) in FIG. 22, a size of the flight card 1501 is 3*2. In other words, the second sub-area in which the flight card is located occupies 3*2 cells. A size of the conference reminder card 2001 is 2*2. In other words, the first sub-area in which the flight card is located occupies 2*2 cells.

In a third implementation, if the mobile phone is a foldable mobile phone, and the first desktop is displayed by using an inner screen in an unfolded state, a process in which the desktop application of the mobile phone displays the second card in the target area of the first desktop in S903 may be gradually overlaying the second card on the first basic card in the first sub-area of the target area.

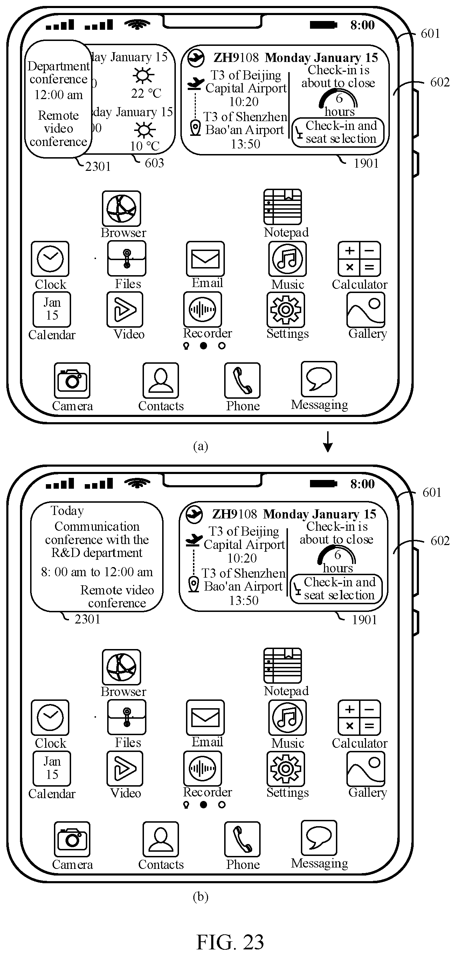

For example, the first basic card is a weather card, the second basic card is a sports card, the first card is a flight card, and the second card is a conference reminder card that is in a parallel association with the flight card. With reference to the example shown in (b) in FIG. 19, in a process in which the mobile phone gradually displays the second card in the target area of the first desktop, as shown in (a) in FIG. 23, the desktop application of the mobile phone may display a right-left part of the conference reminder card 2301 and a right-left part of the weather card 603 in the first sub-area in the target area of the first desktop. The flight card 1901 is fully displayed in the second sub-area of the target area, a left-right part of the weather card is hidden, and the right-left part of the conference reminder card 2301 is displayed in the first sub-area of the target area.

In addition, to bring the user a sense that the weather card 603 is disappearing, as shown in (a) in FIG. 23, in a process in which the weather card 603 is overlaid by the conference reminder card 2301, the desktop application of the mobile phone may control the weather card 603 to be gradually scaled down in a specific ratio. In addition, during scaling down, the desktop application of the mobile phone may also control the sports card 604 to gradually increase transparency of the sports card.

Then, when the conference reminder card 2301 is fully overlaid on the weather card 603 to be fully displayed in the first sub-area of the target area, as shown in (b) in FIG. 23, the conference reminder card 2301 is displayed in the first sub-area of the target area on the first desktop of the mobile phone, the flight card 1901 is displayed in the second sub-area of the target area, and the weather card 603 is no longer displayed.

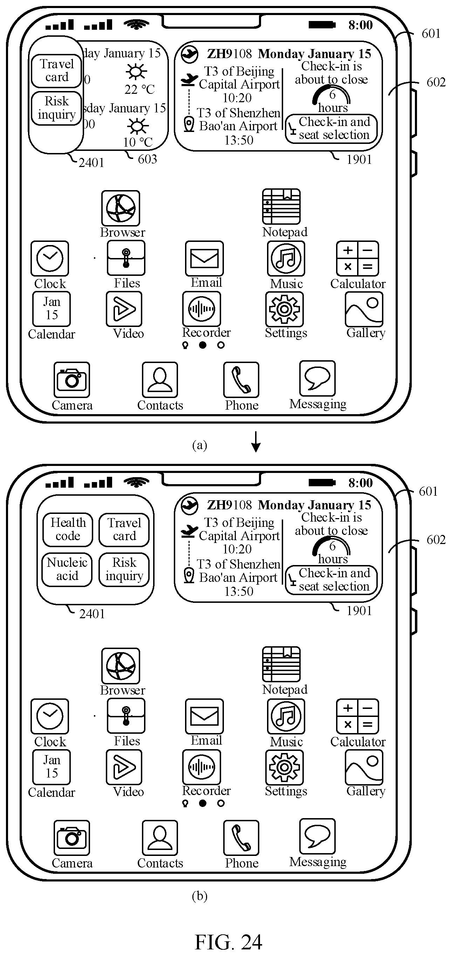

If the second card is a card that is in a subordinate association with the first card, a display implementation of the second card in the target area is similar to the implementation shown in FIG. 20. For example, the first card is the flight card, and the second card is the health code card whose display content is associated with the display content of the flight card. With reference to the example shown in (b) in FIG. 19, in a process in which the mobile phone gradually displays the second card in the first sub-area in the target area of the first desktop, the first desktop may be as shown in (a) in FIG. 24, and the first desktop on which the second card is finally displayed may be as shown in (b) in FIG. 24. A difference between FIG. 24 and FIG. 23 is that the second card in FIG. 24 is a health code card 2401, and the second card in FIG. 23 is a conference reminder card 2301.

Certainly, in practice, for the foldable mobile phone, an implementation process or animation of gradually overlaying the first card on the first basic card to gradually display the first card in the first sub-area in the target area may alternatively be any other feasible manner. This is not specifically limited in this application.

After S903 is performed, the card stack (namely, a second card stack) formed by stacking the first basic card, the second basic card, the first card, and the second card is in the target area. The card stack includes two layers, the bottom layer includes the first basic card and the second basic card, the topmost layer includes the first card and the second card, the first card is overlaid on the second basic card, and the second cards is overlaid on the first basic card. The first basic card is in an area that is of the bottom layer and that corresponds to the first sub-area of the target area, the second basic card is in an area that is of the bottom layer and that corresponds to the second sub-area of the target area, the first card is in an area that is of the top layer and that corresponds to the second sub-area of the target area, and the second card is in an area that is of the top layer and that corresponds to the first sub-area of the target area.

In this embodiment of this application, if the desktop application of the mobile phone newly generates a card (which may be referred to as a second to-be-displayed card) that is in a parallel association with a card (which may be referred to as a first to-be-displayed card) that exist separately at a layer of the card stack in the target area, the first to-be-displayed card may be used as the first card, and the second to-be-displayed card may be used as the second card. Steps similar to those in the foregoing embodiments may be performed, so that the first to-be-displayed card and the second to-be-displayed card exist at the same layer of the card stack. Similarly, if the desktop application of the mobile phone newly generates a card (which may be referred to as a second to-be-associated card) that is in a subordinate association with a card (which may be referred to as a first to-be-associated card) that exist separately at a layer of the card stack in the target area, the first to-be-associated card may be used as the first card, and the second to-be-associated card may be used as the second card. Steps similar to those in the foregoing embodiments may be performed, so that the first to-be-associated card and the second to-be-associated card exist at the same layer of the card stack.

In addition, if the desktop application of the mobile phone newly generates a plurality of first to-be-displayed cards, one may be randomly selected as the second card and enabled to exist at the same layer in the card stack as the second to-be-displayed card with reference to the steps in the foregoing embodiments. In addition, the remaining first to-be-displayed cards are combined in pairs (if a quantity is less than 1, no combination is performed), and after at least one pair of the combined cards is sorted in a random sequence, the cards are placed below and adjacent to a layer of the first to-be-displayed card in the card stack based on a predetermined sequence. In addition, an uncombined pending card in the remaining first to-be-displayed card are inserted between any two layers occupied by at least one pair of cards. Then, if a single optional card at a specific layer in the card stack has a same priority as the pending card, the optional card may be placed at the same layer in the card stack as the pending card according to the steps in the foregoing embodiments.

If the desktop application of the mobile phone newly generates a plurality of first to-be-associated cards, a card with a highest priority may be used as the second card and enabled to exist at the same layer in the card stack as the second to-be-associated card with reference to the steps in the foregoing embodiments. In addition, the remaining first to-be-associated cards are placed in the card stack based on priorities. Then, if notification information displayed by a single optional card at a specific layer in the card stack is associated with notification information displayed by the first remaining to-be-associated card, the same steps are performed. That the remaining first to-be-associated cards are placed in the card stack based on priorities may be specifically performing stacking after sorting priorities of the remaining first to-be-associated cards and priorities of the existing layers of the card stack, where a lower priority indicates a lower layer. A priority of a specific layer may be a largest priority in priorities of all cards included at the layer.

S904 is performed after S901 for a same reason that S903 is performed after S902.

S904: When the first basic card and the second basic card are displayed in the target area of the first desktop, if the mobile phone newly generates a third card and a fourth card, and the third card and the fourth card are in a parallel association or a subordinate association, the mobile phone displays the third card and the fourth card in the target area of the first desktop.

The third card and the fourth card are generated based on two new pieces of notification information received by the mobile phone. The third card corresponds to third notification information, and is used to display the third notification information. The fourth card corresponds to fourth notification information, and is used to display the fourth notification information.

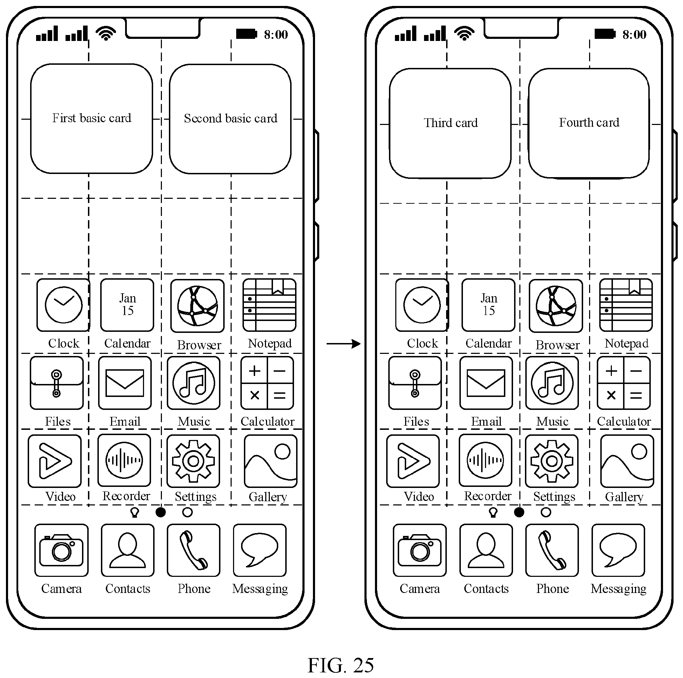

In an implementation, if the mobile phone is a non-foldable mobile phone, the first desktop of the mobile phone after S901 may be as shown in (a) in FIG. 13. After the desktop application of the mobile phone generates the third card and the fourth card, as shown in FIG. 25, the desktop application of the mobile phone may fully overlay the third card on the first basic card, that is, display the third card in the first sub-area of the target area; and fully overlay the fourth card on the second basic card, that is, display the fourth card in the second sub-area of the target area. In this way, the third card and the fourth card are displayed in the target area. In this case, there is a card stack formed by stacking the first basic card, the second basic card, the third card, and the fourth card in the target area. The card stack includes two layers, a bottom layer includes the first basic card and the second basic card, and a topmost layer includes the third card and the fourth card. The third card is fully overlaid on the first basic card, and the fourth card is fully overlaid on the second basic card.

It should be noted that in this embodiment of this application, when the desktop application of the mobile phone newly generates two cards (for example, the third card and the fourth card) that are in a subordinate association, a primary-secondary relationship between the two is determined. For example, a card with a higher priority is determined as a primary card, and a card with a lower priority is determined as a secondary card. To facilitate the user learning of the primary-secondary relationship between the two cards that are in the subordinate association, the primary card may be placed in an area that is of a layer of the card stack in which the card is located and that corresponds to the second sub-area of the target area, and the secondary card may be placed in an area that is of a layer of the card stack in which the card is located and that corresponds to the first sub-area of the target area. For example, as shown in FIG. 25, as a secondary card, the third card may be placed in an area that is of the topmost layer of the card stack and that corresponds to the first sub-area of the target area (which may be understood as that the third card is displayed in the first sub-area of the target area), and as a primary card, the fourth card may be placed in an area that is of the topmost layer of the card stack and that corresponds to the second sub-area of the target area (which may be understood as that the fourth card is displayed in the second sub-area of the target area). The sub-area of the target area corresponding to the area in which the primary card is located and the sub-area of the target area corresponding to the area in which the secondary card is located can be interchanged. The rule applies to subsequent embodiments.

If the third card and the fourth card are in a parallel association, as shown in FIG. 25, the third card may be overlaid on the first basic card and the fourth card may be overlaid on the second basic card. Alternatively, the fourth card may be overlaid on the first basic card and the third card may be overlaid on the second basic card.

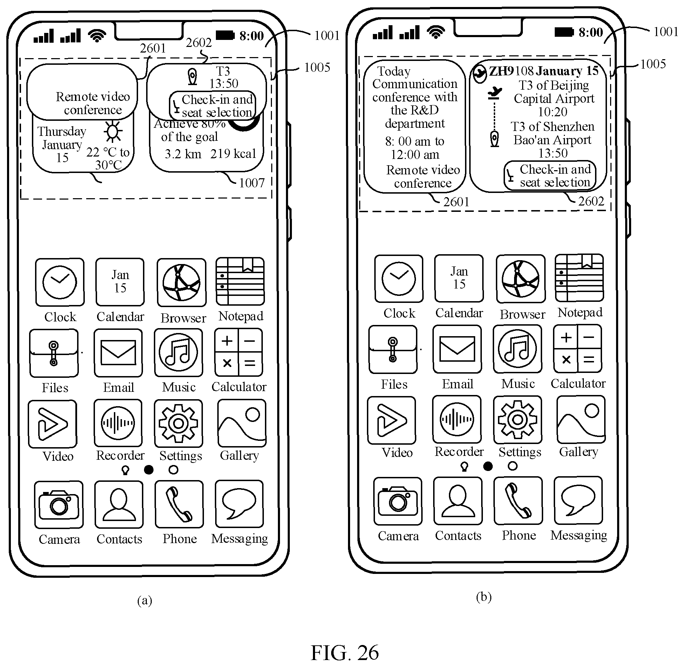

In this embodiment of this application, displaying the third card and the fourth card in the target area may be that gradually overlaying the third card on the first basic card from top to bottom in the first sub-area of the target area, and gradually overlaying the third card on the second basic card from top to bottom in the second sub-area of the target area. For example, with reference to the example shown in FIG. 10D, the first basic card is a weather card, the second basic card is a sports card, the third card is a conference reminder card, and the fourth card is a flight card. In a process in which the conference reminder card is gradually overlaid on the weather card and the flight card is gradually overlaid on the sports card, as shown in (a) in FIG. 26, the desktop application of the mobile phone may display a bottom-up part of the conference reminder card 2601 and a bottom-up part of the weather card 1006 in the first sub-area in the target area of the first desktop, and display a bottom-up part of the flight card 2602 and a bottom-up part of the sports card 1007 in the second sub-area in the target area of the first desktop. An up-down part of the weather card 1006 and the sports card 1007 is hidden, and the down-up part of conference reminder card 2601 and the flight card 2602 is displayed in the target area.

In addition, to bring the user a sense that the weather card and the sports card are disappearing, as shown in (a) in FIG. 26, in a process in which the weather card 1006 and the sports card 1007 are overlaid, the desktop application of the mobile phone may control the weather card 1006 and the sports card 1007 to be gradually scaled down in a specific ratio. In addition, during scaling down, the desktop application of the mobile phone may also control the weather card 1006 and the sports card 1007 to gradually increase transparency of the weather card and the sports card.

Then, when the conference reminder card 2601 is fully overlaid on the weather card 1006 and the flight card 2602 is fully overlaid on the sports card 1007, as shown in (b) in FIG. 26, the conference reminder card 2601 is displayed in the first sub-area of the target area on the first desktop of the mobile phone, the flight card 2602 is displayed in the second sub-area of the target area, and the weather card 1006 and the sports card 1007 are no longer displayed.

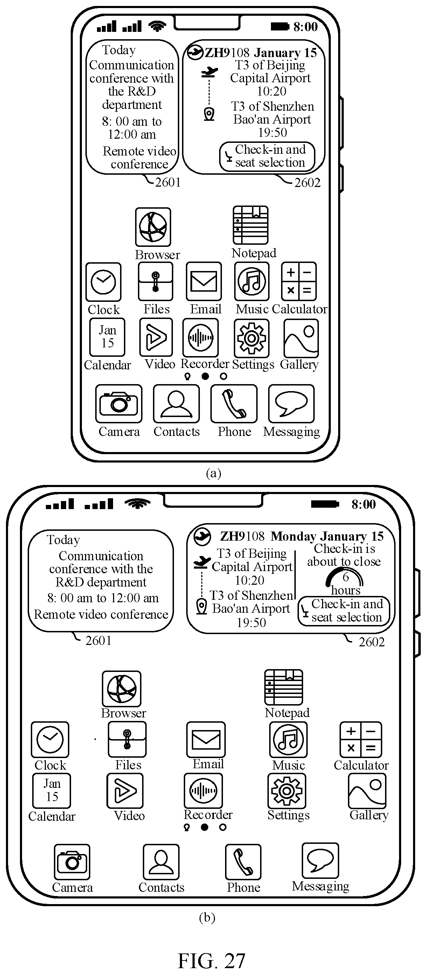

In the example shown in (b) in FIG. 26, an example in which the mobile phone is a non-foldable mobile phone is used. When the mobile phone is a foldable mobile phone, the first desktop is displayed by using an outer screen in a folded state, and the first desktop is displayed by using an inner screen in an unfolded state, an implementation of S904 is similar to the example shown in FIG. 25, and differences are that cells occupied by the target area are different and sizes of the corresponding third card and fourth card are different. For example, with reference to the example shown in (b) in FIG. 26, if the mobile phone is a foldable mobile phone and the first desktop is displayed by using an outer screen in a folded state, the third card and the fourth card may be displayed as shown in (a) in FIG. 27. In another example, with reference to the example shown in (b) in FIG. 26, if the mobile phone is a foldable mobile phone and the first desktop is displayed by using an inner screen in an unfolded state, the third card and the fourth card may be displayed as shown in (b) in FIG. 27.

After S902, when the mobile phone displays the first card in the target area of the first desktop, if the mobile phone newly generates a card 1 and there is no parallel association and no subordinate association between the card 1 and the first card. The desktop application of the mobile phone places the card 1 into the card stack in the target area based on a priority of the card 1.

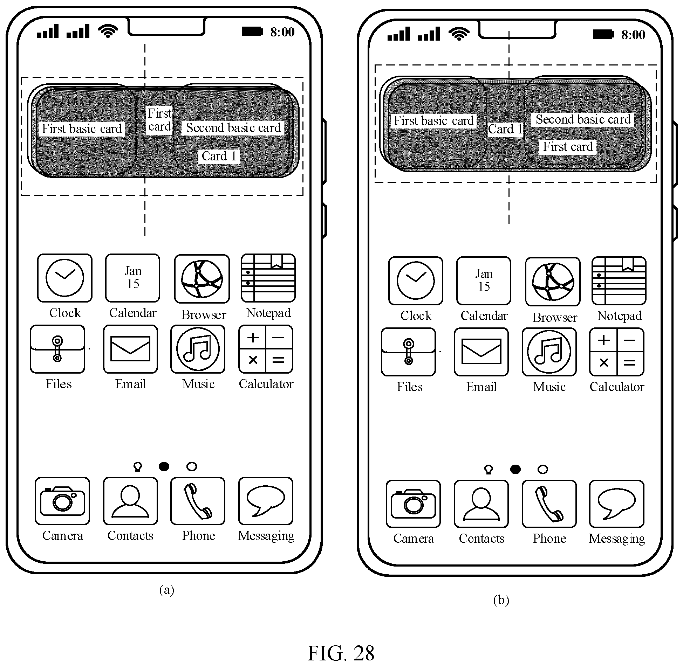

A non-foldable mobile phone and a folded state of a foldable mobile phone are used as examples. If the priority of the card 1 is greater than the priorities of all the layers in the card stack, as shown in (a) in FIG. 28, the card 1 may be overlaid on the first card, to be displayed in the target area. A priority of a layer in the card stack is a highest priority in priorities of all cards at the layer. If the priority of the card 1 is not greater than the priorities of all the layers in the card stack, the card 1 is inserted between a first layer and a second layer. The first layer and the second layer are two layers that are adjacent before the card 1 is inserted, the first layer is below the second layer, a priority of the first layer is less than that of the card 1, and a priority of the second layer is greater than that of the card 1. Herein, the first layer may be a layer at which the first basic card and the second basic card are located, the second layer may be a layer at which the first card is located, and a finally formed card stack may be as shown in (b) in FIG. 28. For a specific implementation process of inserting the card 1 into the card stack, refer to the example shown in FIG. 15 in the foregoing embodiments. Details are not described herein again.

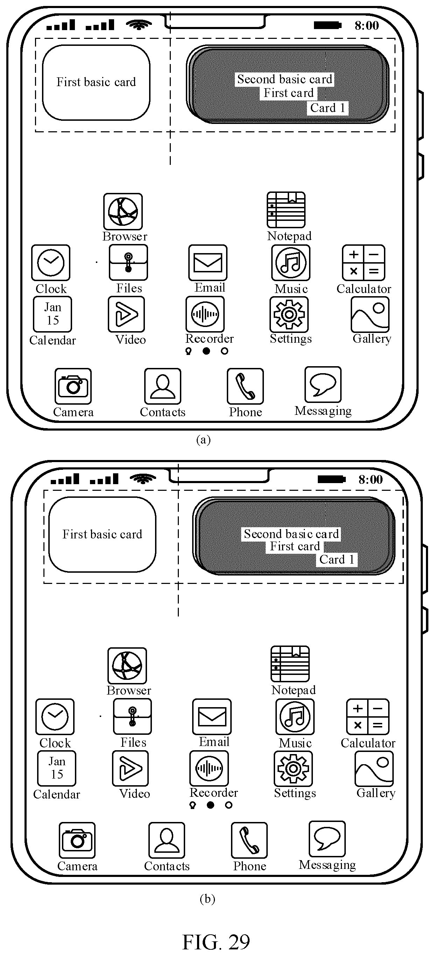

In another example, the first desktop is displayed by using an inner screen when the foldable mobile phone is in an unfolded state. If the priority of the card 1 is greater than the priorities of all the layers in the card stack, as shown in (a) in FIG. 29, the card 1 may be overlaid on the first card, to be displayed in the second sub-area of the target area. If the priority of the card 1 is not greater than the priorities of all the layers in the card stack, the card 1 is inserted a part that is between a first layer and a second layer and that corresponds to the second sub-area of the target area. The first layer may be a layer at which the first basic card and the second basic card are located, the second layer may be a layer at which the first card is located, and a finally formed card stack may be as shown in (b) in FIG. 29. The card 1 is between the second basic card and the first card, and the card 1 is fully overlaid on the second basic card. For a specific implementation process of inserting the card 1 into the card stack, refer to the example shown in FIG. 19 in the foregoing embodiments. Details are not described herein again.

A subsequent similar scenario in which the desktop application of the mobile phone newly generates a card has a similar processing manner.

After S902, when the mobile phone displays the first card in the target area of the first desktop, if the mobile phone newly generates two cards (which may be referred to as a card pair, where the two included cards may be a card 2 and a card 3) that are in a parallel association or in a subordinate association, the desktop application of the mobile phone places the card pair into the card stack in the target area based on a priority of the card 2 or the card 3.

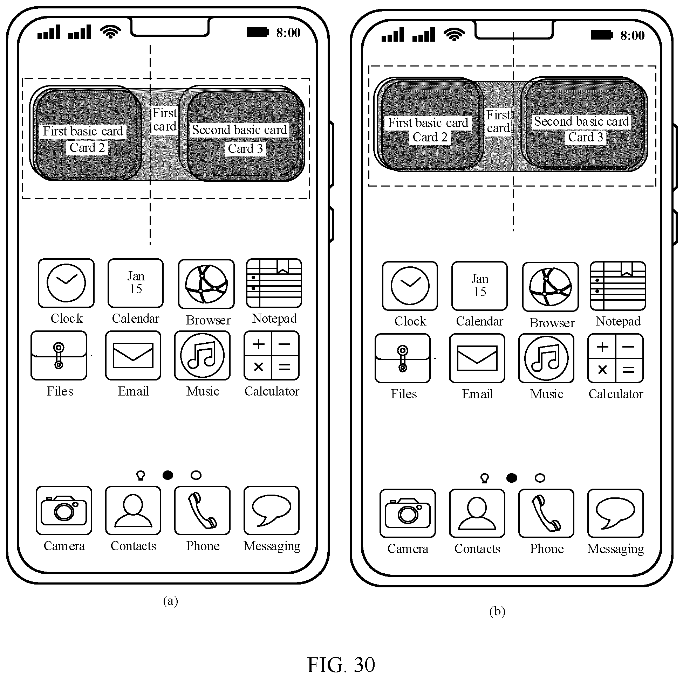

A non-foldable mobile phone and a folded state of a foldable mobile phone are used as examples. If the priority of the card 2 is greater than the priorities of all the layers in the card stack, as shown in (a) in FIG. 30, the card pair may be overlaid on the first card, to be displayed in the target area. If the priority of the card 2 is not greater than the priorities of all the layers in the card stack, the card pair is inserted between a first layer and a second layer. The first layer and the second layer are two layers that are adjacent before the card pair is inserted, the first layer is below the second layer, a priority of the first layer is less than that of the card 2, and a priority of the second layer is greater than that of the card 2. Herein, the first layer may be a layer at which the first basic card and the second basic card are located, the second layer may be a layer at which the first card is located, and a finally formed card stack may be as shown in (b) in FIG. 30. The card 2 is overlaid on the first basic card (full overlaying in practice, where the description herein only shows a layer situation, and this rule applies to subsequent similar schematic diagrams), and the card 3 is overlaid on the second basic card (full overlaying in practice, where the description herein only shows a layer situation, and this rule applies to subsequent similar schematic diagrams). For a specific implementation process of inserting the card pair into the card stack, refer to the example shown in FIG. 15 in the foregoing embodiments. Details are not described herein again. A difference between the two processes lies in that two cards herein are gradually overlaid on one card. In addition, if there is a subordinate association between the card 2 and the card 3, for ease of user identification, in this application, the primary card is placed in an area in the card stack that corresponds to the second sub-area of the target area. In this case, the card 3 may be determined as a primary card in the two cards, and the card 2 may be determined as a secondary card. The rule applies to subsequent similar embodiments.

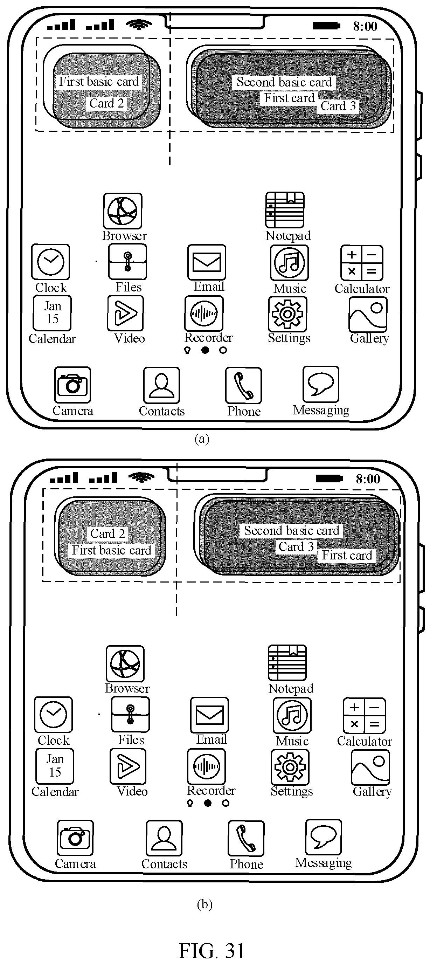

In another example, the first desktop is displayed by using an inner screen when the foldable mobile phone is in an unfolded state. If the priority of the card 2 is greater than the priorities of all the layers in the card stack, as shown in (a) in FIG. 31, the card 2 may be overlaid on the first basic card, to be displayed in the first sub-area of the target area, and the card 3 may be overlaid on the first card, to be displayed in the second sub-area of the target area. Certainly, the card 2 and the card 3 are at the same layer in the card stack herein.

If the priority of the card 2 is not greater than the priorities of all the layers in the card stack, the card pair is inserted a part that is between a first layer and a second layer and that corresponds to the second sub-area of the target area. The first layer may be a layer at which the first basic card and the second basic card are located, the second layer may be a layer at which the first card is located, and theoretically, a finally formed card stack may be as shown in (b) in FIG. 31. The card 2 is overlaid on the first basic card, and the card 3 is overlaid on the second basic card and under the first card. However, in this case, because the card 2 and the first card are simultaneously displayed in the target area, the user is given a feeling that there is an association (a parallel association or a subordinate association) between the first card and the card 2. Therefore, to avoid this, as shown in (b) in FIG. 31, the layer of the first basic card may be lifted up, so that the first basic card and the first card are at the same layer. In this case, the card 2 is located under the first basic card, the card 3 is located under the first card, and the second basic card is located under the card 3.

For a specific implementation process of inserting the card pair into the card stack, refer to the example shown in FIG. 26 in the foregoing embodiments. Details are not described herein again. A difference between the two processes lies in that there is only the second basic card under the card 2 and the card 3 herein.

A subsequent similar scenario in which the desktop application of the mobile phone newly generates a card has a similar processing manner.

After S903, when the mobile phone displays the first card and the second card in the target area of the first desktop, if the mobile phone newly generates a card 4, the desktop application of the mobile phone places the card 4 into the card stack in the target area based on a priority of the card 4.

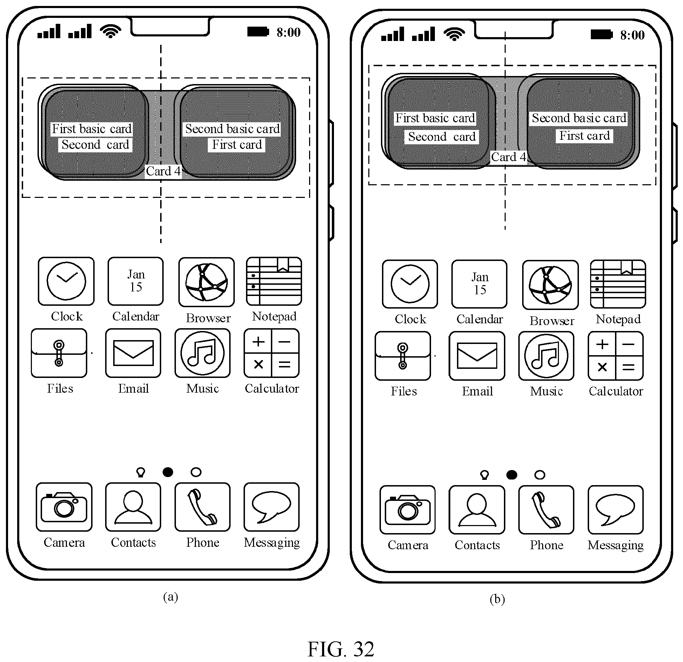

A non-foldable mobile phone and a folded state of a foldable mobile phone are used as examples. If the priority of the card 4 is greater than the priorities of all the layers in the card stack, as shown in (a) in FIG. 32, the card 4 may be overlaid on the first card and the second card, to be displayed in the target area. If the priority of the card 4 is not greater than the priorities of all the layers in the card stack, the card 4 is inserted between a first layer and a second layer. The first layer and the second layer are two layers that are adjacent before the card 4 is inserted, the first layer is below the second layer, a priority of the first layer is less than that of the card 4, and a priority of the second layer is greater than that of the card 4. Herein, the first layer may be a layer at which the first basic card and the second basic card are located, the second layer may be a layer at which the first card and the second card are located, and a finally formed card stack may be as shown in (b) in FIG. 32. For a specific implementation process of inserting the card 4 into the card stack, refer to the example shown in FIG. 15 in the foregoing embodiments. Details are not described herein again.

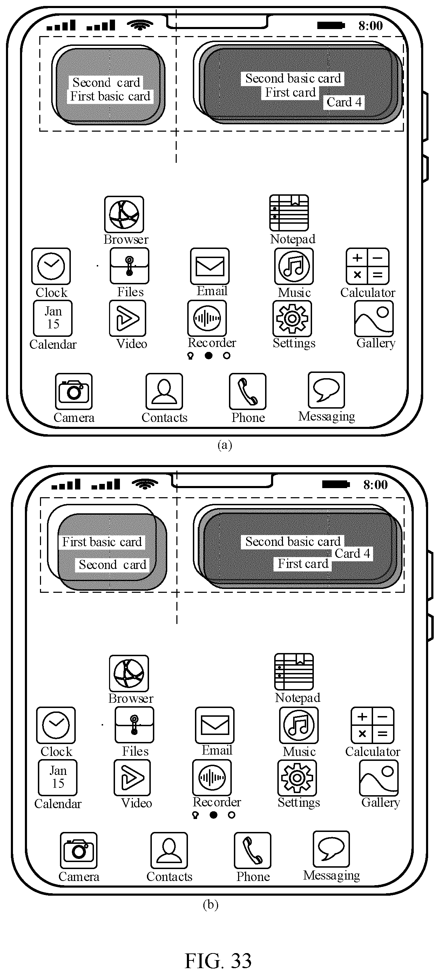

In another example, the first desktop is displayed by using an inner screen when the foldable mobile phone is in an unfolded state. If the priority of the card 4 is greater than the priorities of all the layers in the card stack, as shown in (a) in FIG. 33, the card 4 may be overlaid on the first card, to be displayed in the second sub-area of the target area. However, in this case, because the card 4 and the second card are simultaneously displayed in the target area, the user is given a feeling that there is an association (a parallel association or a subordinate association) between the second card and the card 4. Therefore, to avoid this, as shown in (a) in FIG. 33, the layer of the first basic card may be lifted up, so that the first basic card and the card 4 are at the same layer. In this case, the second card is located under the first basic card, the first card is located under the card 4, and the second basic card is located under the first card.

If the priority of the card 4 is not greater than the priorities of all the layers in the card stack, the card 4 is inserted a part that is between a first layer and a second layer and that corresponds to the second sub-area of the target area. The first layer may be a layer at which the first basic card and the second basic card are located, the second layer may be a layer at which the first card and the second card are located, and a finally formed card stack may be as shown in (b) in FIG. 33. The card 4 is between the second basic card and the first card, and the card 4 is fully overlaid on the second basic card. For a specific implementation process of inserting the card 4 into the card stack, refer to the example shown in FIG. 19 in the foregoing embodiments. Details are not described herein again.

A subsequent similar scenario in which the desktop application of the mobile phone newly generates a card has a similar processing manner.

After S903, when the mobile phone displays the first card and the second card in the target area of the first desktop, if the mobile phone newly generates two cards (which may be referred to as a card pair, where the two included cards may be a card 5 and a card 6) that are in a parallel association or in a subordinate association, the desktop application of the mobile phone places the card pair into the card stack in the target area based on a priority of the card 5 or the card 6.

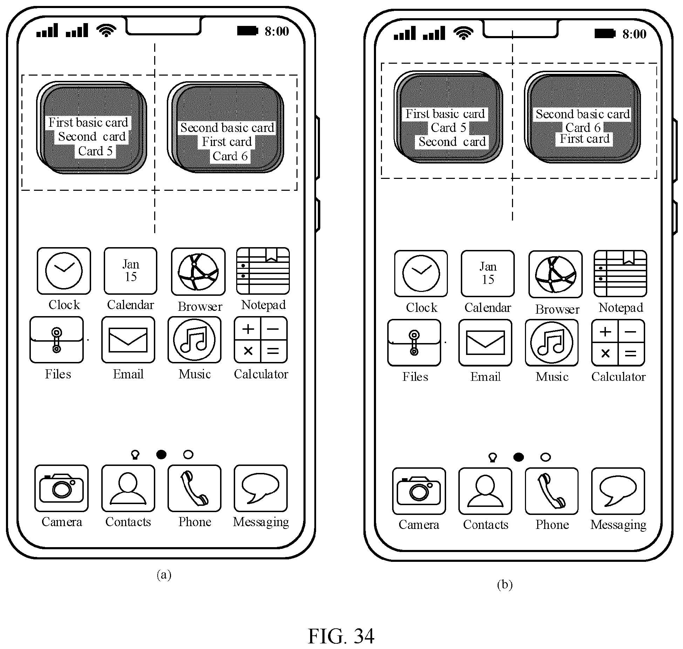

A non-foldable mobile phone and a folded state of a foldable mobile phone are used as examples. If the priority of the card 5 is greater than the priorities of all the layers in the card stack, as shown in (a) in FIG. 34, the card 5 may be overlaid on the second card, and the card 6 may be overlaid on the first card, so that the cards can be displayed in the target area. If the priority of the card 5 is not greater than the priorities of all the layers in the card stack, the card pair is inserted between a first layer and a second layer. The first layer and the second layer are two layers that are adjacent before the card pair is inserted, the first layer is below the second layer, a priority of the first layer is less than that of the card 5, and a priority of the second layer is greater than that of the card 5. Herein, the first layer may be a layer at which the first basic card and the second basic card are located, the second layer may be a layer at which the first card and the second card are located, and a finally formed card stack may be as shown in (b) in FIG. 34. The card 5 is overlaid on the first basic card, and the card 6 is overlaid on the second basic card. For a specific implementation process of inserting the card pair into the card stack, refer to the example shown in FIG. 26 in the foregoing embodiments. Details are not described herein again. In addition, if there is a subordinate association between the card 5 and the card 6, for ease of user identification, in this application, the primary card is placed in an area in the card stack that corresponds to the second sub-area of the target area. In this case, the card 6 may be determined as a primary card in the two cards, and the card 5 may be determined as a secondary card.

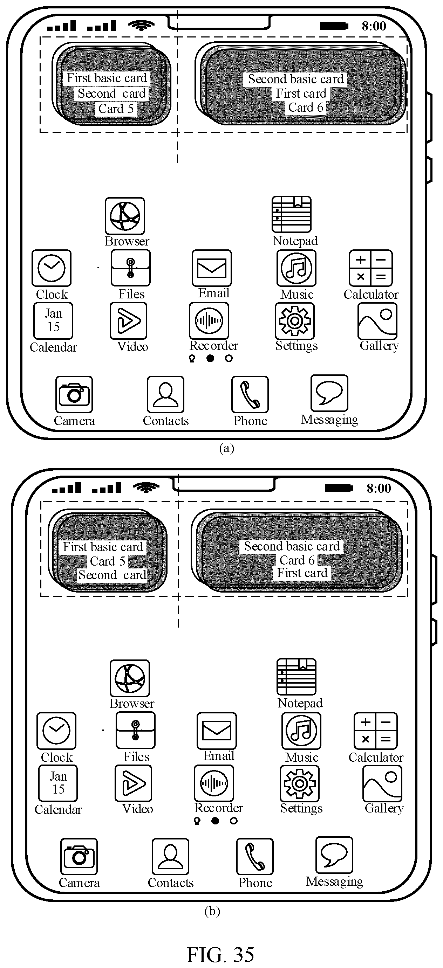

In another example, the first desktop is displayed by using an inner screen when the foldable mobile phone is in an unfolded state. If the priority of the card 5 is greater than the priorities of all the layers in the card stack, as shown in (a) in FIG. 35, the card 5 may be overlaid on the second card, to be displayed in the first sub-area of the target area, and the card 6 may be overlaid on the second card, to be displayed in the second sub-area of the target area.

If the priority of the card 5 is not greater than the priorities of all the layers in the card stack, the card pair is inserted a part that is between a first layer and a second layer and that corresponds to the second sub-area of the target area. The first layer may be a layer at which the first basic card and the second basic card are located, the second layer may be a layer at which the first card is located, and a finally formed card stack may be as shown in (b) in FIG. 35. The card 5 is overlaid on the first basic card and under the second card, and the card 6 is overlaid on the second basic card and under the first card.

For a specific implementation process of inserting the card pair into the card stack, refer to the example shown in FIG. 26 in the foregoing embodiments. Details are not described herein again.

A subsequent similar scenario in which the desktop application of the mobile phone newly generates a card has a similar processing manner.

After S904, when the mobile phone displays the third card and the fourth card in the target area of the first desktop, if the mobile phone newly generates a card, the desktop application of the mobile phone places the newly generated card into the card stack in the target area based on a priority of the newly generated card. For a specific implementation, refer to the examples corresponding to FIG. 32 and FIG. 33. Details are not described herein again.

After S904, when the mobile phone displays the third card and the fourth card in the target area of the first desktop, if the mobile phone newly generates two cards that are in a parallel association or in a subordinate association, the desktop application of the mobile phone places the card pair into the card stack in the target area based on priorities of the two cards. For a specific implementation, refer to the examples corresponding to FIG. 34 and FIG. 35. Details are not described herein again.

A subsequent similar scenario in which the desktop application of the mobile phone newly generates a card has a similar processing manner.

According to the technical solution provided in the foregoing embodiment, in addition to separately displaying a single card in the target area, the mobile phone may simultaneously display two cards that are in a parallel association or a subordinate association in the target area when two cards are generated, so that a user can view more required notification information in time. This reduces user operations, enhances human-computer interaction efficiency, and improves use experience of the user.

According to the foregoing embodiments, it can be learned that after the mobile phone implements all or a part of the steps in the foregoing embodiments of S901 to S904, after the desktop application of the mobile phone generates a card stack including at least two cards in the target area of the first desktop (namely, the target card stack in this application), the mobile phone may perform the following process on the added cards.

In this case, if a first target card newly generated by the desktop application of the mobile phone has an association (a parallel association or a subordinate association) with a single old card in the target layer of the card stack, the newly added card and the old card may be placed at a target layer with reference to the corresponding implementation in the foregoing embodiments.

If a second target card newly generated by the desktop application of the mobile phone does not have an association with any card separately existing at a layer in the card stack, the second target card may be inserted into the card stack with reference to the corresponding example in FIG. 28, FIG. 29, FIG. 32, or FIG. 33 in the foregoing embodiments.

If the desktop application of the mobile phone newly generates a third target card and a fourth target card that are in an association (a parallel association or a subordinate association), the third target card and the fourth target card may be inserted into the card stack with reference to the corresponding example in FIG. 30, FIG. 31, FIG. 34, or FIG. 35 in the foregoing embodiments.

In some embodiments, to facilitate the user viewing each layer in the card stack, the desktop application of the mobile phone may further switch, in a hand-following manner, the top layer of the card stack in response to a switch operation (for example, a swipe-up or swipe-down operation on a card at the topmost layer of the card stack) performed by the user.

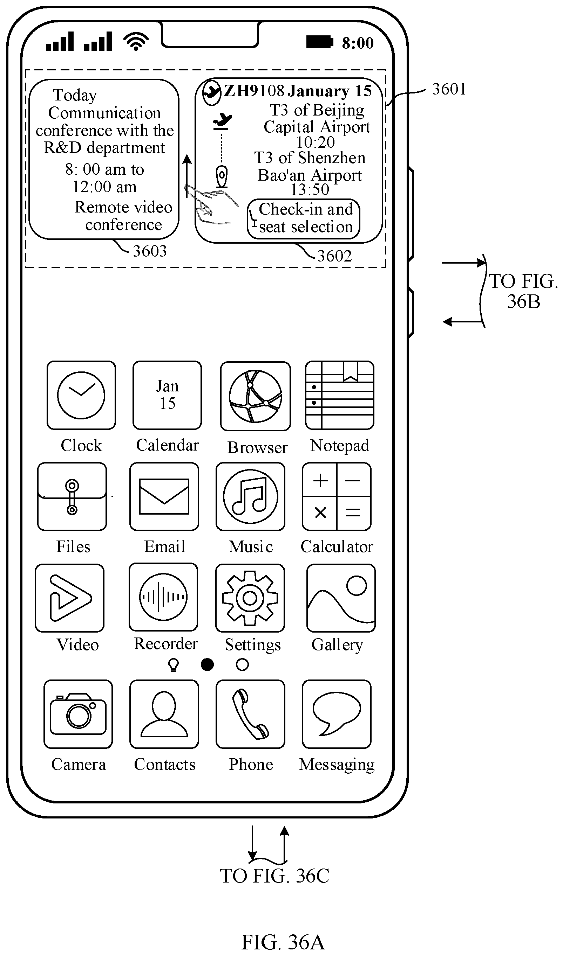

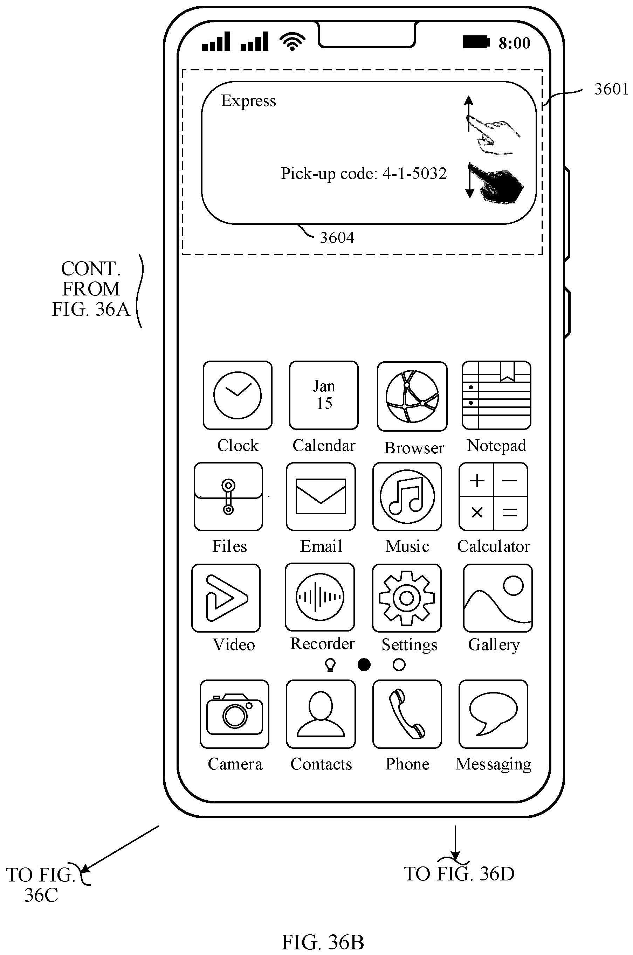

In an implementation, if the mobile phone is a non-foldable mobile phone or a foldable mobile phone using an outer screen for display in a folded state, either one card or two cards at each layer of the card stack are switched synchronously. For example, the card stack includes three layers; a bottommost layer includes the first basic card, namely, the weather card, and the second basic card, namely, the sports card; the topmost layer includes the flight card and the conference reminder card; and the middle layer includes an express card. As shown in FIG. 36A, a topmost layer of the card stack 3601 in the target area on the first desktop of the mobile phone is a flight card 3602 and a conference reminder card 3603. The mobile phone may receive a swipe-up operation performed by the user on the target area. In response to the swipe-up operation, the mobile phone may switch the flight card 3602 and the conference reminder card 3603 to an express card 3604 shown in FIG. 36B. For example, notification information in the express card 3604 may be a pick-up code of an express. For example, a pick-up code is 4-1-5032.

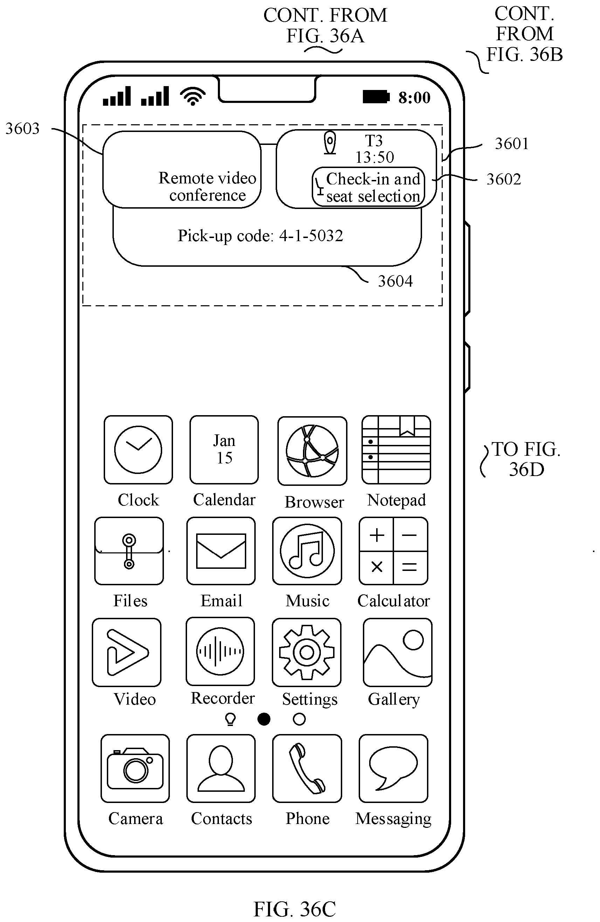

In a process in which the user performs the swipe-up operation, the mobile phone may switch, in a hand-following manner, cards at the topmost layer of the card stack 3601 in response to the swipe-up operation. The hand-following switching may be specifically that the mobile phone translates the flight card 3602 and the conference reminder card 3603 as a whole up based on a real-time swiping distance of the swipe-up operation, gradually hides the flight card and the conference reminder card from top to bottom, and gradually displays the express card 3604 from bottom to top in the original position of the flight card 3602 and the conference reminder card 3603. To bring the user a better feeling, an entirety of the express card 3604 may be gradually displayed from smaller to larger, and transparency of the entirety is from larger to smaller. For example, as shown in FIG. 36C, in a process in which the user performs the swipe-up operation, that is, when the user does not end the swipe, the card stack 3601 displayed in the mobile phone includes a bottom-up part of the flight card 3602, and further includes the conference reminder card 3603 and a bottom-up part of the express card 3604. A top-down part of the flight card 3602 and the conference reminder card 3603 is hidden, to expose the bottom-up part of the express card 3604.

It should be noted that, to improve user experience, a height of the hidden part of the flight card 3602 and the conference reminder card 3603 in an up-down direction may be a distance swiped by the swipe-up operation implemented by the user. Certainly, the height of the hidden part of the flight card 3602 and the conference reminder card 3603 in the up-down direction may alternatively be slightly greater than or several times the distance swiped by the swipe-up operation performed by the user, depending on an actual situation. A swiping distance corresponding to the swipe-up operation herein or a swipe-down operation mentioned below may refer to an actual swiping distance performed by the user on the mobile phone screen, or may be a sum of the actual distance and a swiping inertia distance. The swiping inertia distance may be determined by a swiping speed when the user performs a swipe-up operation or a swipe-down operation, and a faster swiping speed indicates a longer swiping inertia distance.

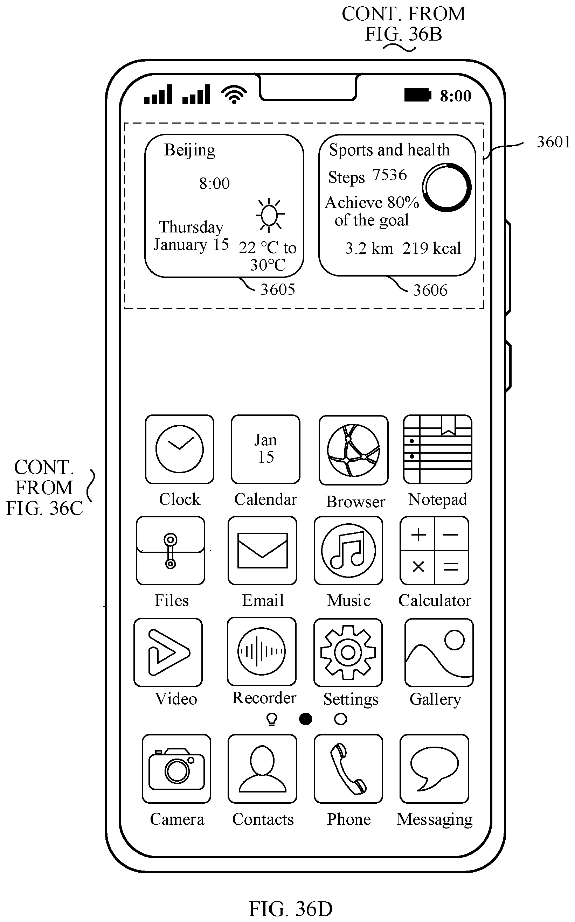

Similarly, if the user performs a swipe-up operation in the target area again based on FIG. 36B. The mobile phone may switch the express card 3604 to the weather card 3605 and the sports card 3606 shown in FIG. 36D. Then, if the user performs a swipe-up operation in the target area again, the mobile phone may switch the weather card 3605 and the sports card 3606 to the flight card 3602 and the conference reminder card 3603 shown in FIG. 36A. Then, switching is cyclically performed based on swiping up.

Further, in addition to viewing a next-layer card of the cards displayed at the topmost layer of the card stack, the user may need to view an upper-layer card of the cards displayed at the topmost layer of the card stack. In this case, the user may perform a swipe-down operation on the target area. The mobile phone may switch the cards displayed at the topmost layer of the card stack in response to the swipe-down operation. It should be noted that, if a card is not a card at a highest layer when a card stack to which the card belongs is initially formed, an upper-layer card of the card may be a card at an upper layer of the card when the card stack is initially formed. If the card is a card at the highest layer when the card stack is initially formed, an upper-layer card of the card may be at a lowest layer when the card stack is initially formed.

For example, as shown in FIG. 36B, when the user needs to switch the express card 3604 at the topmost layer of the card stack 3601, the user may perform a swipe-down operation on the target area. In response to the swipe-down operation, the mobile phone may switch the express card 3604 to the flight card 3602 and the conference reminder card 3603 shown in FIG. 36A.

In a process in which the user performs the swipe-down operation, the mobile phone may switch, in a hand-following manner, cards at the topmost layer of the card stack 3601 in response to the swipe-down operation. The hand-following switching may be specifically that the mobile phone gradually hides the express card 3604 from top to bottom based on a real-time swiping distance of the swipe-down operation, and gradually displays a bottom-up part of the flight card 3602 and the conference reminder card 3603. For example, as shown in FIG. 36D, in a process in which the user performs the swipe-down operation, that is, when the user does not end the swipe, the card stack 3601 displayed in the mobile phone includes a bottom-up part of the express card 3604, and further includes a bottom-up part of the flight card 3602 and the conference reminder card 3603. The flight card 3602 and the conference reminder card 3603 are gradually translated downward to display the bottom-up part thereof, so as to hide a top-down part of express card 3604.

It should be noted that, to improve user experience, a height of the exposed part of the flight card 3602 and the conference reminder card 3603 in the up-down direction may be a distance swiped by the swipe-down operation implemented by the user. Certainly, the height of the exposed part of the flight card 3602 and the conference reminder card 3603 in the up-down direction may alternatively be slightly greater than or several times the distance swiped by the swipe-down operation performed by the user, depending on an actual situation.

Similarly, if the user performs a swipe-down operation in the target area again based on FIG. 36A. The mobile phone may switch the flight card 3602 and the conference reminder card 3603 to the weather card 3605 and the sports card 3606 shown in FIG. 36D. Then, if the user performs a swipe-down operation in the target area again, the mobile phone may switch the weather card 3605 and the sports card 3606 to the express card 3604 shown in FIG. 36B. Then, switching is cyclically performed based on swiping up.

In another implementation, if the mobile phone is a foldable mobile phone using an inner screen for display in an unfolded state, a switching process is similar to the process in which the mobile phone is a foldable mobile phone using an outer screen for display in a folded state or a non-foldable mobile phone. A difference lies in that for a single card occupying a single layer, when the card is placed at the top layer, the first basic card is also displayed. With reference to the descriptions of the examples shown in FIG. 33 in the foregoing embodiments, to prevent the user from considering that a single card occupying a single layer and one of the associated cards are two associated cards, a case in which when a single card occupying a single layer is displayed at the topmost layer, a next layer is two associated cards does not exist in the card stack. When responding to a switch operation performed by the user on the target area, if it is determined that the foregoing case occurs (that is, before the user performs the switch operation, two associated cards are at the topmost layer of the card stack, and an individual card occupies a next layer and corresponds to the second sub-area of the target area), the mobile phone may automatically associate the first basic card with the individual card, and simultaneously display the first basic card and the individual card in the target area in response to the switch operation.

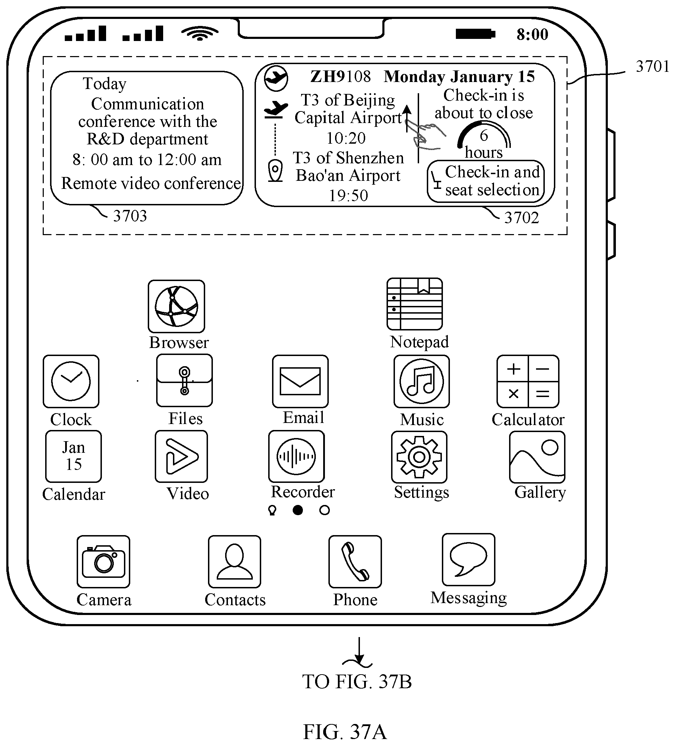

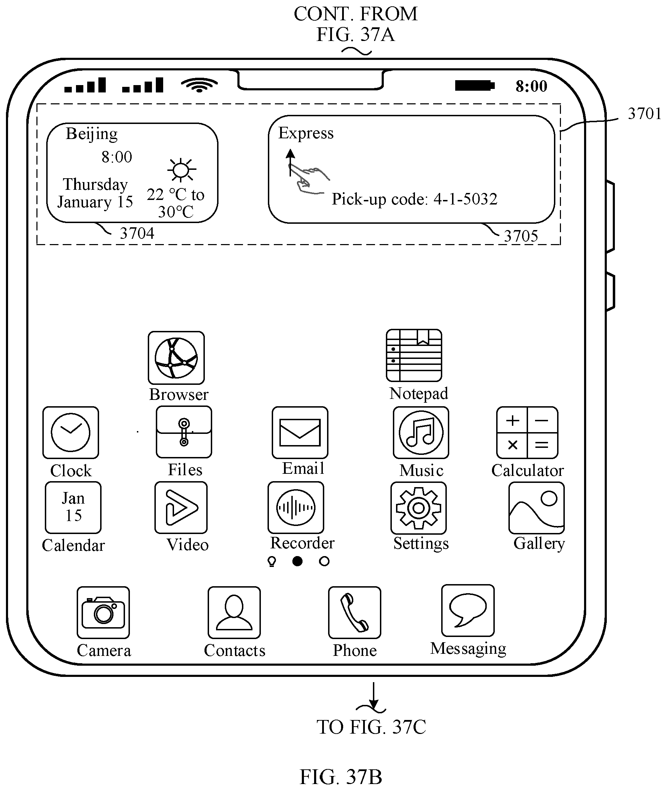

For example, the card stack includes three layers; a bottommost layer includes the first basic card, namely, the weather card, and the second basic card, namely, the sports card; the topmost layer includes the flight card and the conference reminder card; and the middle layer includes an express card. As shown in FIG. 37A, the mobile phone may receive a swipe-up operation performed by the user on the target area. In response to the swipe-up operation, the mobile phone may switch a flight card 3702 and a conference reminder card 3703 at a topmost layer of a card stack 3701 to a weather card 3704 and an express card 3705 shown in FIG. 37B. The weather card 3704 is actually located under the express card 3705. The weather card 3704 is displayed herein because there is no card in an area that is of a layer at which express card 3705 is located and that corresponds to the first sub-area of the target area. For a specific implementation of the switching process, refer to the related descriptions in FIG. 36C in the foregoing embodiments. Details are not described herein again.

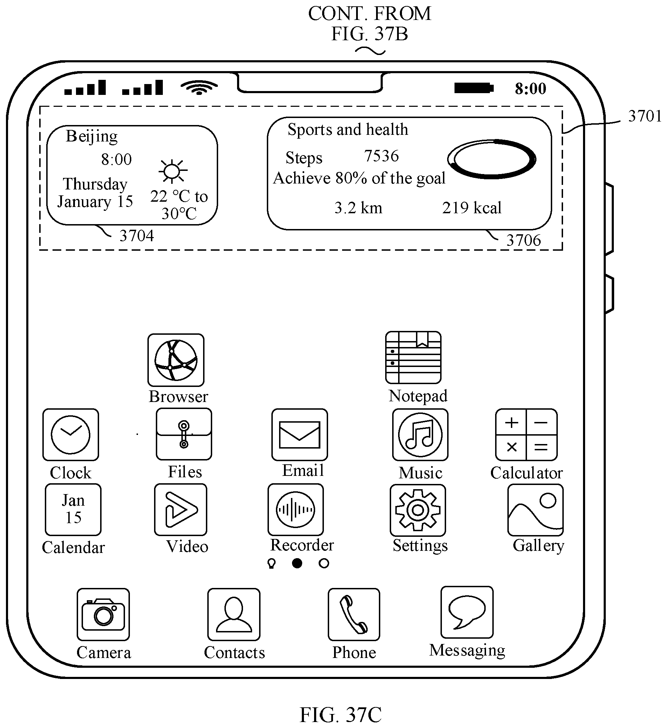

Then, the user may continue to implement a swipe-up operation in the target area. In this case, the mobile phone determines that a next layer of the weather card 3704 and the express card 3705 is actually an individual sports card, and if the sports card is displayed, the conference reminder card 3703 at a next layer is displayed because there is no content in an area that of a layer of the sports card and that corresponds to the first sub-area of the target area. Consequently, the user may consider that there is an association between the conference reminder card 3703 and the sports card. Therefore, in this case, the mobile phone may not move the weather card in response to the swipe-up operation, but directly replace the express card 3705 with the sports card. Based on this, in response to the swipe-up operation, the mobile phone may switch the express card 3705 at the topmost layer of the card stack 3701 to the sports card 3706 shown in FIG. 37C. No change is made to the weather card 3704. In the switching process, for an implementation of the express card 3705 and the sports card 3706, refer to the related descriptions in FIG. 36C in the foregoing embodiments. Details are not described herein again.

Then, the user may continue to implement a swipe-up operation in the target area. Because the next layer of the sports cards 3706 and the weather cards 3704 are the flight card 3702 and the conference reminder card 3703 that are associated. In response to the swipe-up operation, the mobile phone may switch the weather card 3704 and the sports card 3706 at the topmost layer of the card stack 3701 to the flight card 3702 and the conference reminder card 3703 shown in FIG. 37B. For a specific implementation of the switching process, refer to the related descriptions in FIG. 36C in the foregoing embodiments. Details are not described herein again.

A switching situation corresponding to the swipe-down operation may be reasonably deduced from the foregoing embodiments. Details are not described herein again.

In some embodiments, there may be a limit to an existence time of a card in the card stack. For example, a time period corresponding to conference reminder information in a card is from 8: 00 am to 10: 00 am on January 1. After this time, the card no longer works, that is, the card is invalid. In addition, if the mobile phone determines that an event corresponding to a notification message in a card is completed or receives a message indicating that an event corresponding to a notification message in a card is completed, the card may be considered to be invalid.

When the card is invalid, the mobile phone automatically deletes the card from the card stack. In this application, for the cards in the card stack, there may be an individual card occupying a single layer, or two cards in an association occupy one layer, and in these cases, automatic deletion of a card is different.

For the individual card occupying a single layer, the mobile phone deletes the individual card after the card is naturally invalid, and the rest remains basically unchanged.

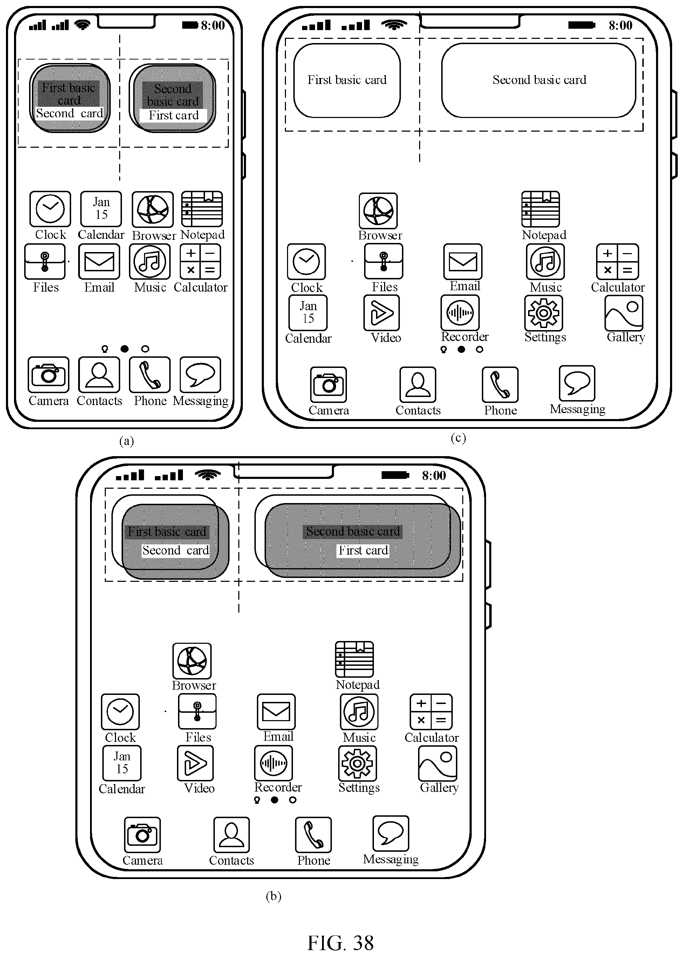

For example, the mobile phone is a non-foldable mobile phone or a foldable mobile phone using an outer screen for display in a folded state, the card stack is a card stack shown in (a) in FIG. 32. If the card 4 is invalid, the invalid card 4 is deleted. In this case, as shown in (a) in FIG. 38, the card stack is changed from three layers to two layers, the first card and the second card are at the top layer, and the first basic card and the second basic card are at the bottom layer. The rule applies to other possible cases.

In another example, the mobile phone is a foldable mobile phone using an inner screen for display in an unfolded state, and the card stack is a card stack shown in (b) in FIG. 33. If the card 4 is invalid, the invalid card 4 is deleted, and the first basic card is adjusted to be at the same layer as the first basic card. In this case, as shown in (b) in FIG. 38, the card stack is changed to two layers, the first card and the second card are at the topmost layer, and the first basic card and the second basic card are at the bottommost layer.

In another example, the mobile phone is a foldable mobile phone using an inner screen for display in an unfolded state, and the card stack is a card stack shown in (b) in FIG. 17. If the first card is invalid, the first card is deleted. In this case, as shown in (c) in FIG. 38, the card stack is changed to one layer including the first basic card and the second basic card.

For the case in which two cards occupy one layer, after the cards are naturally invalid, the mobile phone performs corresponding processing based on different cases.

In a first case, the mobile phone is non-foldable or is a foldable mobile phone using an outer screen for display in a folded state, and the association of the two cards occupying one layer is a parallel association. In this case, if one is invalid, and there is no single card that occupies one layer in the card stack and that is in a parallel association with the other card, or the mobile phone does not newly generate a card in a parallel association with the other card, the mobile phone deletes the invalid card and scales up the other card, so that the other card is fully overlaid on the layer at which the card is located.

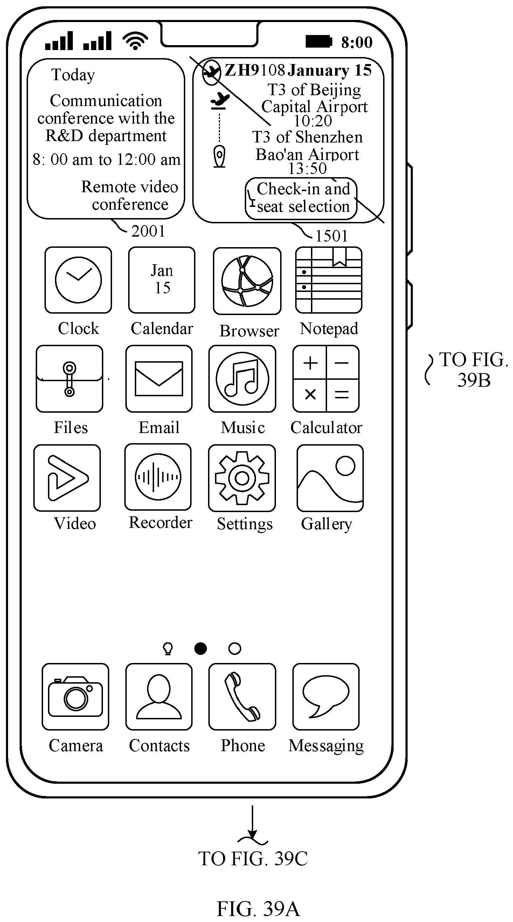

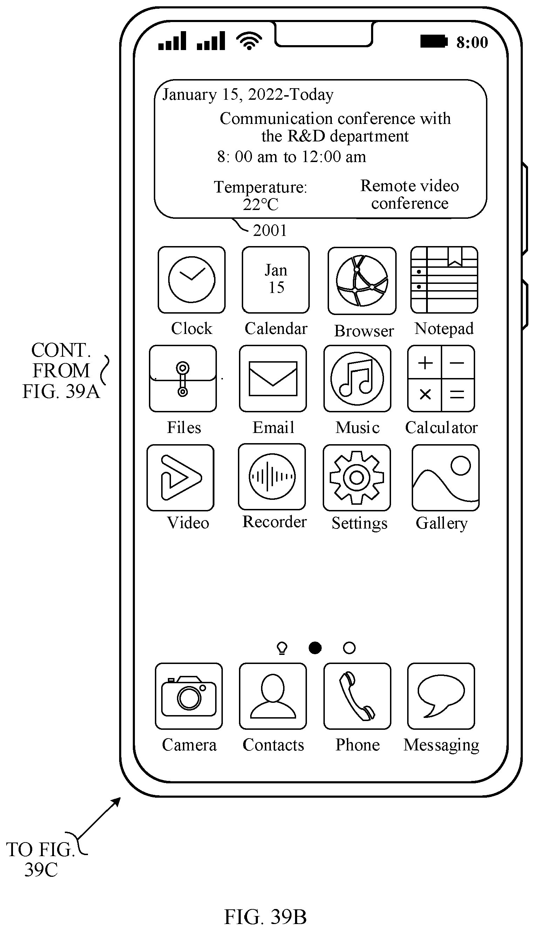

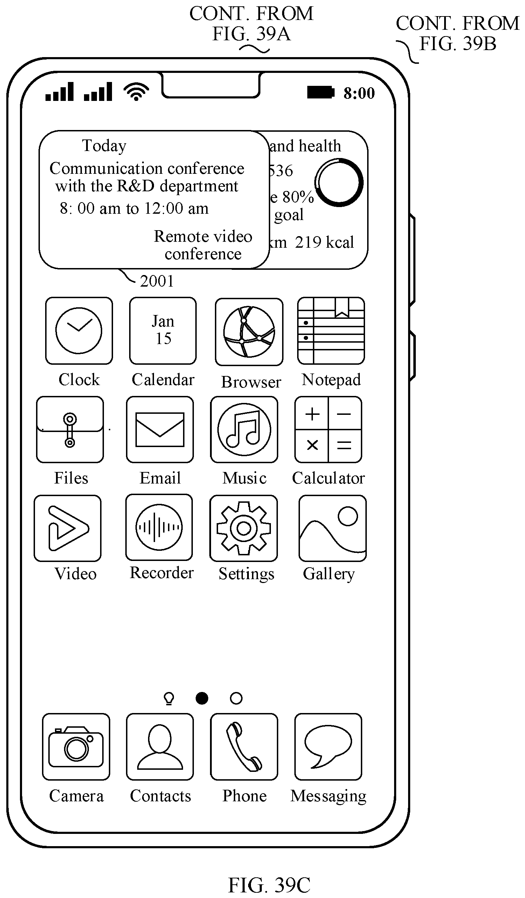

For example, refer to the example shown in (b) in FIG. 20. As shown in FIG. 39A, when a time period corresponding to the flight card 1501 elapses, the flight card 1501 is invalid. After being invalid, as shown in FIG. 39B, the flight card 1501 is deleted and no longer displayed in the target area, and the conference reminder card 2001 is scaled up to the right and displayed in the target area. For example, a size of the conference reminder card 2001 is changed from original 2*2 to 4*2 (in another feasible embodiment, the size of the conference reminder card 2001 may be changed from original 3*2 to 5*2). A process of deleting the flight card 1501 may be performed by using any animation. Certainly, content of the scaled-up conference reminder card 2001 may vary slightly. In addition, to enable the user to learn of which card is under the invalid card, after the flight card 1501 is deleted, before the conference reminder card 2001 is scaled up for display in the target area, as shown in FIG. 39C, the sports card 1007 under the flight card 1501 is displayed.

A scaling-up process may be analogized to a reverse process of a scalingdown process of the flight card in the foregoing embodiments. Details are not described herein again. When the conference reminder card 2001 is invalid, the flight card is scaled up to the left and displayed in the target area.

In a second case, the mobile phone is non-foldable or is a foldable mobile phone using an outer screen for display in a folded state, and the association of the two cards occupying one layer is a parallel association. In this case, if one is invalid, and there is a first parallel card that occupies one layer in the card stack and that is in a parallel association with the other card, or the mobile phone newly generates a second parallel card that is in a parallel association with the other card, the mobile phone deletes the invalid card and places the first parallel card or the second parallel card in a position of the invalid card.

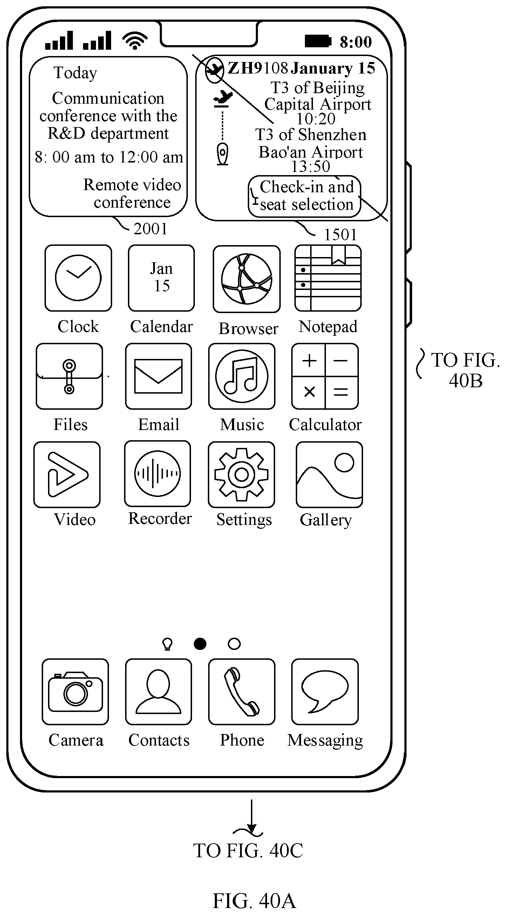

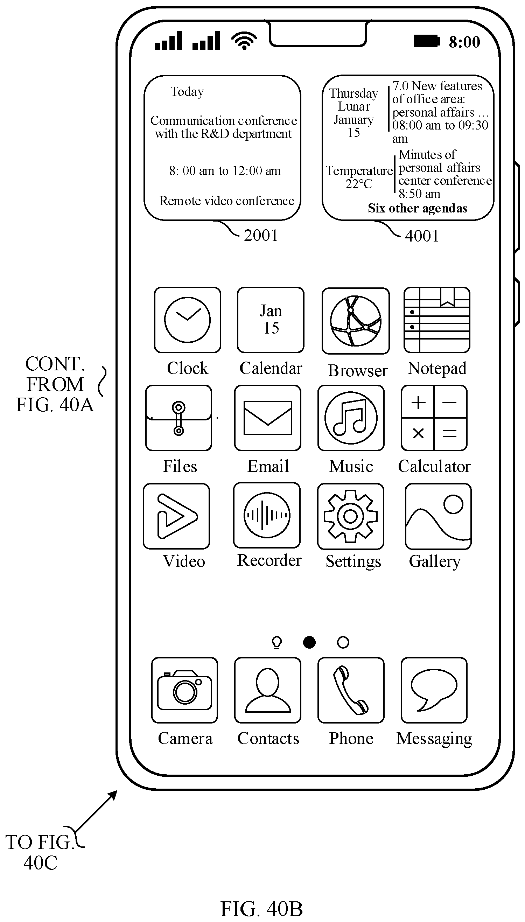

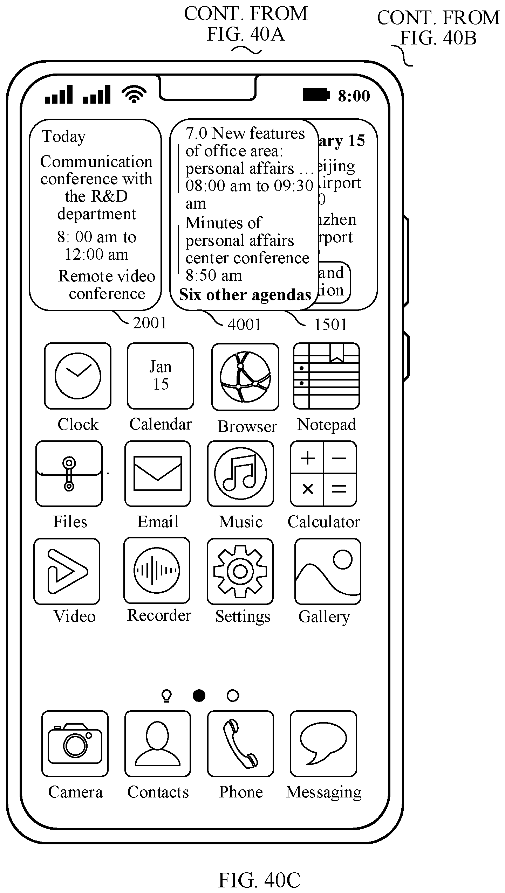

For example, the mobile phone currently newly generates the second parallel card, and the second parallel card is a schedule reminder card. Refer to the example shown in (b) in FIG. 20. As shown in FIG. 40A, when a time period corresponding to the flight card 1501 elapses, the flight card 1501 is invalid. After being invalid, as shown in FIG. 40B, the flight card 1501 is deleted and no longer displayed in the target area, and a schedule reminder card 4001 is displayed in the original position of the flight card 1501. For example, as shown in FIG. 40C, a process in which the schedule reminder card 4001 appears after the flight card 1501 is deleted may be that the schedule reminder card 4001 is overlaid on the flight card 1501 gradually from the left side of the second sub-area in the target area to right (or from the right side to left). Certainly, there may alternatively be any other feasible implementation in practice. This is not specifically limited in this application.

In addition, because invalidity may be unexpected or not easily noticed by the user, to enable the user to learn that the flight card 1501 has disappeared, after the flight card 1501 is invalid, as shown in FIG. 39B, the conference reminder card 2001 may be scaled up to the right and displayed in the target area. Then, in a next refresh cycle, the schedule reminder card 4001 is displayed in the first sub-area of the target area in a manner similar to that shown in FIG. 20.

Certainly, if there is a first parallel card that occupies one layer in the mobile phone and that is in a parallel association with the other card, the second parallel card may alternatively be changed to the first parallel card.

In a third case, the mobile phone is non-foldable or is a foldable mobile phone using an outer screen for display in a folded state, and the association of the two cards occupying one layer is a subordinate association. In this case, if a secondary card is invalid, and there is no single card that occupies one layer in the card stack and that is in a subordinate association with a primary card, or the mobile phone does not newly generate a card in a subordinate association with the primary card, the mobile phone deletes the secondary card and scales up the primary card.

The primary card is considered as the other card (the card in the parallel association with the invalid card) in the first case, and the secondary card is considered as the invalid card in the first case. For a specific implementation of the third case, refer to the specific implementation of the first case. Details are not described herein again.

In a fourth case, the mobile phone is non-foldable or is a foldable mobile phone using an outer screen for display in a folded state, and the association of the two cards occupying one layer is a subordinate association. In this case, if a secondary card is invalid, and there is a first subordinate card that occupies one layer in the card stack and that is in a subordinate association with a primary card, or the mobile phone does newly generate a second subordinate card in a subordinate association with the primary card, the mobile phone deletes the secondary card and places the first subordinate card or the second subordinate card in a position of the invalid card.

The primary card is considered as the other card (the card in the parallel association with the invalid card) in the first case, and the secondary card is considered as the invalid card in the first case. For a specific implementation of the fourth case, refer to the specific implementation of the second case. Details are not described herein again.

In a fifth case, the mobile phone is non-foldable or is a foldable mobile phone using an outer screen for display in a folded state, and the association of the two cards occupying one layer is a subordinate association. In this case, if a primary card is invalid, the mobile phone deletes the primary card and the secondary card from the card stack. Because notification information displayed by the two cards in the subordinate association is closely related, when the primary card is deleted, there is a large probability that a secondary card is no longer needed. In this case, both cards need to be deleted.

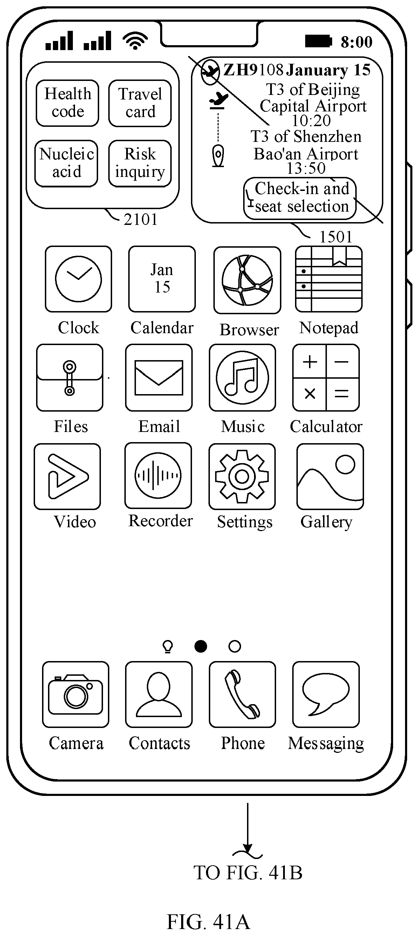

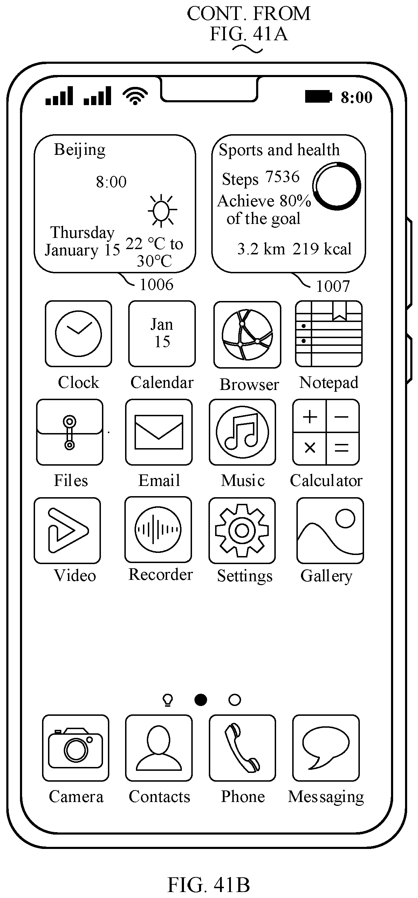

For example, refer to the example shown in (b) in FIG. 21. As shown in (a) in FIG. 41, when a time period corresponding to the flight card 1501 elapses, the flight card 1501 is invalid. After being invalid, as shown in (b) in FIG. 41, both the flight card 1501 and the health code card 2101 are deleted and no longer displayed in the target area, but the weather card 1006 and the sports card 1007 are displayed in the target area. A deletion animation or an implementation process of the flight card 1501 and the health code card 2101 may be in any feasible manner. This is not specifically limited in this application.

In a sixth case, the mobile phone is a foldable mobile phone using an inner screen for display in an unfolded state, and the association of the two cards occupying one layer is a parallel association. In this case, after a card whose area corresponding to the second sub-area of the target area is invalid, if there is no single card that occupies one layer in the card stack and that is in a parallel association with the other card, or the mobile phone does not newly generate a card in a parallel association with the other card, the mobile phone deletes the invalid card and moves the other card in the parallel association with the invalid card to a position of the invalid card. If a size of the invalid card is larger than that of the other card, the other card is scaled up, so that the other card has the same size as the invalid card when being displayed in the position of the invalid card.

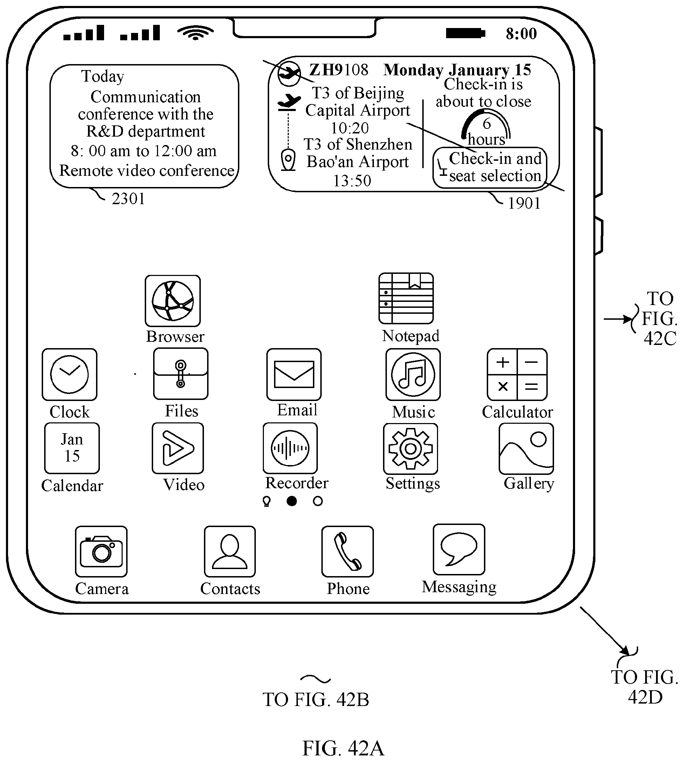

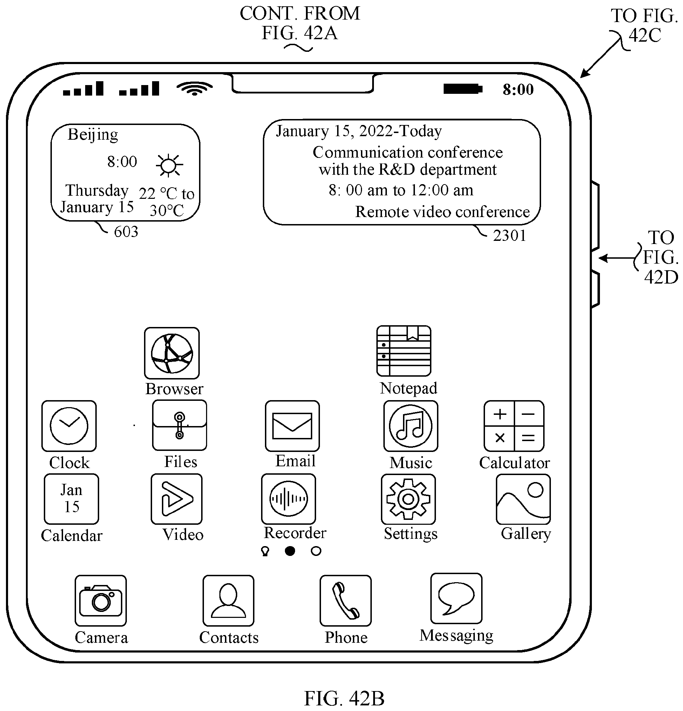

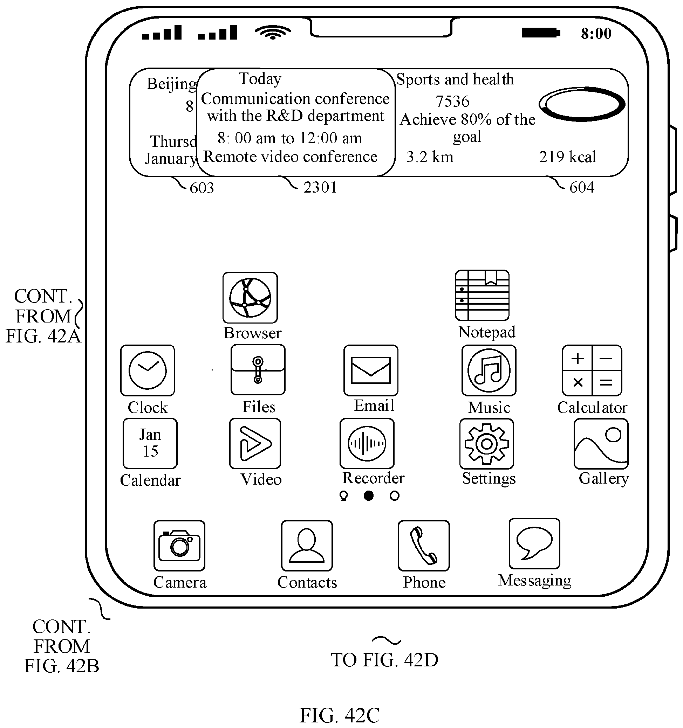

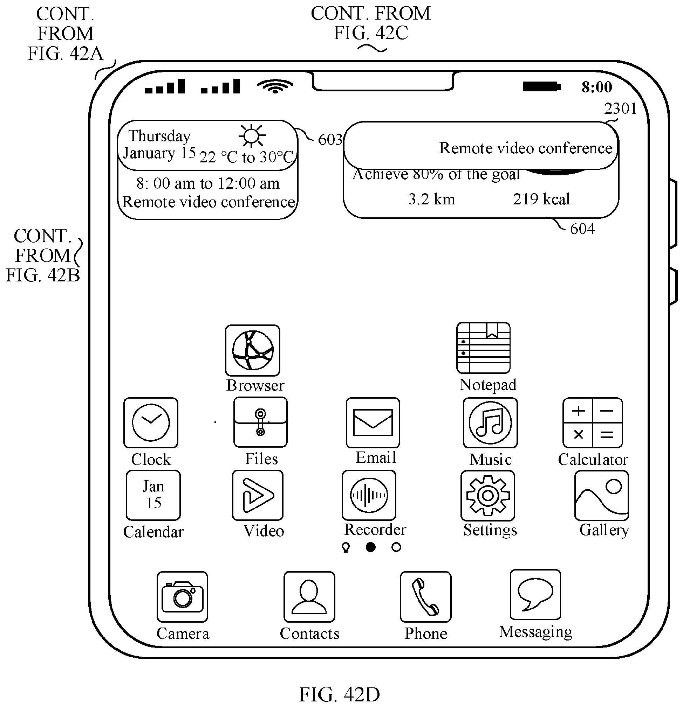

For example, refer to the example shown in (b) in FIG. 23. As shown in (a) in FIG. 42, when a time period corresponding to the flight card 1901 elapses, the flight card 1901 is invalid. After being invalid, as shown in (b) in FIG. 42, the flight card 1901 is no longer displayed in the second sub-area of the target area, and the conference reminder card 2301 is scaled up and displayed in the second sub-area of the target area. In addition, the weather card 603 under the conference reminder card 2301 is displayed in the second sub-area of the target area.

In an implementation, after the flight card 1901 is deleted and no longer displayed, as shown in (c) in FIG. 42, the conference reminder card 2301 may be gradually moved to the right and scaled up, until the card is fully displayed as shown in (b) in FIG. 42. In addition, to enable the user to learn of which card is under the flight card 1901, before moving of the conference reminder card 2301 is completed, the sports card 604 under the flight card 1901 is displayed.

In another implementation, after the flight card 1901 is deleted and no longer displayed, as shown in (d) in FIG. 42, the scaled-up conference reminder card 2301 is overlaid on the second sub-area from the upper side of the second sub-area of the target area. The weather card 1006 is overlaid on the first sub-area from the upper side of the second sub-area of the target area. In a process in which the weather card 603 is moved downward and overlaid on the first sub-area, the conference reminder card 2301 before scaling up may further be displayed in the first sub-area. In addition, to enable the user to learn of which card is under the flight card 1901, when the conference reminder card 2301 is not fully overlaid on the second sub-area, the sports card 604 under the flight card may be displayed in the second sub-area.

It should be noted that, when there are two cards in parallel association at the topmost layer of the card stack and two cards in an association (subordinate association or parallel association) at the next layer, after a card in the second sub-area at the topmost layer of the card stack is invalid, and a non-invalid card in the first sub-area is moved to the second sub-area, the first basic card, namely, the weather card, is displayed in the first sub-area, to prevent an exposed card at the next layer from being mistaken by the user as having an association with the non-invalid card. In other words, after a card that is in the second sub-area and that is of the two cards in the parallel association at the topmost layer is invalid, the first basic card, namely, the weather card, and the non-invalid card are finally displayed at the topmost layer.

In a seventh case, the mobile phone is a foldable mobile phone using an inner screen for display in an unfolded state, and the association of the two cards occupying one layer is a parallel association. In this case, after a card whose area corresponding to the second sub-area of the target area is invalid, if there is a third parallel card that occupies one layer in the card stack and that is in a parallel association with the other card, or the mobile phone newly generates a fourth parallel card in a parallel association with the other card, the mobile phone deletes the invalid card, moves the other card in the parallel association with the invalid card to a position of the invalid card, and further displays the third parallel card or the fourth parallel card in an original position of the other card. If a size of the invalid card is larger than that of the other card, the other card is scaled up, so that the other card has the same size as the invalid card when being displayed in the position of the invalid card.

A specific implementation of the seventh case is similar to the specific implementation of the sixth case. A difference is as follows:

In an implementation, after the conference reminder card is moved to the second sub-area, the third parallel card or the fourth parallel card may be gradually displayed in the first sub-area. A specific implementation or animation of gradually displaying the third parallel card or the fourth parallel card may be any feasible manner.

In another implementation, in a process in which the conference reminder card is gradually moved downward and displayed in the second sub-area of the target sub-area, the third parallel card or the fourth parallel card is also gradually moved downward and displayed in the first sub-area of the target sub-area.

In an eighth case, the mobile phone is a foldable mobile phone using an inner screen for display in an unfolded state, and the association of the two cards occupying one layer is a parallel association. In this case, after a card whose area corresponding to the first sub-area of the target area is invalid, if there is no single card that occupies one layer in the card stack and that is in a parallel association with the other card, or the mobile phone does not newly generate a card in a parallel association with the other card, the mobile phone deletes the invalid card and displays the first basic card in a position of the invalid card.

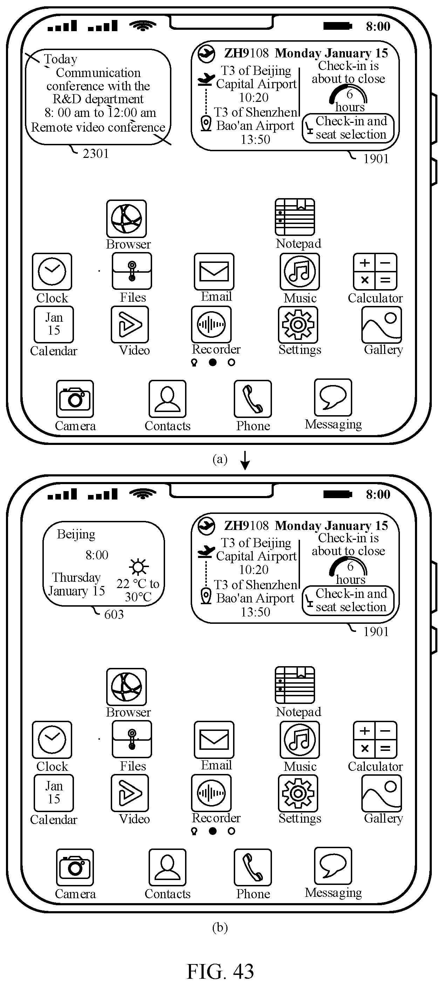

For example, refer to the example shown in (b) in FIG. 23. As shown in (a) in FIG. 43, when a time period corresponding to the conference reminder card 2301 elapses, the conference reminder card 2301 is invalid. After being invalid, as shown in (b) in FIG. 43, the conference reminder card 2301 is no longer displayed in the first sub-area of the target area, and the weather card 603 is displayed in the first sub-area of the target area.

For a meaning of displaying the weather card 603 in the first sub-area of the target area, refer to descriptions in the last paragraph in the sixth case in the foregoing embodiments.

In a ninth case, the mobile phone is a foldable mobile phone using an inner screen for display in an unfolded state, and the association of the two cards occupying one layer is a subordinate association. In this case, after a secondary card is invalid, and there is no single card that occupies one layer in the card stack and that is in a subordinate association with a primary card, or the mobile phone does not newly generate a card in a subordinate association with the primary card, the mobile phone deletes the secondary card and displays the first basic card in a position of the invalid card.

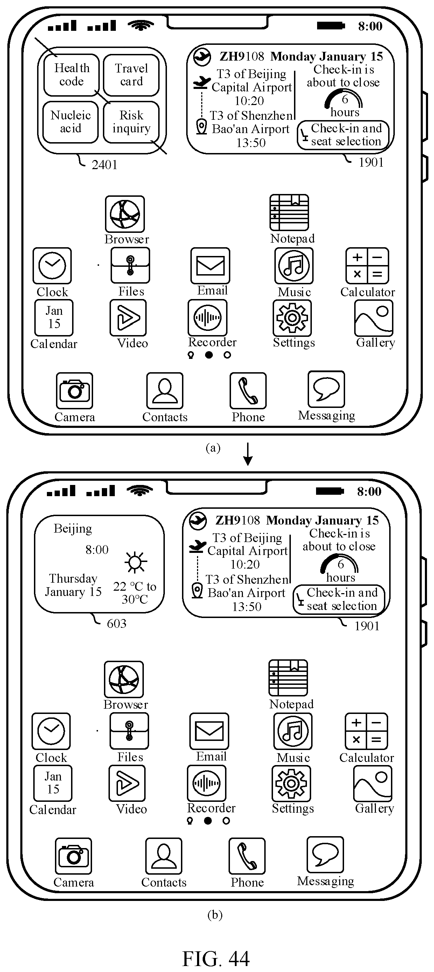

For example, refer to the example shown in (b) in FIG. 24. As shown in (a) in FIG. 44, when a time period corresponding to the health code card 2401 elapses, the health code card 2401 is invalid. After being invalid, as shown in (b) in FIG. 44, the health code card 2401 is no longer displayed in the first sub-area of the target area, and the weather card 1006 is displayed in the first sub-area of the target area.

For a meaning of displaying the weather card 1006 in the first sub-area of the target area, refer to descriptions in the last paragraph in the sixth case in the foregoing embodiments.

In a tenth case, the mobile phone is a foldable mobile phone using an inner screen for display in an unfolded state, and the association of the two cards occupying one layer is a subordinate association. In this case, after a secondary card is invalid, if there is a third subordinate card that occupies one layer in the card stack and that is in a subordinate association with a primary card, or the mobile phone does newly generate a fourth subordinate card in a subordinate association with the primary card, the mobile phone deletes the secondary card and displays the third subordinate card or the fourth subordinate card in a position of the secondary card.

A specific implementation of the tenth case is similar to the specific implementation of the ninth case. A difference is that after the health code card is no longer displayed, the third subordinate card or the fourth subordinate card is displayed in the original position of the health code card.

In an implementation, a process in which the third subordinate card or the fourth subordinate card appears after the health code card is deleted may be that the third subordinate card or the fourth subordinate card is gradually overlaid on the health code card from the left side of the first sub-area of the target area to the right (or from the right side to left). In another implementation, after the health code card is deleted, the first basic card may be displayed in the original position of the health code card. Then, the third subordinate card or the fourth subordinate card is gradually overlaid on the first basic card from the left side of the first sub-area of the target area to the right.

Certainly, there may alternatively be any other feasible implementation in practice. This is not specifically limited in this application.

In an eleventh case, the mobile phone is a foldable mobile phone using an inner screen for display in an unfolded state, and the association of the two cards occupying one layer is a subordinate association. In this case, after a primary card is invalid, the mobile phone deletes the primary card and the secondary card.

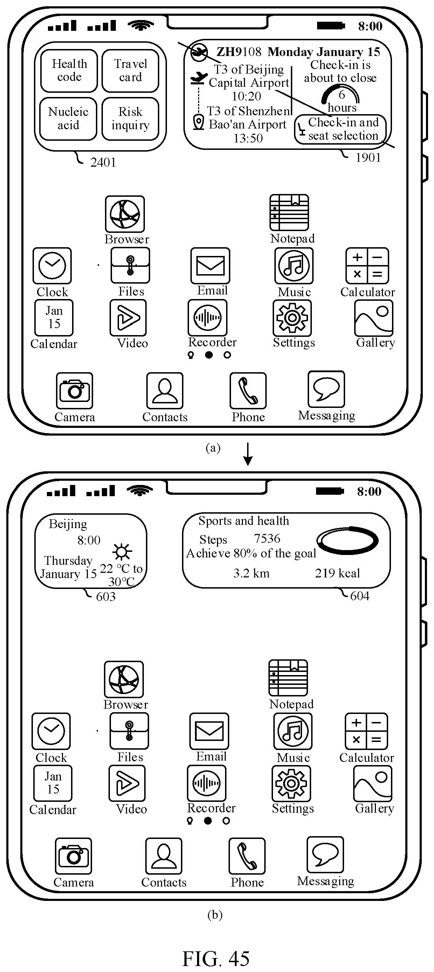

For example, refer to the example shown in (b) in FIG. 24. As shown in (a) in FIG. 45, when a time period corresponding to the flight card 1901 elapses, the flight card 1901 is invalid. After being invalid, as shown in (b) in FIG. 45, both the flight card 1901 and the health code card 2401 are deleted and no longer displayed in the target area, and the weather card 603 and the sports card 604 are displayed in the target area. A deletion animation or an implementation process of the flight card 1901 and the health code card 2401 may be in any feasible manner. This is not specifically limited in this application.

In the foregoing plurality of cases, an example in which a card at the topmost layer of the card stack is invalid is used for description, and in practice, this rule applies to a card at another layer of the card stack.

In some embodiments, for the card at the topmost layer of the card stack, the user may further delete a to-be-deleted card at the topmost layer by performing a delete operation on the to-be-deleted card. Specifically, the mobile phone may receive the delete operation, and in response to the delete operation, delete the to-be-deleted card.

In an implementation, the delete operation may be a swipe-left operation. For a specific implementation thereof, refer to the examples shown in FIG. 39 to FIG. 45 in the foregoing embodiments. Compared with that in the examples shown in FIG. 39 to FIG. 45 in the foregoing embodiments, when the user performs a swipe-left operation, the mobile phone may gradually hide the to-be-deleted card from right to left in response to the swipe-left operation, and the to-be-deleted card is deleted after being fully hidden. In addition, in the deleting process, to enable the user to learn of a card under the to-be-deleted card, the to-be-deleted card may be set with a specific transparency, so that the user can view the card under the to-be-deleted card. At the same time, the card under the to-be-deleted card may be changed from small to large, and the transparency gradually decreases. When a size increases to be the same as that of the to-be-deleted card, the transparency decreases to 0, and is overlaid on a position of the to-be-deleted card.

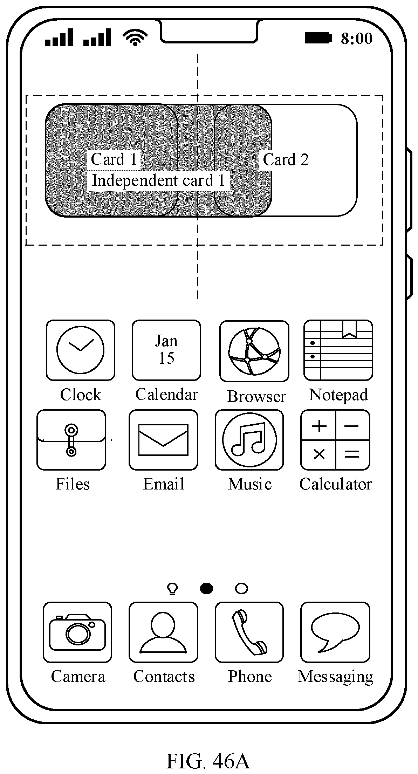

If the mobile phone is a non-foldable mobile phone or a foldable mobile phone using an outer screen for display in a folded state, there is a single individual card 1 at the topmost layer of the card stack, and there are two cards (for example, a card 1 and a card 2) that are associated (in a parallel association or a subordinate association) at a next layer, as shown in FIG. 46A, in a process in which the individual card 1 is hidden by moving to the left, the individual card 1 has a transparency to reveal the card 1 and the card 2 for display. The rule applies to other similar cases.

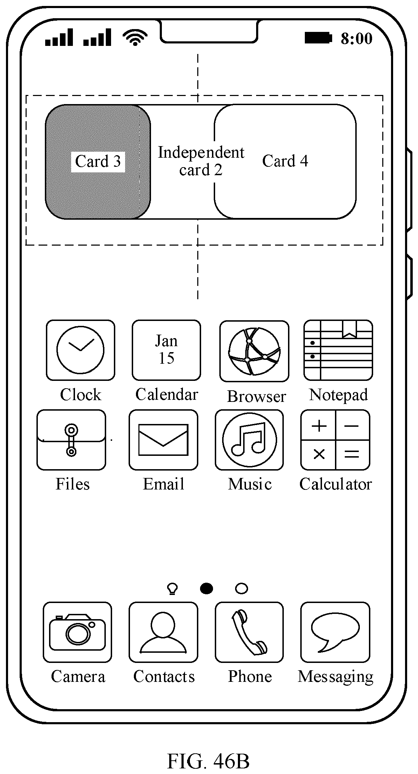

If the mobile phone is a non-foldable mobile phone or a foldable mobile phone using an outer screen for display in a folded state, there are two cards (such as a card 3 and a card 4) at the topmost layer of the card stack, and there is an individual card 2 at a next layer, in a process in which either one (for example, the card 3) of the cards that are associated is hidden by moving to the left, as shown in FIG. 46B, the card has a transparency to reveal a part of the individual card 2 under the card for display. The rule applies to other similar cases.

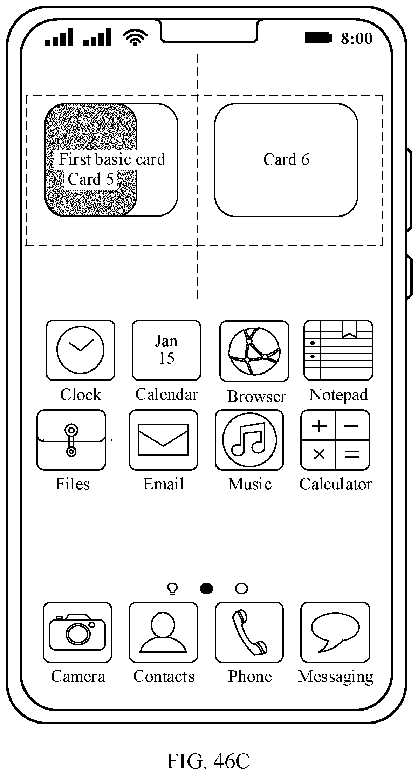

If the mobile phone is a non-foldable mobile phone or a foldable mobile phone using an outer screen for display in a folded state, there are two cards (such as a card 5 and a card 6) at the topmost layer of the card stack, and the first basic card and the second basic card are at a next layer, in a process in which either one (for example, the card 5) of the cards that are associated is hidden by moving to the left, as shown in FIG. 46C, the card has a transparency to reveal a basic card (the first basic card or the second basic card) under the card for display. The rule applies to other similar cases.

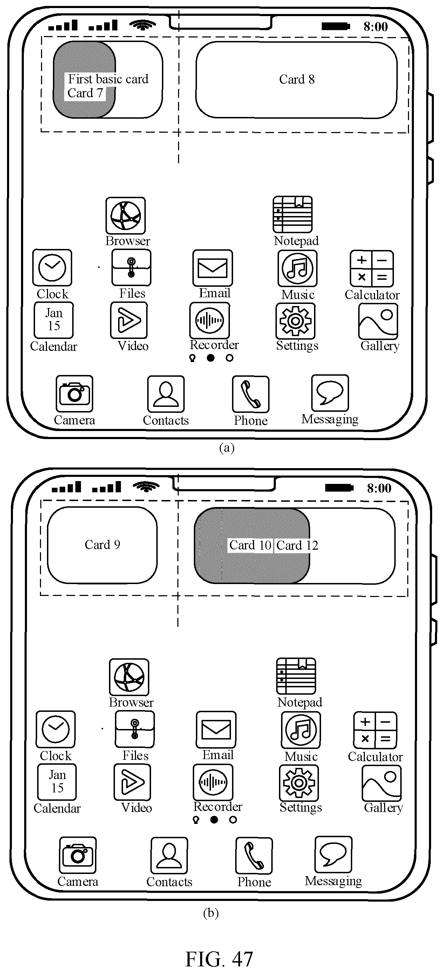

If the mobile phone is a foldable mobile phone using an inner screen for display in an unfolded state, and there are two cards (for example, a card 7 and a card 8) that are associated (in a parallel association or a subordinate association) at the topmost layer of the card stack, in a process in which the card 7 in the first sub-area of the target area is hidden by moving to the left, as shown in (a) in FIG. 47, the card 7 has a transparency to reveal the first basic card under the card 7 for display. In this case, regardless of whether cards at a next layer of the card 7 and the card 8 are two cards that are associated, in a process of deleting the card 7, the first basic card is revealed under the card. For a specific reason, refer to the related descriptions in the foregoing embodiments. Details are not described herein again. The rule applies to other similar cases.

If the mobile phone is a foldable mobile phone using an inner screen for display in an unfolded state, there are two cards (for example, a card 9 and a card 10) that are associated at the topmost layer of the card stack, and there are two cards (for example, a card 11 and a card 12) that are associated at a next layer, in a process in which the card 10 in the second sub-area of the target area is hidden by moving to the left, as shown in (b) in FIG. 47, the card 10 has a transparency to reveal the card 12 under the card 10 for display. The rule applies to other similar cases.

In addition, to bring the user better use experience, when the mobile phone deletes the to-be-deleted card at the topmost layer of the card stack in the target area of the first desktop in response to the left swipe operation performed by the user, the mobile phone may display confirmation information on the first desktop for the user to confirm whether to delete the to-be-deleted card.

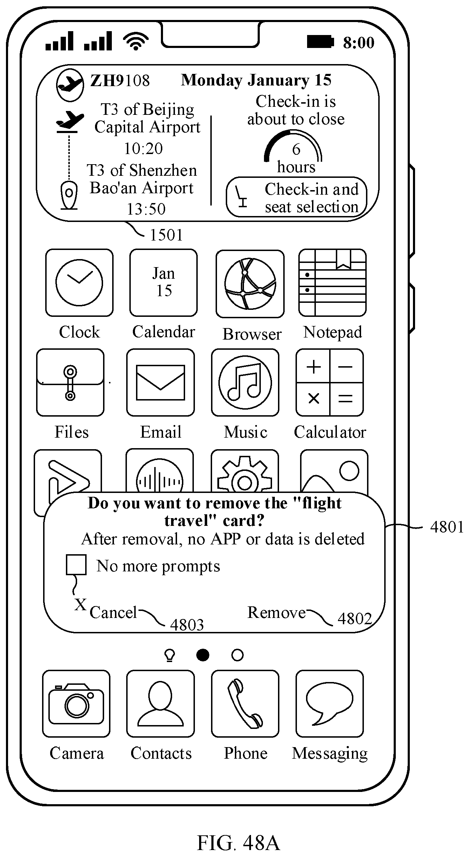

For example, on the first desktop shown in (b) in FIG. 15, the to-be-deleted card is the individual flight card 1501 at the topmost layer. As shown in FIG. 48A, when the mobile phone receives a swipe-left operation performed by the user on the flight card 1501, the mobile phone may display a confirmation pop-up window 4801 on the first desktop. The confirmation pop-up window 4801 may include information prompting the user for confirmation, for example: Do you want to remove the "flight travel" card? After removal, no APP or data is deleted. The confirmation pop-up window 4801 further includes a confirm option 4802 and a cancel option 4803.

When the mobile phone receives a trigger operation (for example, a tap operation) performed by the user on the confirm option 4802, the mobile phone may continue to delete the flight card 1501. When the mobile phone receives a trigger operation (for example, a tap operation) performed by the user on the cancel option 4803, the mobile phone may no longer delete the flight card 1501.

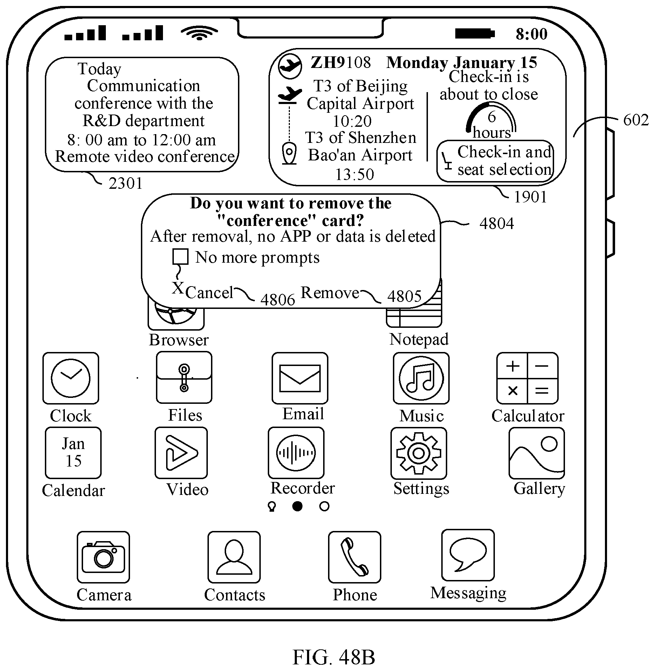

In another example, on the first desktop shown in (b) in FIG. 23, the to-be-deleted card is either of the two cards that are in a parallel association at the topmost layer of the card stack, namely, the conference reminder card 2301. As shown in FIG. 48B, when the mobile phone receives a swipe-left operation performed by the user on the conference reminder card 2301, the mobile phone may display a confirmation pop-up window 4804 on the first desktop. The confirmation pop-up window 4804 may include information prompting the user for confirmation, for example: Do you want to remove the "conference" card? After removal, no APP or data is deleted. The confirmation pop-up window 4804 further includes a confirm option 4805 and a cancel option 4806.

When the mobile phone receives a trigger operation (for example, a tap operation) performed by the user on the confirm option 4805, the mobile phone may continue to delete the conference reminder card 2601. When the mobile phone receives a trigger operation (for example, a tap operation) performed by the user on the cancel option 4806, the mobile phone may no longer delete the conference reminder card 2301.

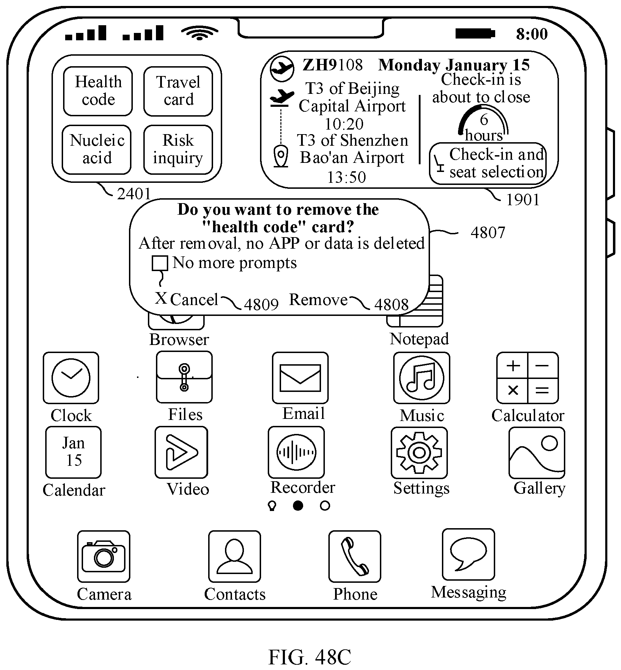

In another example, on the first desktop shown in (b) in FIG. 24, the to-be-deleted card is a secondary card in the two cards that are in a subordinate association at the topmost layer of the card stack, namely, the health code card 2401. As shown in FIG. 48C, when the mobile phone receives a swipe-left operation performed by the user on the health code card 2401, the mobile phone may display a confirmation pop-up window 4807 on the first desktop. The confirmation pop-up window 4807 may include information prompting the user for confirmation, for example: Do you want to remove the "health code" card? After removal, no APP or data is deleted. The confirmation pop-up window 4807 further includes a confirm option 4808 and a cancel option 4809.

When the mobile phone receives a trigger operation (for example, a tap operation) performed by the user on the confirm option 4808, the mobile phone may continue to delete the conference reminder card 2401. When the mobile phone receives a trigger operation (for example, a tap operation) performed by the user on the cancel option 4809, the mobile phone may no longer delete the conference reminder card 2401.

In addition, for convenience of use by the user, with reference to FIG. 48A, FIG. 48B, and FIG. 48C, a no longer prompt option X is in each of the confirmation pop-up window 4801, the confirmation pop-up window 4804, and the confirmation pop-up window 4807. The mobile phone may respond to a trigger operation performed by the user on the prompt option X in any one of the confirmation pop-up windows, and after receiving an operation performed by the user on the to-be-deleted card as shown in FIG. 48A, FIG. 48B, or FIG. 48C, the mobile phone no longer displays the confirmation pop-up window, but directly delete the to-be-deleted card.

In addition, if the to-be-deleted card is the primary card in the two cards that are in the subordinate association at the topmost layer of the card stack, in response to a swipe-left operation performed by the user on the to-be-deleted card, the mobile phone may display confirmation information indicating that cancellation is unavailable. In this way, the user may confirm whether to delete the to-be-deleted card and a corresponding primary card.

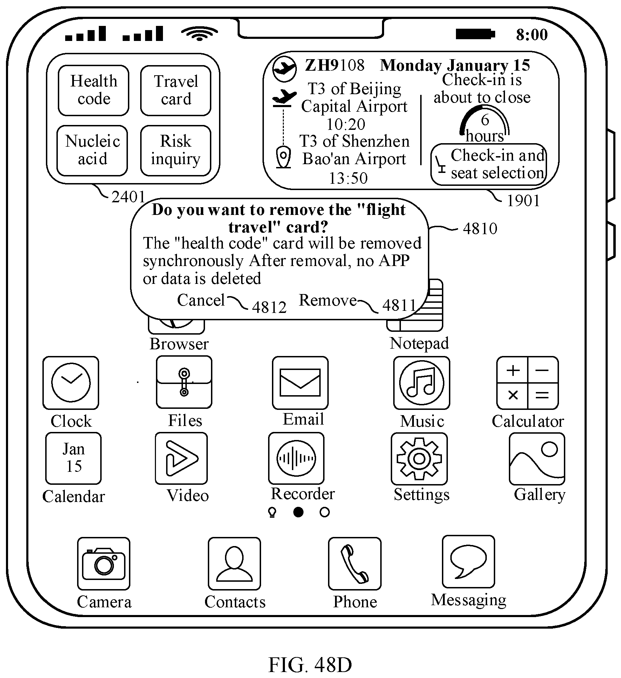

For example, on the first desktop shown in (b) in FIG. 24, the to-be-deleted card is a primary card in the two cards that are in a subordinate association at the topmost layer of the card stack, namely, the flight card 1901. As shown in FIG. 48D, when the mobile phone receives a swipe-left operation performed by the user on the flight card 1901, the mobile phone may display a confirmation pop-up window 4810 on the first desktop. The confirmation pop-up window 4810 may include information prompting the user for confirmation, for example: Do you want to remove the "flight travel" card? The "health code" card is removed synchronously without deleting any APP or data. The confirmation pop-up window 4810 further includes a confirm option 4811 and a cancel option 4812.

When the mobile phone receives a trigger operation (for example, a tap operation) performed by the user on the confirm option 4811, the mobile phone may continue to delete the flight card 1901 and the health code card 2401. When the mobile phone receives a trigger operation (for example, a tap operation) performed by the user on the cancel option 4812, the mobile phone may no longer delete the flight card 1901 and the health code card 2401.

In the example shown in FIG. 48A to FIG. 48D, an example in which the mobile phone is a non-foldable mobile phone or a foldable mobile phone using an outer screen for display in a folded state is used, and this rule applies to an example in which the mobile phone is a foldable mobile phone using an inner screen for display in an unfolded state. Details are not described herein again.

In another implementation, the delete operation may include a touch and hold operation performed on the to-be-deleted card for triggering the mobile phone to display a setting pop-up window, and a trigger operation performed on a card removing option in the setting pop-up window.

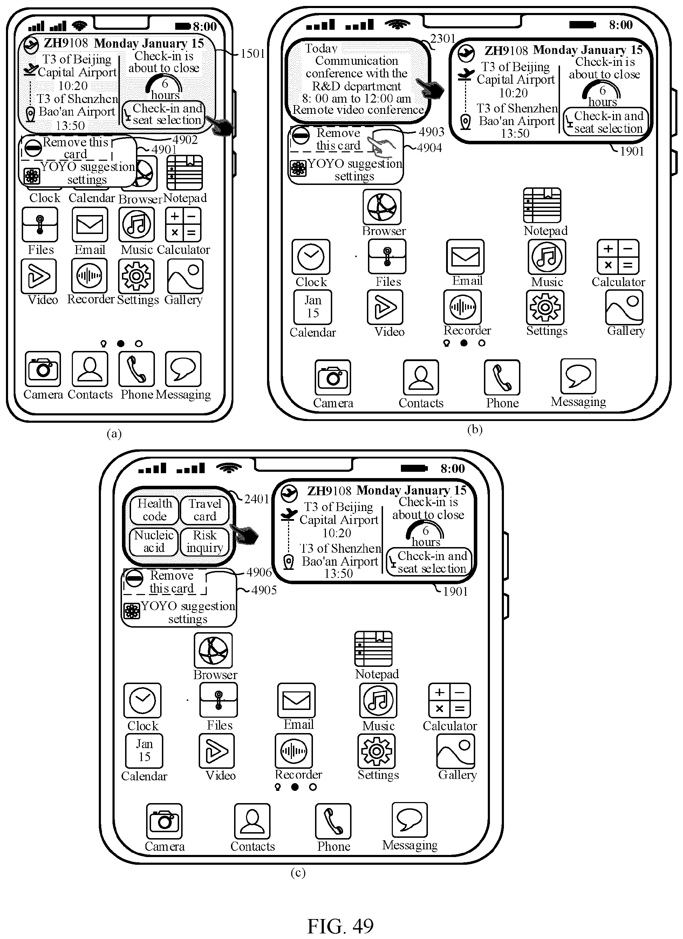

For example, on the first desktop shown in (b) in FIG. 15, the to-be-deleted card is the individual flight card 1501 at the topmost layer. As shown in (a) in FIG. 49, the mobile phone may receive and respond to a touch and hold operation performed by the user on the flight card 1501, and the mobile phone may control the flight card 1501 to be highlighted, and display a setting pop-up window 4901 around the flight card 1501 (for example, a lower left corner). The setting pop-up window 4901 further includes a card removing option 4902. When the mobile phone receives a trigger operation (for example, a tap operation) performed by the user on the card removing option 4902, the mobile phone may continue to delete the flight card 1501.

In another example, on the first desktop shown in (b) in FIG. 23, the to-be-deleted card is either of the two cards that are in a parallel association at the topmost layer of the card stack, namely, the conference reminder card 2301. As shown in (b) in FIG. 49, when the mobile phone receives a touch and hold operation performed by the user on the conference reminder card 2301, the mobile phone may control the conference reminder card 2301 to be highlighted, and display a setting pop-up window 4903 around the conference reminder card 2301. The setting pop-up window 4903 further includes a card removing option 4904. When the mobile phone receives a trigger operation (for example, a tap operation) performed by the user on the card removing option 4904, the mobile phone may continue to delete the conference reminder card 2301.

In another example, on the first desktop shown in (b) in FIG. 24, the to-be-deleted card is a secondary card in the two cards that are in a subordinate association at the topmost layer of the card stack, namely, the health code card 2401. As shown in (c) in FIG. 49, when the mobile phone receives a touch and hold operation performed by the user on the health code card 2401, the mobile phone may control the health code card 2401 to be highlighted, and display a setting pop-up window 4905 around the health code card 2401. The setting pop-up window 4905 further includes a card removing option 4906. When the mobile phone receives a trigger operation (for example, a tap operation) performed by the user on the card removing option 4906, the mobile phone may continue to delete the health code card 2401.

In addition, if the to-be-deleted card is the primary card in the two cards that are in the subordinate association at the topmost layer of the card stack, in response to a touch and hold operation performed by the user on the to-be-deleted card and a trigger operation performed on the card removing option in the setting pop-up window, the mobile phone may display confirmation information indicating that active cancellation is unavailable. In this way, the user may confirm whether to delete the to-be-deleted card and a corresponding primary card. In this way, for a scenario in which a plurality of cards are deleted, the user may be forced to confirm whether to continue deletion.

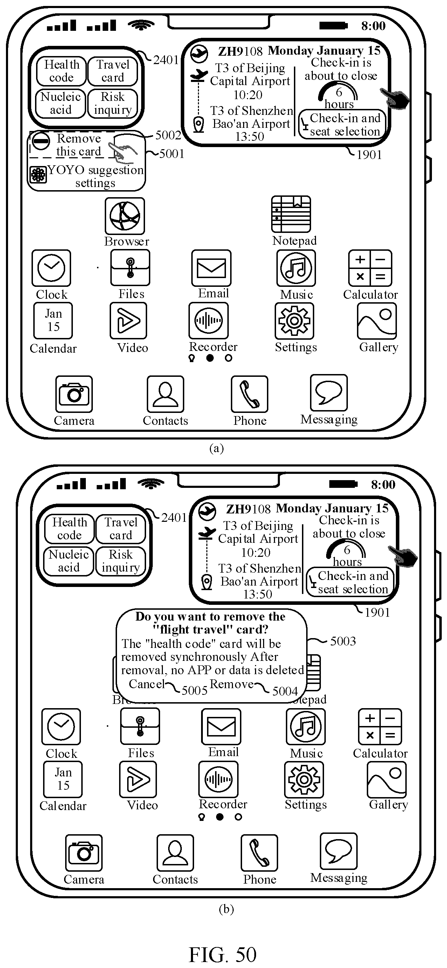

For example, on the first desktop shown in (b) in FIG. 24, the to-be-deleted card is a primary card in the two cards that are in a subordinate association at the topmost layer of the card stack, namely, the flight card 1901. As shown in (a) in FIG. 50, when the mobile phone receives a touch and hold operation performed by the user on the flight card 1901, the mobile phone may control the health code card 2401 and the flight card 1901 to be highlighted, and display a setting pop-up window 5001 around the health code card 2401. The setting pop-up window 5001 further includes a card removing option 5002. The mobile phone receives and responds to a trigger operation (for example, a tap operation) performed by the user on a card removing option 5001, as shown in (b) in FIG. 50, the mobile phone may display a confirmation pop-up window 5003. The confirmation pop-up window 5003 may include information prompting the user for confirmation, for example: Do you want to remove the "flight travel" card? The "health code" card is removed synchronously without deleting any APP or data. The confirmation pop-up window 5003 further includes a confirm option 5004 and a cancel option 5005.

When the mobile phone receives a trigger operation (for example, a tap operation) performed by the user on the confirm option 5004, the mobile phone may continue to delete the flight card 1501 and the health code card 2401. When the mobile phone receives a trigger operation (for example, a tap operation) performed by the user on the cancel option 5005, the mobile phone may no longer delete the flight card 1501 and the health code card 2401.

In the examples shown in FIG. 49 and FIG. 50, an example in which the mobile phone is a non-foldable mobile phone or a foldable mobile phone using an outer screen for display in a folded state is used, and this rule applies to an example in which the mobile phone is a foldable mobile phone using an inner screen for display in an unfolded state. Details are not described herein again.

In another implementation of the delete operation, for a specific implementation of deleting the to-be-deleted card, refer to the examples shown in FIG. 39 to FIG. 45. Details are not described herein again.

In this embodiment of this application, invalidity of the to-be-deleted card and the deletion operation performed by the user on the to-be-deleted card may be considered as deletion events. The mobile phone may obtain and respond to the deletion event, to implement a series of delete actions for the to-be-deleted card.

For example, for a non-foldable mobile phone or a foldable mobile phone using an outer screen for display in a folded state, if there is a target card stack including at least two cards in the target area, and there are two cards in a parallel association at a top layer of the target card stack, the mobile phone may obtains a first deletion event for a first to-be-deleted card at the top layer of the target card stack, and in response to the first deletion event, no longer displays the first to-be-deleted card in the target area, and scales up a first to-be-independent card that is at the top layer of the target card stack and that is in a parallel association with the first to-be-deleted card, to enable the first to-be-independent card to be fully overlaid on the top layer of the target card stack. The first to-be-deleted card is either of the two cards that are in parallel association at the top layer of the target card stack.

In another example, for a non-foldable mobile phone or a foldable mobile phone using an outer screen for display in a folded state, if there is a target card stack including at least two cards in the target area, and there are two cards in a subordinate association at a top layer of the target card stack, if the mobile phone obtains a second deletion event for a primary card (namely, a second to-be-deleted card) in the two cards that are in the subordinate association, in response to the second deletion event, the mobile phone may no longer display the top layer of the target card stack in the target area, but display a next layer of the top layer of the target card stack.

In another example, for a foldable mobile phone using an inner screen for display in an unfolded state, if there is a target card stack including at least two cards in the target area, and there are two cards in a parallel association at a top layer of the target card stack, the mobile phone may obtain a third deletion event for a third to-be-deleted card at the top layer of the target card stack; and no longer displays the third to-be-deleted card in the target area in response to the third deletion event. Further, if the third to-be-deleted card is originally displayed in the second sub-area of the target area, a to-be-independent card that is at the top layer of the target card stack and that is in a parallel association with the third to-be-deleted card is moved to the second sub-area of the target area for display. Further, if a next layer of the top layer of the target card stack includes two cards that are in a parallel association or a subordinate association, after moving the second to-be-independent card that is at the top layer of the target card stack and that is in the parallel association with the third to-be-deleted card to the second sub-area of the target area for display, the electronic device displays the first basic card in the first sub-area of the target area.

It should be understood that, to implement the functions, the electronic device includes corresponding hardware structures and/or software modules that perform the functions. A person skilled in the art should be easily aware that, in combination with the units and algorithm steps in the examples described in embodiments disclosed in this specification, embodiments of this application can be implemented by hardware or a combination of hardware and computer software. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of this application.

In embodiments of this application, division of the functional modules in the electronic device may be performed based on the foregoing method examples. For example, each functional module may be correspondingly obtained through division for each function, or two or more functions may be integrated into one processing module. The integrated module may be implemented in a form of hardware, or may be implemented in a form of a software functional module. It should be noted that the division of the modules in embodiments of this application is an example, and is merely logical functional division, and other division may be used in an actual implementation.

An embodiment of this application further provides an electronic device. The electronic device includes a display, a memory, and one or more processors. The display, the memory, and the processor are coupled. The memory stores computer program code, the computer program code includes computer instructions, and when the computer instructions are executed by the processors, the electronic device is enabled to perform the style conversion method in the foregoing embodiments. For a specific structure of the electronic device, refer to the structure of the electronic device shown in FIG. 2.

An embodiment of this application further provides a computer-readable storage medium. The computer-readable storage medium includes computer instructions, and when the computer instructions are run on an electronic device, the electronic device is enabled to perform the information display method in the foregoing embodiments.

An embodiment of this application further provides a computer program product. The computer program product includes executable instructions, and when the computer program product runs on an electronic device, the electronic device is enabled to perform the information display method in the foregoing embodiments.

Based on descriptions of the foregoing implementations, a person skilled in the art may be clearly understood that, for convenience and ease of description, the division of the functional modules is merely used as an example for description. In actual application, the functions may be allocated to different functional modules for implementation according to requirements, that is, an internal structure of the apparatus is divided into different functional modules, to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may be one physical unit or a plurality of physical units, may be located in one position, or may be distributed to a plurality of different positions. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, including several instructions for enabling a device (which may be a single chip, a chip, or the like) or a processor (processor) to perform all or some of the method embodiments in this application. The storage medium includes any medium that can store program code, such as a USB flash drive, a removable hard disk, a read only memory (read only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. An information display method, applied to an electronic device, the electronic device being a mobile phone, wherein the method comprises:
displaying (S901), by the electronic device, a first desktop, wherein a first basic card is displayed in a first sub-area of a target area of the first desktop, a second basic card is displayed in a second sub-area of the target area, content of a system application is displayed in the first basic card, and content of a second system application is displayed in the second basic card;
when the first basic card and the second basic card are displayed in the target area, displaying (S902), by the electronic device, a first card in the target area if the electronic device newly generates the first card, wherein the first card is used to display first notification information; and
**characterized in that**:
when the first basic card and the second basic card are displayed in the target area, if the electronic device newly generates a third card and a fourth card, and the third card and the fourth card are in a parallel association or a subordinate association, displaying (S904), by the electronic device, the third card and the fourth card in the target area, wherein the third card is used to display third notification information, the fourth card is used to display fourth notification information, the parallel association means that priorities are the same, and the subordinate association means that there is an association between the displayed notification information;
wherein at least one of the third card and the fourth card is an interactive card.

2. The method according to claim 1, wherein after the displaying, by the electronic device, a first card in the target area if the electronic device newly generates the first card, the method further comprises:
when the first card is displayed in the target area, if the electronic device newly generates a second card, and the second card and the first card are in a parallel association or a subordinate association, displaying, by the electronic device, the second card in the first sub-area of the target area, and displaying the first card in the second sub-area of the target area, wherein the second card is used to display second notification information.

3. The method according to claim 1 or 2, wherein the displaying, by the electronic device, a first card in the target area comprises:
overlaying, by the electronic device, the first card on the first basic card and the second basic card, to form a first card stack, wherein the first card stack comprises two layers, a bottom layer of the first card stack comprises the first basic card and the second basic card, and a top layer of the first card stack comprises the first card.

4. The method according to claim 3, wherein in the first card stack, the first basic card is in an area that is of the bottom layer and that corresponds to the first sub-area of the target area, the second basic card is in an area that is of the bottom layer and that corresponds to the second sub-area of the target area, and the first card is in an area that is of the top layer and that corresponds to the target area.

5. The method according to claim 4, wherein the displaying, by the electronic device, the second card in the first sub-area of the target area, and displaying the first card in the second sub-area of the target area comprises:
scaling down, by the electronic device, the first card to be the same as the second basic card, and displaying the first card in the second sub-area of the target area; and
scaling up, by the electronic device, based on a preset step in a process of scaling down the first card, a part that is of the second card and that is displayed in the first sub-area of the target area, and when the first card is scaled down to be the same as the second basic card, and the first card is displayed in the second sub-area of the target area, fully displaying the second card in the first sub-area of the target area.

6. The method according to claim 4 or 5, wherein when there is a target card stack comprising at least two cards in the target area, and there are two cards in a parallel association at a top layer of the target card stack, the method further comprises:
obtaining, by the electronic device, a first deletion event for a first to-be-deleted card at the top layer of the target card stack, wherein the first to-be-deleted card is one of the two cards that are at the top layer of the target card stack and that are in the parallel association; and
if the electronic device responds to the first deletion event, no longer displaying the first to-be-deleted card in the target area, and scaling up a first to-be-independent card that is at the top layer of the target card stack and that is in a parallel association with the first to-be-deleted card, to enable the first to-be-independent card to be fully overlaid on the top layer of the target card stack.

7. The method according to claim 4 or 5, wherein when there is a target card stack comprising at least two cards in the target area, and there are two cards in a subordinate association at a top layer of the target card stack, the method further comprises:
obtaining, by the electronic device, a second deletion event for a second to-be-deleted card at the top layer of the target card stack, wherein the second to-be-deleted card is one of the two cards that are at the top layer of the target card stack and that are in the subordinate association; and
if the second to-be-deleted card is a primary card in the two cards that are at the top layer of the target card stack and that are in the subordinate association, in response to the second deletion event, displaying, by the electronic device in the target area, a next layer of the top layer of the target card stack, and no longer displaying the two cards that are at the top layer of the target card stack and that are in the subordinate association.

8. The method according to claim 3, wherein in the first card stack, the first basic card is in an area that is of the bottom layer and that corresponds to the first sub-area of the target area, the second basic card is in an area that is of the bottom layer and that corresponds to the second sub-area of the target area, and the first card is in an area that is of the top layer and that corresponds to the second sub-area of the target area.

9. The method according to claim 8, wherein the displaying, by the electronic device, the second card in the first sub-area of the target area, and displaying the first card in the second sub-area of the target area comprises:
scaling up, by the electronic device based on a preset step, a part that is of the second card and that is overlaid on the first basic card, until the second card is fully displayed in the first sub-area of the target area.

10. The method according to claim 8 or 9, wherein when there is a target card stack comprising at least two cards in the target area, and there are two cards in a parallel association at a top layer of the target card stack, the method further comprises:
obtaining, by the electronic device, a third deletion event for a third to-be-deleted card at the top layer of the target card stack, wherein the third to-be-deleted card is one of the two cards that are at the top layer of the target card stack and that are in the parallel association; and
no longer displaying, by the electronic device, the third to-be-deleted card in the target area in response to the third deletion event.

11. The method according to claim 10, wherein if the third to-be-deleted card is displayed in the first sub-area of the target area, when the electronic device no longer displays the third to-be-deleted card in the target area in response to the third deletion event, the method further comprises:
moving, by the electronic device, a second to-be-independent card that is at the top layer of the target card stack and that is in a parallel association with the third to-be-deleted card to the second sub-area of the target area for display.

12. The method according to claim 11, wherein if a next layer of the top layer of the target card stack comprises two cards that are in a parallel association or a subordinate association, after moving the second to-be-independent card that is at the top layer of the target card stack and that is in the parallel association with the third to-be-deleted card to the second sub-area of the target area for display, the electronic device displays the first basic card in the first sub-area of the target area.

13. The method according to claim 8 or 9, wherein when there is a target card stack comprising at least two cards in the target area, and there are two cards in a subordinate association at a top layer of the target card stack, the method further comprises:
obtaining, by the electronic device, a fourth deletion event for a fourth to-be-deleted card at the top layer of the target card stack, wherein the fourth to-be-deleted card is one of the two cards that are at the top layer of the target card stack and that are in the subordinate association; and
if the fourth to-be-deleted card is a primary card in the two cards that are at the top layer of the target card stack and that are in the subordinate association, in response to the fourth deletion event, displaying, by the electronic device in the target area, a next layer of the top layer of the target card stack, and no longer displaying the two cards that are at the top layer of the target card stack and that are in the subordinate association.

14. A mobile phone device, comprising a display, a memory, and one or more processors, wherein the display, the memory, and the processors are coupled, the memory stores computer program code, the computer program code comprises computer instructions, and when the computer instructions are executed by the processors, the electronic device is enabled to perform the information display method according to any one of claims 1 to 13.

15. A computer-readable storage medium, comprising computer instructions, wherein when the computer instructions are run on an electronic device, the electronic device is enabled to perform the information display method according to any one of claims 1 to 13.

## Patentansprüche

1. Informationsanzeigeverfahren, das auf eine elektronische Vorrichtung angewendet wird, wobei die elektronische Vorrichtung ein Mobiltelefon ist, wobei das Verfahren umfasst:
Anzeigen (S901), durch die elektronische Vorrichtung, eines ersten Desktops, wobei eine erste Basiskarte in einem ersten Teilbereich eines Zielbereichs des ersten Desktops angezeigt wird, eine zweite Basiskarte in einem zweiten Teilbereich des Zielbereichs angezeigt wird, ein Inhalt einer Systemanwendung in der ersten Basiskarte angezeigt wird und ein Inhalt einer zweiten Systemanwendung in der zweiten Basiskarte angezeigt wird;
wenn die erste Basiskarte und die zweite Basiskarte in dem Zielbereich angezeigt werden, Anzeigen (S902), durch die elektronische Vorrichtung, einer ersten Karte in dem Zielbereich, falls die elektronische Vorrichtung die erste Karte neu erzeugt, wobei die erste Karte verwendet wird, um erste Benachrichtigungsinformationen anzuzeigen; und
**dadurch gekennzeichnet, dass**:
wenn die erste Basiskarte und die zweite Basiskarte in dem Zielbereich angezeigt werden, falls die elektronische Vorrichtung eine dritte Karte und eine vierte Karte neu erzeugt und die dritte Karte und die vierte Karte in einer parallelen Zuordnung oder einer untergeordneten Zuordnung stehen, Anzeigen (S904), durch die elektronische Vorrichtung, der dritten Karte und der vierten Karte in dem Zielbereich, wobei die dritte Karte verwendet wird, um dritte Benachrichtigungsinformationen anzuzeigen, die vierte Karte verwendet wird, um vierte Benachrichtigungsinformationen anzuzeigen, wobei die parallele Zuordnung bedeutet, dass Prioritäten gleich sind, und die untergeordnete Zuordnung bedeutet, dass es eine Zuordnung zwischen den angezeigten Benachrichtigungsinformationen gibt;
wobei mindestens eine der dritten Karte und der vierten Karte eine interaktive Karte ist.

2. Verfahren nach Anspruch 1, wobei nach dem Anzeigen, durch die elektronische Vorrichtung, einer ersten Karte in dem Zielbereich, falls die elektronische Vorrichtung die erste Karte neu erzeugt, das Verfahren ferner umfasst:
wenn die erste Karte in dem Zielbereich angezeigt wird, falls die elektronische Vorrichtung eine zweite Karte neu erzeugt und die zweite Karte und die erste Karte in einer parallelen Zuordnung oder einer untergeordneten Zuordnung stehen, Anzeigen, durch die elektronische Vorrichtung, der zweiten Karte in dem ersten Teilbereich des Zielbereichs und Anzeigen der ersten Karte in dem zweiten Teilbereich des Zielbereichs, wobei die zweite Karte verwendet wird, um zweite Benachrichtigungsinformationen anzuzeigen.

3. Verfahren nach Anspruch 1 oder 2, wobei das Anzeigen, durch die elektronische Vorrichtung, einer ersten Karte in dem Zielbereich umfasst:
Überlagern, durch die elektronische Vorrichtung, der ersten Karte auf der ersten Basiskarte und der zweiten Basiskarte, um einen ersten Kartenstapel zu bilden, wobei der erste Kartenstapel zwei Schichten umfasst, eine unterste Schicht des ersten Kartenstapels die erste Basiskarte und die zweite Basiskarte umfasst und eine oberste Schicht des ersten Kartenstapels die erste Karte umfasst.

4. Verfahren nach Anspruch 3, wobei sich in dem ersten Kartenstapel die erste Basiskarte in einem Bereich befindet, der zu der untersten Schicht gehört und der dem ersten Teilbereich des Zielbereichs entspricht, sich die zweite Basiskarte in einem Bereich befindet, der zu der untersten Schicht gehört und der dem zweiten Teilbereich des Zielbereichs entspricht, und sich die erste Karte in einem Bereich befindet, der zu der obersten Schicht gehört und der dem Zielbereich entspricht.

5. Verfahren nach Anspruch 4, wobei das Anzeigen, durch die elektronische Vorrichtung, der zweiten Karte in dem ersten Teilbereich des Zielbereichs und Anzeigen der ersten Karte in dem zweiten Teilbereich des Zielbereichs umfasst:
Verkleinern, durch die elektronische Vorrichtung, der ersten Karte, sodass sie gleich der zweiten Basiskarte ist, und Anzeigen der ersten Karte in dem zweiten Teilbereich des Zielbereichs; und
Vergrößern, durch die elektronische Vorrichtung, basierend auf einem voreingestellten Schritt in einem Prozess des Verkleinerns der ersten Karte, eines Teils, der zu der zweiten Karte gehört und der in dem ersten Teilbereich des Zielbereichs angezeigt wird, und, wenn die erste Karte verkleinert wird, sodass sie gleich der zweiten Basiskarte ist, und die erste Karte in dem zweiten Teilbereich des Zielbereichs angezeigt wird, vollständiges Anzeigen der zweiten Karte in dem ersten Teilbereich des Zielbereichs.

6. Verfahren nach Anspruch 4 oder 5, wobei, wenn es einen Zielkartenstapel gibt, der mindestens zwei Karten in dem Zielbereich umfasst, und es zwei Karten in einer parallelen Zuordnung auf einer obersten Schicht des Zielkartenstapels gibt, das Verfahren ferner umfasst:
Erhalten, durch die elektronische Vorrichtung, eines ersten Löschereignisses für eine erste zu löschende Karte auf der obersten Schicht des Zielkartenstapels, wobei die erste zu löschende Karte eine der zwei Karten ist, die sich auf der obersten Schicht des Zielkartenstapels befinden und die in der parallelen Zuordnung stehen; und
falls die elektronische Vorrichtung auf das erste Löschereignis reagiert, Nicht-mehr-Anzeigen der ersten zu löschenden Karte in dem Zielbereich, und Vergrößern einer ersten unabhängig werdenden Karte, die sich auf der obersten Schicht des Zielkartenstapels befindet und die in einer parallelen Zuordnung zu der ersten zu löschenden Karte steht, um zu ermöglichen, dass die erste unabhängig werdende Karte vollständig auf der obersten Schicht des Zielkartenstapels überlagert wird.

7. Verfahren nach Anspruch 4 oder 5, wobei, wenn es einen Zielkartenstapel gibt, der mindestens zwei Karten in dem Zielbereich umfasst, und es zwei Karten in einer untergeordneten Zuordnung auf einer obersten Schicht des Zielkartenstapels gibt, das Verfahren ferner umfasst:
Erhalten, durch die elektronische Vorrichtung, eines zweiten Löschereignisses für eine zweite zu löschende Karte auf der obersten Schicht des Zielkartenstapels, wobei die zweite zu löschende Karte eine der zwei Karten ist, die sich auf der obersten Schicht des Zielkartenstapels befinden und die in der untergeordneten Zuordnung stehen; und
falls die zweite zu löschende Karte eine primäre Karte in den zwei Karten ist, die sich auf der obersten Schicht des Zielkartenstapels befinden und die in der untergeordneten Zuordnung stehen, als Reaktion auf das zweite Löschereignis, Anzeigen, durch die elektronische Vorrichtung in dem Zielbereich, einer nächsten Schicht der obersten Schicht des Zielkartenstapels, und Nicht-mehr-Anzeigen der zwei Karten, die sich auf der obersten Schicht des Zielkartenstapels befinden und die in der untergeordneten Zuordnung stehen.

8. Verfahren nach Anspruch 3, wobei sich in dem ersten Kartenstapel die erste Basiskarte in einem Bereich befindet, der zu der untersten Schicht gehört und der dem ersten Teilbereich des Zielbereichs entspricht, sich die zweite Basiskarte in einem Bereich befindet, der zu der untersten Schicht gehört und der dem zweiten Teilbereich des Zielbereichs entspricht, und sich die erste Karte in einem Bereich befindet, der zu der obersten Schicht gehört und der dem zweiten Teilbereich des Zielbereichs entspricht.

9. Verfahren nach Anspruch 8, wobei das Anzeigen, durch die elektronische Vorrichtung, der zweiten Karte in dem ersten Teilbereich des Zielbereichs und das Anzeigen der ersten Karte in dem zweiten Teilbereich des Zielbereichs umfassen:
Vergrößern, durch die elektronische Vorrichtung basierend auf einem voreingestellten Schritt, eines Teils, der zu der zweiten Karte gehört und der auf der ersten Basiskarte überlagert ist, bis die zweite Karte vollständig in dem ersten Teilbereich des Zielbereichs angezeigt wird.

10. Verfahren nach Anspruch 8 oder 9, wobei, wenn es einen Zielkartenstapel gibt, der mindestens zwei Karten in dem Zielbereich umfasst, und es zwei Karten in einer parallelen Zuordnung auf einer obersten Schicht des Zielkartenstapels gibt, das Verfahren ferner umfasst:
Erhalten, durch die elektronische Vorrichtung, eines dritten Löschereignisses für eine dritte zu löschende Karte auf der obersten Schicht des Zielkartenstapels, wobei die dritte zu löschende Karte eine der zwei Karten ist, die sich auf der obersten Schicht des Zielkartenstapels befinden und die in der parallelen Zuordnung stehen; und
Nicht-mehr-Anzeigen, durch die elektronische Vorrichtung, der dritten zu löschenden Karte in dem Zielbereich als Reaktion auf das dritte Löschereignis.

11. Verfahren nach Anspruch 10, wobei, falls die dritte zu löschende Karte in dem ersten Teilbereich des Zielbereichs angezeigt wird, wenn die elektronische Vorrichtung die dritte zu löschende Karte als Reaktion auf das dritte Löschereignis in dem Zielbereich nicht mehr anzeigt, das Verfahren ferner umfasst:
Bewegen, durch die elektronische Vorrichtung, einer zweiten unabhängig werdenden Karte, die sich auf der obersten Schicht des Zielkartenstapels befindet und die in einer parallelen Zuordnung zu der dritten zu löschenden Karte steht, in den zweiten Teilbereich des Zielbereichs zur Anzeige.

12. Verfahren nach Anspruch 11, wobei, falls eine nächste Schicht der obersten Schicht des Zielkartenstapels zwei Karten umfasst, die in einer parallelen Zuordnung oder einer untergeordneten Zuordnung stehen, nach dem Bewegen der zweiten unabhängig werdenden Karte, die sich auf der obersten Schicht des Zielkartenstapels befindet und die in der parallelen Zuordnung zu der dritten zu löschenden Karte steht, in den zweiten Teilbereich des Zielbereichs zur Anzeige, die elektronische Vorrichtung die erste Basiskarte in dem ersten Teilbereich des Zielbereichs anzeigt.

13. Verfahren nach Anspruch 8 oder 9, wobei, wenn es einen Zielkartenstapel gibt, der mindestens zwei Karten in dem Zielbereich umfasst, und es zwei Karten in einer untergeordneten Zuordnung auf einer obersten Schicht des Zielkartenstapels gibt, das Verfahren ferner umfasst:
Erhalten, durch die elektronische Vorrichtung, eines vierten Löschereignisses für eine vierte zu löschende Karte auf der obersten Schicht des Zielkartenstapels, wobei die vierte zu löschende Karte eine der zwei Karten ist, die sich auf der obersten Schicht des Zielkartenstapels befinden und die in der untergeordneten Zuordnung stehen; und
falls die vierte zu löschende Karte eine primäre Karte in den zwei Karten ist, die sich auf der obersten Schicht des Zielkartenstapels befinden und die in der untergeordneten Zuordnung stehen, als Reaktion auf das vierte Löschereignis, Anzeigen, durch die elektronische Vorrichtung in dem Zielbereich, einer nächsten Schicht der obersten Schicht des Zielkartenstapels, und Nicht-mehr-Anzeigen der zwei Karten, die sich auf der obersten Schicht des Zielkartenstapels befinden und die in der untergeordneten Zuordnung stehen.

14. Mobiltelefonvorrichtung, umfassend ein Display, einen Speicher und einen oder mehrere Prozessoren, wobei das Display, der Speicher und die Prozessoren gekoppelt sind, der Speicher Programmcode speichert, der Programmcode Computeranweisungen umfasst und, wenn die Computeranweisungen von den Prozessoren ausgeführt werden, die elektronische Vorrichtung befähigt wird, das Informationsanzeigeverfahren nach einem der Ansprüche 1 bis 13 durchzuführen.

15. Computerlesbares Speichermedium, umfassend ein Computerprogramm, wobei, wenn das Computerprogramm auf einer elektronischen Vorrichtung ausgeführt wird, die elektronische Vorrichtung befähigt wird, das Informationsanzeigeverfahren nach einem der Ansprüche 1 bis 13 durchzuführen.

## Revendications

1. Procédé d'affichage d'informations, appliqué à un dispositif électronique, le dispositif électronique étant un téléphone mobile, dans lequel le procédé comprend :
l'affichage (S901), par le dispositif électronique, d'un premier bureau, dans lequel une première carte de base est affichée dans une première sous-zone d'une zone cible du premier bureau, une deuxième carte de base est affichée dans une deuxième sous-zone de la zone cible, un contenu d'une application système est affiché dans la première carte de base, et un contenu d'une deuxième application système est affiché dans la deuxième carte de base ;
lorsque la première carte de base et la deuxième carte de base sont affichées dans la zone cible, l'affichage (S902), par le dispositif électronique, d'une première carte dans la zone cible si le dispositif électronique génère nouvellement la première carte, dans lequel la première carte est utilisée pour afficher des premières informations de notification ; et
**caractérisé en ce que** :
lorsque la première carte de base et la deuxième carte de base sont affichées dans la zone cible, si le dispositif électronique génère nouvellement une troisième carte et une quatrième carte, et que la troisième carte et la quatrième carte sont dans une association parallèle ou une association subordonnée, l'affichage (S904), par le dispositif électronique, de la troisième carte et de la quatrième carte dans la zone cible, dans lequel la troisième carte est utilisée pour afficher des troisièmes informations de notification, la quatrième carte est utilisée pour afficher des quatrièmes informations de notification, l'association parallèle signifiant que des priorités sont identiques, et l'association subordonnée signifiant qu'il existe une association entre les informations de notification affichées ;
dans lequel au moins l'une de la troisième carte et de la quatrième carte est une carte interactive.

2. Procédé selon la revendication 1, dans lequel après l'affichage, par le dispositif électronique, d'une première carte dans la zone cible si le dispositif électronique génère nouvellement la première carte, le procédé comprend en outre :
lorsque la première carte est affichée dans la zone cible, si le dispositif électronique génère nouvellement une deuxième carte, et que la deuxième carte et la première carte sont dans une association parallèle ou une association subordonnée, l'affichage, par le dispositif électronique, de la deuxième carte dans la première sous-zone de la zone cible, et l'affichage de la première carte dans la deuxième sous-zone de la zone cible, dans lequel la deuxième carte est utilisée pour afficher des deuxièmes informations de notification.

3. Procédé selon la revendication 1 ou 2, dans lequel l'affichage, par le dispositif électronique, d'une première carte dans la zone cible comprend :
la superposition, par le dispositif électronique, de la première carte sur la première carte de base et la deuxième carte de base, pour former une première pile de cartes, dans lequel la première pile de cartes comprend deux couches, une couche inférieure de la première pile de cartes comprend la première carte de base et la deuxième carte de base, et une couche supérieure de la première pile de cartes comprend la première carte.

4. Procédé selon la revendication 3, dans lequel, dans la première pile de cartes, la première carte de base se trouve dans une zone qui appartient à la couche inférieure et qui correspond à la première sous-zone de la zone cible, la deuxième carte de base se trouve dans une zone qui appartient à la couche inférieure et qui correspond à la deuxième sous-zone de la zone cible, et la première carte se trouve dans une zone qui appartient à la couche supérieure et qui correspond à la zone cible.

5. Procédé selon la revendication 4, dans lequel l'affichage, par le dispositif électronique, de la deuxième carte dans la première sous-zone de la zone cible, et l'affichage de la première carte dans la deuxième sous-zone de la zone cible comprennent :
la réduction, par le dispositif électronique, de la première carte pour qu'elle soit identique à la deuxième carte de base, et l'affichage de la première carte dans la deuxième sous-zone de la zone cible ; et
l'agrandissement, par le dispositif électronique, sur la base d'un pas préréglé dans un processus de réduction de la première carte, d'une partie qui appartient à la deuxième carte et qui est affichée dans la première sous-zone de la zone cible, et lorsque la première carte est réduite pour être identique à la deuxième carte de base, et que la première carte est affichée dans la deuxième sous-zone de la zone cible, l'affichage complet de la deuxième carte dans la première sous-zone de la zone cible.

6. Procédé selon la revendication 4 ou 5, dans lequel lorsqu'il existe une pile de cartes cible comprenant au moins deux cartes dans la zone cible, et qu'il existe deux cartes dans une association parallèle au niveau d'une couche supérieure de la pile de cartes cible, le procédé comprend en outre :
l'obtention, par le dispositif électronique, d'un premier événement de suppression pour une première carte à supprimer au niveau de la couche supérieure de la pile de cartes cible, dans lequel la première carte à supprimer est l'une des deux cartes qui se trouvent au niveau de la couche supérieure de la pile de cartes cible et qui sont dans l'association parallèle ; et
si le dispositif électronique répond au premier événement de suppression, le fait de ne plus afficher la première carte à supprimer dans la zone cible, et l'agrandissement d'une première carte destinée à devenir indépendante qui se trouve au niveau de la couche supérieure de la pile de cartes cible et qui est dans une association parallèle avec la première carte à supprimer, pour permettre à la première carte destinée à devenir indépendante d'être entièrement superposée sur la couche supérieure de la pile de cartes cible.

7. Procédé selon la revendication 4 ou 5, dans lequel lorsqu'il existe une pile de cartes cible comprenant au moins deux cartes dans la zone cible, et qu'il existe deux cartes dans une association subordonnée au niveau d'une couche supérieure de la pile de cartes cible, le procédé comprend en outre :
l'obtention, par le dispositif électronique, d'un deuxième événement de suppression pour une deuxième carte à supprimer au niveau de la couche supérieure de la pile de cartes cible, dans lequel la deuxième carte à supprimer est l'une des deux cartes qui se trouvent au niveau de la couche supérieure de la pile de cartes cible et qui sont dans l'association subordonnée ; et
si la deuxième carte à supprimer est une carte primaire dans les deux cartes qui se trouvent au niveau de la couche supérieure de la pile de cartes cible et qui sont dans l'association subordonnée, en réponse au deuxième événement de suppression, l'affichage, par le dispositif électronique dans la zone cible, d'une couche suivante de la couche supérieure de la pile de cartes cible, et le fait de ne plus afficher les deux cartes qui se trouvent au niveau de la couche supérieure de la pile de cartes cible et qui sont dans l'association subordonnée.

8. Procédé selon la revendication 3, dans lequel, dans la première pile de cartes, la première carte de base se trouve dans une zone qui appartient à la couche inférieure et qui correspond à la première sous-zone de la zone cible, la deuxième carte de base se trouve dans une zone qui appartient à la couche inférieure et qui correspond à la deuxième sous-zone de la zone cible, et la première carte se trouve dans une zone qui appartient à la couche supérieure et qui correspond à la deuxième sous-zone de la zone cible.

9. Procédé selon la revendication 8, dans lequel l'affichage, par le dispositif électronique, de la deuxième carte dans la première sous-zone de la zone cible, et l'affichage de la première carte dans la deuxième sous-zone de la zone cible comprennent :
l'agrandissement, par le dispositif électronique sur la base d'un pas préréglé, d'une partie qui appartient à la deuxième carte et qui est superposée sur la première carte de base, jusqu'à ce que la deuxième carte soit entièrement affichée dans la première sous-zone de la zone cible.

10. Procédé selon la revendication 8 ou 9, dans lequel lorsqu'il existe une pile de cartes cible comprenant au moins deux cartes dans la zone cible, et qu'il existe deux cartes dans une association parallèle au niveau d'une couche supérieure de la pile de cartes cible, le procédé comprend en outre :
l'obtention, par le dispositif électronique, d'un troisième événement de suppression pour une troisième carte à supprimer au niveau de la couche supérieure de la pile de cartes cible, dans lequel la troisième carte à supprimer est l'une des deux cartes qui se trouvent au niveau de la couche supérieure de la pile de cartes cible et qui sont dans l'association parallèle ; et
le fait de ne plus afficher, par le dispositif électronique, la troisième carte à supprimer dans la zone cible en réponse au troisième événement de suppression.

11. Procédé selon la revendication 10, dans lequel si la troisième carte à supprimer est affichée dans la première sous-zone de la zone cible, lorsque le dispositif électronique n'affiche plus la troisième carte à supprimer dans la zone cible en réponse au troisième événement de suppression, le procédé comprend en outre :
le déplacement, par le dispositif électronique, d'une deuxième carte destinée à devenir indépendante qui se trouve au niveau de la couche supérieure de la pile de cartes cible et qui est dans une association parallèle avec la troisième carte à supprimer vers la deuxième sous-zone de la zone cible pour un affichage.

12. Procédé selon la revendication 11, dans lequel si une couche suivante de la couche supérieure de la pile de cartes cible comprend deux cartes qui sont dans une association parallèle ou une association subordonnée, après le déplacement de la deuxième carte destinée à devenir indépendante qui se trouve au niveau de la couche supérieure de la pile de cartes cible et qui est dans l'association parallèle avec la troisième carte à supprimer vers la deuxième sous-zone de la zone cible pour un affichage, le dispositif électronique affiche la première carte de base dans la première sous-zone de la zone cible.

13. Procédé selon la revendication 8 ou 9, dans lequel lorsqu'il existe une pile de cartes cible comprenant au moins deux cartes dans la zone cible, et qu'il existe deux cartes dans une association subordonnée au niveau d'une couche supérieure de la pile de cartes cible, le procédé comprend en outre :
l'obtention, par le dispositif électronique, d'un quatrième événement de suppression pour une quatrième carte à supprimer au niveau de la couche supérieure de la pile de cartes cible, dans lequel la quatrième carte à supprimer est l'une des deux cartes qui se trouvent au niveau de la couche supérieure de la pile de cartes cible et qui sont dans l'association subordonnée ; et
si la quatrième carte à supprimer est une carte primaire dans les deux cartes qui se trouvent au niveau de la couche supérieure de la pile de cartes cible et qui sont dans l'association subordonnée, en réponse au quatrième événement de suppression, l'affichage, par le dispositif électronique dans la zone cible, d'une couche suivante de la couche supérieure de la pile de cartes cible, et le fait de ne plus afficher les deux cartes qui se trouvent au niveau de la couche supérieure de la pile de cartes cible et qui sont dans l'association subordonnée.

14. Dispositif de téléphone mobile, comprenant un écran, une mémoire et un ou plusieurs processeurs, dans lequel l'écran, la mémoire et les processeurs sont couplés, la mémoire stocke un code de programme informatique, le code de programme informatique comprend des instructions informatiques, et lorsque les instructions informatiques sont exécutées par les processeurs, le dispositif électronique est rendu capable de réaliser le procédé d'affichage d'informations selon l'une quelconque des revendications 1 à 13.

15. Support de stockage lisible par ordinateur, comprenant un programme informatique, dans lequel lorsque le programme informatique est exécuté sur un dispositif électronique, le dispositif électronique est rendu capable de réaliser le procédé d'affichage d'informations selon l'une quelconque des revendications 1 à 13.
